# EUROPÄISCHE PATENTSCHRIFT

(11) **EP 0 543 238 B1**
(45) Veröffentlichungstag und Bekanntmachung des Hinweises auf die Patenterteilung: **04.06.1997**
(21) Anmeldenummer: 92119064.1
(22) Anmeldetag: 06.11.1992
(51) Int. Cl.: C07F 7/08, A01N 55/00

(54) **3-Isoxazolylphenylverbindungen, ihre Herstellung und ihre Verwendung**
3-Isoxazolylphenyl-compounds, their preparation and application
Composés 3-isoxazolylphényl, leur préparation et leur application

(30) Priorität: 18.11.1991 DE 4137940
(43) Veröffentlichungstag der Anmeldung: 26.05.1993
(73) Patentinhaber: BASF Aktiengesellschaft, 67063 Ludwigshafen (DE)
(72) Erfinder: Mueller, Stefan, Dr., W-6720 Speyer (DE); Theobald, Hans, Dr., W-6703 Limburgerhof (DE); Rang, Harald, Dr., W-6700 Ludwigshafen (DE); Harries, Volker, Dr., W-6710 Frankenthal (DE)

(56) Entgegenhaltungen:
- EP-A- 0 076 985
- EP-A- 0 371 947
- JOURNAL OF ORGANOMETALLIC CHEMISTRY Bd. 331, 1987, Seiten 1 - 9 BORTH, M. ET AL.

## Beschreibung

Die vorliegende Erfindung betrifft 3-Isoxazolylphenylverbindungen der allgemeinen Formeln Ia und Ib, 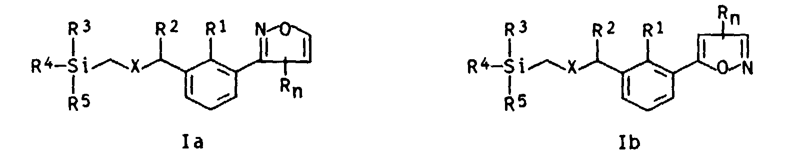 in denen die Substituenten und der Index folgende Bedeutung haben:
R
Halogen; C₁-C₄-Alkyl; C₁-C₄-Halogenalkyl; C₁-C₄-Alkoxy; C₁-C₄-Halogenalkoxy; C₂-C₄-Alkenyl; C₂-C₄-Halogenalkenyl;
Phenylethenyl, welches ein bis fünf Halogenatome tragen kann;
C₂-C₄-Alkinyl; C₃-C₈-Cycloalkyl; Aryl; Hetaryl; CO₂R⁶ oder CONR⁷R⁸,
wobei R⁶
Wasserstoff, C₁-C₆-Alkyl, C₃-C₆-Cycloalkyl und Benzyl bedeutet, und
R⁷ und R⁸
unabhängig voneinander für Wasserstoff, C₁-C₆-Alkyl, C₃-6₆-Cycloalkyl und Benzyl stehen oder
gemeinsam mit dem Stickstoffatom an das sie gebunden sind einen 3- bis 8-gliedrigen, gesättigten oder 1- oder 2-fach ungesättigten heterocyclischen Rest, bestehend aus Kohlenstoffringgliedern bilden, wobei dieser Cyclus außerdem ein oder zwei weitere Heteroatome ausgewählt aus der Gruppe Sauerstoff, Schwefel und Stickstoff enthalten kann;
n
0, 1 oder 2, wobei die Reste R verschieden sein können, wenn n 2 bedeutet;
R¹
Halogen oder C₁-C₄-Alkyl;
R²
Wasserstoff; C₁-C₄-Alkyl; C₂-C₄-Alkenyl; C₂-C₄-Alkinyl oder Cyano;
R³ und R⁴ unabhängig voneinander
C₁-C₄-Alkyl oder C₂-C₈-Alkenyl, wobei diese Reste ein bis neun Halogenatome und/oder eine der folgenden Gruppen tragen können: C₃-C₈-Cycloalkyl, C₁-C₄-Alkoxy, C₁-C₄-Halogenalkoxy, C₁-C₄-Alkylthio, C₁-C₄-Halogenalkylthio, Phenyl, Phenoxy und Phenylthio, wobei die aromatischen Gruppen ihrerseits ein bis fünf Halogenatome und/oder ein bis drei der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
C₃-C₈-Cycloalkyl, welches ein bis drei der folgenden Gruppen tragen kann: Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
Phenyl, Naphthyl, Pyridyl oder Pyrimidyl, wobei die aromatischen Reste ein bis sieben Halogenatome und/oder ein bis vier der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
oder R³ und R⁴ gemeinsam
C₂-C₅-Alkylen, welches ein bis drei C₁-C₃-Alkylgruppen tragen kann;
R⁵
Wasserstoff;
C₅-C₁₈-Alkyl, wobei dieser Rest ein bis neun Halogenatome und/oder eine der folgenden Gruppen tragen kann: C₃-C₈-Cycloalkyl, C₁-C₄-Alkoxy, C₁-C₄-Halogenalkoxy, C₁-C₄-Alkylthio, C₁-C₄-Halogenalkylthio, Phenyl, Phenoxy und Phenylthio, wobei die aromatischen Gruppen ihrerseits ein bis fünf Halogenatome und/oder ein bis drei der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
oder eine der bei R³ genannten Gruppen;
x
eine Gruppe CH₂, O, S oder NR⁹, wobei
R⁹
für Wasserstoff, C₁-C₄-Alkyl, C₃-C₆-Cycloalkyl, C₂-C₄-Alkenyl, C₂-C₄-Alkinyl oder Benzyl steht, und wobei der Benzylrest seinerseits ein bis fünf Halogenatome und/oder ein bis drei der folgenden Gruppen tragen kann: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio.

Des weiteren betrifft die Erfindnung Verfahren zur Herstellung dieser Verbindungen, Schädlingsbekämpfungsmittel, die diese Verbindungen als Wirkstoff enthalten sowie Verfahren zur Bekämpfung von Schädlingen.

Es ist bekannt, daß bestimmte Silanderivate gegen Schädlinge wirksam sind (EP-A 224 024, DE-A 36 04 781). Die Wirkung dieser bekannten Verbindungen läßt jedoch zu wünschen übrig.

Der Erfindung lagen daher neue Verbindungen mit verbesserten Eigenschaften hinsichtlich der biologischen Aktivität als Aufgabe zugrunde.

Demgemäß wurden die eingangs definierten 3-Isoxazolylphenylverbindungen gefunden. Außerdem wurden Verfahren zu ihrer Herstellung, sie enthaltende Mittel und ihre Verwendung zur Bekämpfung von Schädlingen gefunden.

Die Verbindungen Ia bzw. Ib sind nach verschiedenen, aus der Literatur an sich bekannten, Syntheseverfahren zugänglich. Vorteilhaft erhält man sie nach einem der nachstehend beschriebenen Verfahren A bis G.

### Verfahren A:

Man erhält die 3-Isoxazolylphenylverbindungen der allgemeinen Formeln Ia und Ib beispielsweise dadurch, daß man ein Silan der allgemeinen Formel II, in an sich bekannter Weise (Houben-Weyl, Bd. 13/5, S. 54) in einem inerten organischen Lösungsmittel mit einer Verbindung der allgemeinen Formel IIIa bzw. IIIb umsetzt. 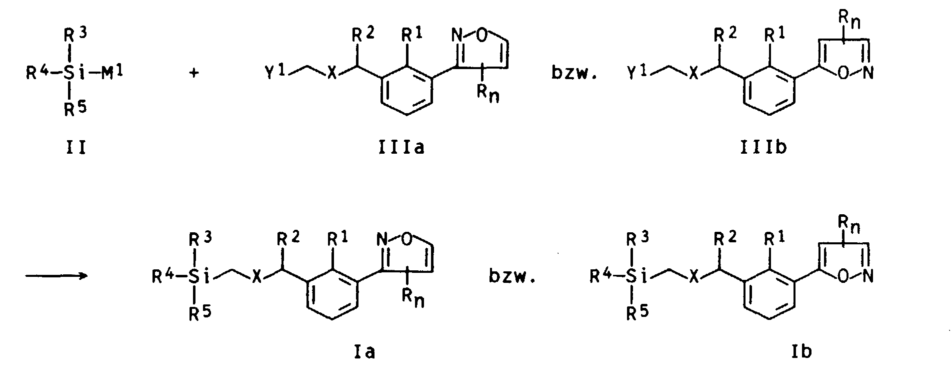 In der Formel II steht M¹ für ein Äquivalent eines Alkalimetall- oder Erdalkalimetallions wie Li⁺, Na⁺, K⁺, ½ Mg²⁺ und ½ Ca²⁺, vorzugsweise Li⁺ und 1/2 Mg²⁺.

Y¹ in den Formeln IIIa bzw. IIIb bedeutet eine nucleofuge Abgangsgruppe wie Halogen, beispielsweise Fluor, Chlor, Brom und Iod, insbesondere Chlor und Brom oder Sulfonat wie C₁-C₄-Alkylsulfonat oder im Arylteil gegebenenfalls substituiertes Phenylsulfonat, insbesondere Methylsulfonat und 4-Methylphenylsulfonat.

Diese Umsetzung wird üblicherweise bei Temperaturen von -120°C bis 100°C, vorzugsweise -78°C bis 50°C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril sowie Dimethylsulfoxid, besonders bevorzugt Tetrahydrofuran und Diethylether.

Es können auch Gemische der genannten Lösungsmittel verwendet werden.

Die Edukte werden im allgemeinen in äquimolaren Mengen miteinander umgesetzt. Es kann für die Ausbeute vorteilhaft sein, das Silan II in einem über- oder Unterschuß bezogen auf die Verbindung IIIa bzw. IIIb einzusetzen.

In Abwandlung des vorstehend beschriebenen Verfahrens A enthält man die Verbindungen der allgemeinen Formeln Ia und Ib auch, wenn man anstelle der in 3-Position durch einen Isoxazolylrest substituierten Verbindungen IIIa bzw. IIIb eine Verbindung einsetzt, deren Substituent in 3-Position sich auf einer späteren Reaktionsstufe leicht in den entsprechenden Isoxazolylrest umwandeln läßt. 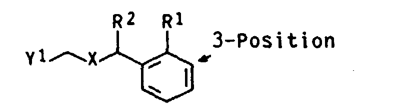 In dieser Hinsicht besonders geeignete Verbindungen sind solche, in denen der Substituent in 3-Position eine der folgenden Bedeutungen hat: Halogen (Hal) wie insbesondere Chlor, Brom und Jod; Cyano; Formyl; -CH=NOH oder (ggf. durch einen Rest R substituiertes) Ethinyl.

Die Umwandlung des Substituenten erfolgt nach dem folgenden Reaktionsschema gemäß der anschließend zitierten Literatur. Der Übersichtlichkeit halber wurde die Gruppierung Y¹CH₂XCHR²- als Q-bezeichnet. 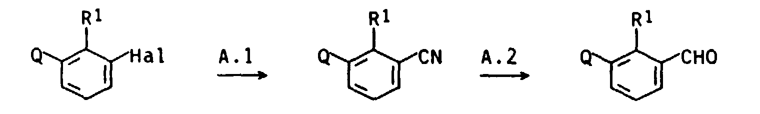 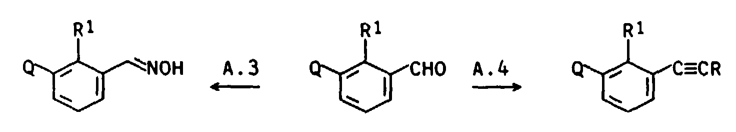
- Stufe A.1:: J. March, Advanced Organic Chemistry 1977, p. 603
- Stufe A.2:: J. March, Advanced Organic Chemistry 1977, p. 835
- Stufe A.3:: J. March, Advanced Organic Chemistry 1977, p. 825
- Stufe A.4:: J. March, Advanced Organic Chemistry 1977, p. 936 und Liebigs Ann. Chem. 1980, p. 2061.

Die Umwandlung der auf diesem Reaktionsweg erhaltenen Oxime bzw. Alkine in die entsprechenden Isoxazolylverbindungen wird im Anschluß an die Verfahren A bis F beschrieben.

Als Ausgangsverbindungen insbesondere geeignet sind in diesem Verfahren A neben den eingangs beschriebenen Verbindungen IIIa bzw. IIIb solche Derivate, in denen der Rest in 3-Position die Bedeutung Chlor oder Cyano hat.

### Verfahren B:

Außerdem erhält man 3-Isoxazolylphenylverbindungen der allgemeinen Formeln Ia und Ib, in denen X für eine Gruppe CH₂ steht, dadurch, daß man ein Silan der allgemeinen Formel IV, in an sich bekannter Weise (DE-A 38 28 926, EP-A 249 015, EP-A 224 024, Pest. Sci. 29, 215 (1990)) in einem inerten organischen Lösungsmittel mit einer Verbindung der allgemeinen Formel Va bzw. Vb, umsetzt. 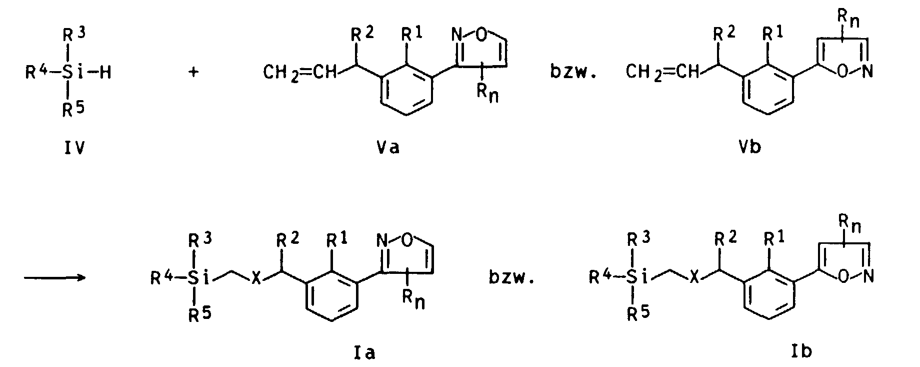 Diese Umsetzung wird üblicherweise bei Temperaturen von -120°C bis 100°C, vorzugsweise -50⁰C bis 50⁰C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril, Alkohole wie Methanol, Ethanol, n-Propanol, Isopropanol, n-Butanol und tert.-Butanol sowie Dimethylsulfoxid und Dimethylformamid, besonders bevorzugt Cyclohexan und Isopropanol.

Es können auch Gemische der genannten Lösungsmittel verwendet werden.

Im allgemeinen kann die Umsetzung durch die Verwendung von Katalysatoren verbessert werden. Als Katalysatoren eignen sich im allgemeinen die Salze bzw. Komplexe von Metallen der VIII Nebengruppe des Periodensystems, Katalysatoren, wie sie auch in der Ziegler-Natta Synthese Verwendung finden sowie Peroxide. Insbesondere geeignet sind Hexachloroplatinat und Tris-[triphenylphosphin]-rhodiumchlorid.

Die Edukte werden im allgemeinen in äquimolaren Mengen miteinander umgesetzt. Es kann für die Ausbeute vorteilhaft sein, das Silan IV in einem über- oder Unterschuß bezogen auf die Verbindung Va bzw. Vb einzusetzen.

In Abwandlung des vorstehend beschriebenen Verfahrens B erhält man die Verbindungen der allgemeinen Formeln Ia und Ib auch, wenn man anstelle der in 3-Position durch einen Isoxazolylrest substituierten Verbindungen Va bzw. Vb eine Verbindung einsetzt, deren Substituent in 3-Position sich auf einer späteren Reaktionsstufe leicht in den entsprechenden Isoxazolylrest umwandeln läßt.

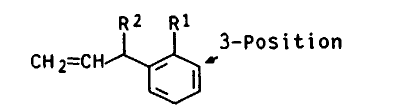

In dieser Hinsicht besonders geeignete Verbindungen sind solche, in denen der Substituent in 3-Position eine der folgenden Bedeutungen hat: Halogen wie insbesondere Chlor, Brom und Jod; Cyano; Formyl; -CH=NOH oder (ggf. durch einen Rest R substituiertes) Ethinyl.

Die Umwandlung des Substituenten erfolgt nach dem vorstehend bei Verfahren A aufgestellten Reaktionsschema gemäß der ebenfalls dort zitierten Literatur.

Als Ausgangsverbindungen insbesondere geeignet sind in diesem Verfahren B neben den eingangs beschriebenen Verbindungen Va bzw. Vb solche Derivate, in denen der Rest in 3-Position die Bedeutung Chlor oder Cyano hat.

### Verfahren C:

Nach einem weiteren Herstellungsverfahren erhält man 3-Isoxazolylphenylverbindungen der allgemeinen Formeln Ia und Ib, in denen X für eine Gruppe CH₂ steht, auch dadurch, daß man ein Silan der allgemeinen Formel IV, in an sich bekannter Weise (J. March, Advanced Organic Chemistry 2 Ed, McGraw Hill 2td., 1977, S. 409-412) in einem inerten organischen Lösungsmittel mit einer Verbindung der allgemeinen Formel VIIa bzw. VIIb umsetzt. 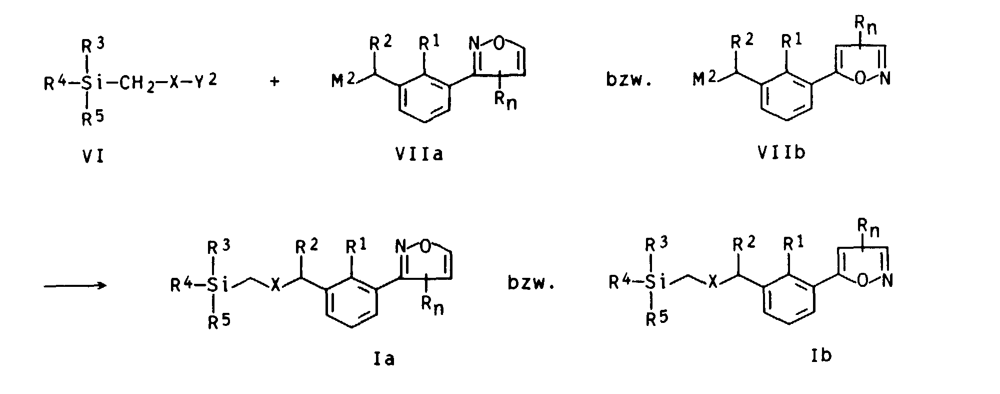 In der Formel VI steht Y² für eine nucleofuge Abgangsgruppe wie im allgemeinen und im besonderen bei Verfahren A für Y¹ genannt und X für die Gruppe CH₂.

M² in den Formeln VIIa bzw. VIIb steht für ein Äquivalent eines Alkalimetall-oder Erdalkalimetallions wie im allgemeinen bei Verfahren A für M¹ genannt.

Diese Umsetzung wird üblicherweise bei Temperaturen von -120°C bis 100°C, vorzugsweise -78°C bis 50°C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril sowie Dimethylsulfoxid, besonders bevorzugt Tetrahydrofuran und Diethylether.

Es können auch Gemische der genannten Lösungsmittel verwendet werden.

Im allgemeinen kann die Umsetzung durch die Verwendung von katalytischen Mengen an Kupfer(I)- bzw. Kupfer Kupfer(II)-Salzen verbessert werden.

Die Edukte werden im allgemeinen in äquimolaren Mengen miteinander umgesetzt. Es kann für die Ausbeute vorteilhaft sein, das Silan VI in einem über- oder Unterschuß bezogen auf VIIa bzw. VIIb einzusetzen.

In Abwandlung des vorstehend beschriebenen Verfahrens C erhält man die Verbindungen der allgemeinen Formeln Ia und Ib auch, wenn man anstelle der in 3-Position durch einen Isoxazolylrest substituierten Verbindungen VIIa bzw. VIIb eine Verbindung einsetzt, deren Substituent in 3-Position sich auf einer späteren Reaktionsstufe leicht in den entsprechenden Isoxazolylrest umwandeln läßt. 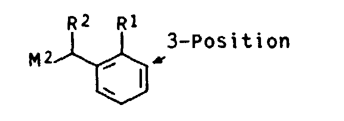 In dieser Hinsicht besonders geeignete Verbindungen sind solche, in denen der Substituent in 3-Position eine der folgenden Bedeutungen hat: Halogen wie insbesondere Chlor, Brom und Jod; Cyano; Formyl; -CH=NOH oder (ggf. durch einen Rest R substituiertes) Ethinyl.

Die Umwandlung des Substituenten erfolgt nach dem vorstehend bei Verfahren A aufgestellten Reaktionsschema gemäß der ebenfalls dort zitierten Literatur.

Als Ausgangsverbindungen insbesondere geeignet sind in diesem Verfahren C neben den eingangs beschriebenen Verbindungen VIIa bzw. VIIb solche Derivate, in denen der Rest in 3-Position die Bedeutung Chlor oder Cyano hat.

### Verfahren D:

Daneben erhält man 3-Isoxazolylphenylverbindungen der allgemeinen Formeln Ia und Ib, in denen X für eine Gruppe CH₂ steht, auch dadurch, daß man ein Silan der allgemeinen Formel VIII in an sich bekannter Weise (Syn. Com. 17, 385 (1987)) in einem inerten organischen Lösungsmittel mit einer Verbindung der allgemeinen Formel IXa bzw. IXb umsetzt. 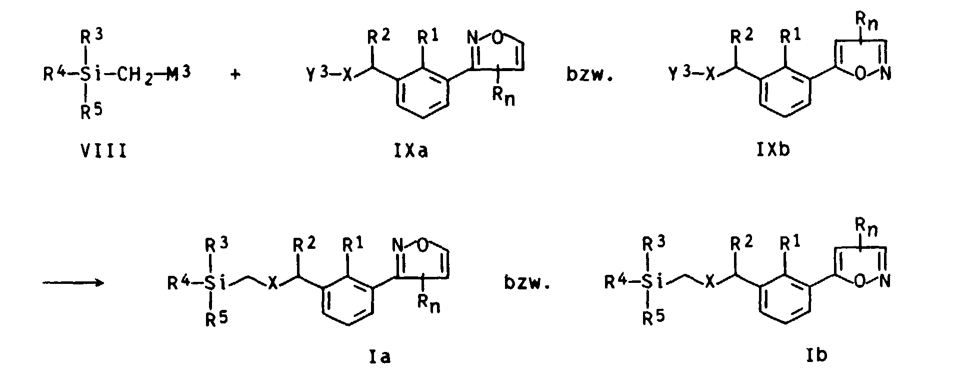 M³ in der Formel VIII steht für ein Äquivalent eines Alkalimetall- oder Erdalkalimetallions wie im allgemeinen bei Verfahren A für M¹ genannt.

In den Formeln IXa bzw. IXb steht Y² für eine nucleofuge Abgangsgruppe wie im allgemeinen und im besonderen bei Verfahren A für Y¹ genannt und X für die Gruppe CH₂.

Diese Umsetzung wird üblicherweise bei Temperaturen von -120°C bis 100°C, vorzugsweise -78°C bis 40°C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril sowie Dimethylsulfoxid, besonders bevorzugt Tetrahydrofuran und Diethylether.

Es können auch Gemische der genannten Lösungsmittel verwendet werden.

Die Edukte werden im allgemeinen in äquimolaren Mengen miteinander umgesetzt. Es kann für die Ausbeute vorteilhaft sein, das Silan VIII in einem über- oder Unterschup bezogen auf IXa bzw. IXb einzusetzen.

In Abwandlung des vorstehend beschriebenen Verfahrens D erhält man die Verbindungen der allgemeinen Formeln Ia und Ib auch, wenn man anstelle der in 3-Position durch einen Isoxazolylrest substituierten Verbindungen IXa bzw. IXb eine Verbindung einsetzt, deren Substituent in 3-Position sich auf einer späteren Reaktionsstufe leicht in den entsprechenden Isoxazolylrest umwandeln läßt. 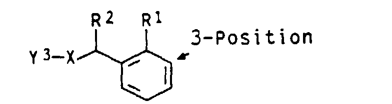 In dieser Hinsicht besonders geeignete Verbindungen sind solche, in denen der Substituent in 3-Position eine der folgenden Bedeutungen hat: Halogen wie insbesondere Chlor, Brom und Jod; Cyano; Formyl; -CH=NOH oder (ggf. durch einen Rest R substituiertes) Ethinyl.

Die Umwandlung des Substituenten erfolgt nach dem vorstehend bei Verfahren A aufgestellten Reaktionsschema gemäß der ebenfalls dort zitierten Literatur.

Als Ausgangsverbindungen insbesondere geeignet sind in diesem Verfahren D neben den eingangs beschriebenen Verbindungen IXa bzw. IXb solche Derivate, in denen der Rest in 3-Position die Bedeutung Chlor oder Cyano hat.

### Verfahren E:

Man erhält die 3-Isoxazolylphenylverbindungen der allgemeinen Formeln Ia und Ib, in denen X für eine Gruppe CH₂ steht, beispielsweise auch dadurch, daß man ein Silan der allgemeinen Formel X, in an sich bekannter Weise (DE-A 36 04 781, DE-A 38 23 979, EP-A 249 015, EP-A 224 024) in einem inerten organischen Lösungsmittel mit einer Verbindung der allgemeinen Formel XIa bzw. XIb, umsetzt. 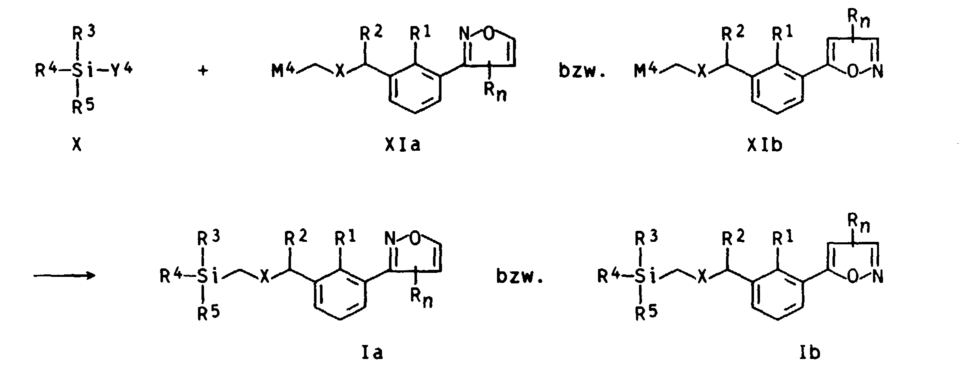 In der Formel X steht Y⁴ für eine nucleofuge Abgangsgruppe wie im allgemeinen und im besonderen bei Verfahren A für Y¹ genannt.

M⁴ in den Formeln XIa bzw. XIb steht für ein Äquivalent eines Alkalimetall-oder Erdalkalimetallions wie im allgemeinen bei Verfahren A für M¹ genannt.

Diese Umsetzung wird üblicherweise bei Temperaturen von -120°C bis 100°C, vorzugsweise -78°C bis 0°C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril, sowie Dimethylsulfoxid, besonders bevorzugt Tetrahydrofuran und Diethylether.

Es können auch Gemische der genannten Lösungsmittel verwendet werden.

Die Edukte werden im allgemeinen in äquimolaren Mengen miteinander umgesetzt. Es kann für die Ausbeute vorteilhaft sein, das Silan X in einem über- oder Unterschuß bezogen auf XIa bzw. XIb einzusetzen.

In Abwandlung des vorstehend beschriebenen Verfahrens E erhält man die Verbindungen der allgemeinen Formeln Ia und Ib auch, wenn man anstelle der in 3-Position durch einen Isoxazolylrest substituierten Verbindungen XIa bzw. XIb eine Verbindung einsetzt, deren Substituent in 3-Position sich auf einer späteren Reaktionsstufe leicht in den entsprechenden Isoxazolylrest umwandeln läßt. 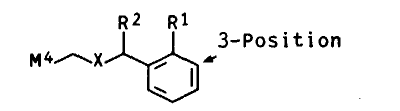 In dieser Hinsicht besonders geeignete Verbindungen sind solche, in denen der Substituent in 3-Position eine der folgenden Bedeutungen hat: Halogen wie insbesondere Chlor, Brom und Jod; Cyano; Formyl; -CH=NOH oder (ggf. durch einen Rest R substituiertes) Ethinyl.

Die Umwandlung des Substituenten erfolgt nach dem vorstehend bei Verfahren A aufgestellten Reaktionsschema gemäß der ebenfalls dort zitierten Literatur.

Als Ausgangsverbindungen insbesondere geeignet sind in diesem Verfahren E neben den eingangs beschriebenen Verbindungen XIa bzw. XIb solche Derivate, in denen der Rest in 3-Position die Bedeutung Chlor oder Cyano hat.

### Verfahren F:

Außerdem erhält man die 3-Isoxazolylphenylverbindungen der allgemeinen Formeln Ia und Ib, in denen X nicht für eine Gruppe CH₂ steht, dadurch, daß man ein Silan der allgemeinen Formel XII, in an sich bekannter Weise (EP-A 202 893) in einem inerten organischen Lösungsmittel mit einer Verbindung der allgemeinen Formel XIIIa bzw. XIIIb umsetzt. 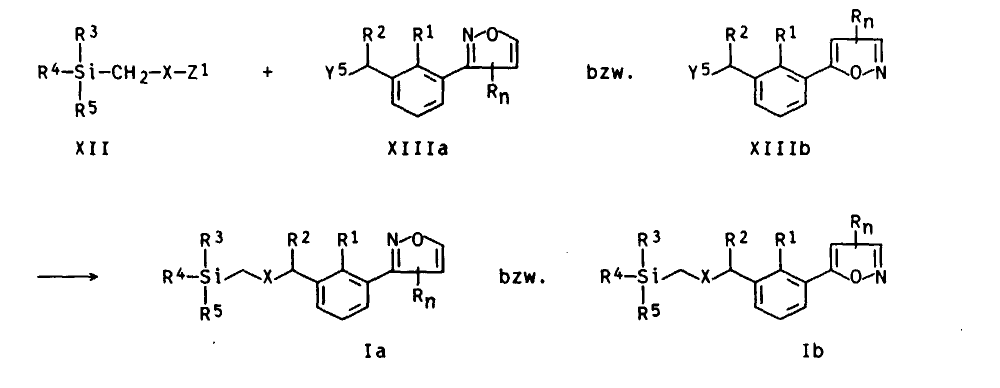 In den Formeln XIIIa bzw. XIIIb steht Y⁵ für eine nucleofuge Abgangsgruppe wie im allgemeinen und im besonderen bei Verfahren A für Y¹ genannt.

Z¹ in der Formel XII steht für Wasserstoff oder ein Äquivalent eines Alkalimetall- oder Erdalkalimetallions wie im allgemeinen bei Verfahren A für M¹ genannt.

Diese Umsetzung wird üblicherweise bei Temperaturen von -120°C bis 100°C, vorzugsweise -78°C bis 50°C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril, Ketone wie Aceton, Methylethylketon, Diethylketon und tert.-Butylmethylketon sowie Dimethylsulfoxid und Dimethylformamid, besonders bevorzugt Tetrahydrofuran und Diethylether.

Es können auch Gemische der genannten Lösungsmittel verwendet werden.

Die Edukte werden im allgemeinen in äquimolaren Mengen miteinander umgesetzt. Es kann für die Ausbeute vorteilhaft sein, das Silan XII in einem über- oder Unterschuß bezogen auf XIIIa bzw. XIIIb einzusetzen.

In Abwandlung des vorstehend beschriebenen Verfahrens F erhält man die Verbindungen der allgemeinen Formeln Ia und Ib auch, wenn man anstelle der in 3-Position durch einen Isoxazolylrest substituierten Verbindungen XIIIa bzw. XIIIb eine Verbindung einsetzt, deren Substituent in 3-Position sich auf einer späteren Reaktionsstufe leicht in den entsprechenden Isoxazolylrest umwandeln läßt. 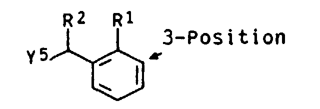 In dieser Hinsicht besonders geeignete Verbindungen sind solche, in denen der Substituent in 3-Position eine der folgenden Bedeutungen hat: Halogen wie insbesondere Chlor, Brom und Jod; Cyano; Formyl; -CH=NOH oder (ggf. durch einen Rest R substituiertes) Ethinyl.

Die Umwandlung des Substituenten erfolgt nach dem vorstehend bei Verfahren A aufgestellten Reaktionsschema gemäß der ebenfalls dort zitierten Literatur.

Als Ausgangsverbindungen insbesondere geeignet sind in diesem Verfahren F neben den eingangs beschriebenen Verbindungen XIIIa bzw. XIIIb solche Derivate, in denen der Rest in 3-Position die Bedeutung Chlor, Cyano oder Formyl hat.

### Verfahren G:

Man erhält die 3-Isoxazolylphenylverbindungen der allgemeinen Formeln Ia und Ib, in denen X nicht für eine Gruppe CH₂ steht, aber auch dadurch, daß man ein Silan der allgemeinen Formel XIV, in an sich bekannter Weise (US-A 2,572,402, DE-A 38 05 117) in einem inerten organischen Lösungsmittel mit einer Verbindung der allgemeinen Formel XVa bzw. XVb umsetzt. 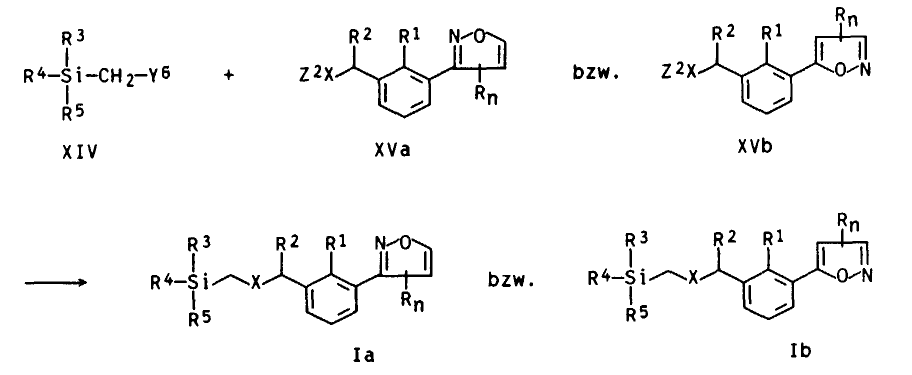 In der Formel XIV steht Y⁶ für eine nucleofuge Abgangsgruppe wie im allgemeinen und im besonderen bei Verfahren A für Y¹ genannt.

Z² in den Formeln XVa bzw. XVb steht für Wasserstoff oder ein Äquivalent eines Alkalimetall- oder Erdalkalimetallions wie im allgemeinen bei Verfahren A für M¹ genannt.

Diese Umsetzung wird üblicherweise bei Temperaturen von -120°C bis 100°C, vorzugsweise -78°C bis 50°C durchgeführt.

Geeignete Lösungsmittel sind aliphatische Kohlenwasserstoffe wie Pentan, Hexan, Cyclohexan und Petrolether, aromatische Kohlenwasserstoffe wie Benzol, Toluol, o-, m- und p-Xylol, halogenierte Kohlenwasserstoffe wie Methylenchlorid, Chloroform und Chlorbenzol, Ether wie Diethylether, Diisopropylether, tert.-Butylmethylether, Dioxan, Anisol und Tetrahydrofuran, Nitrile wie Acetonitril und Propionitril, Ketone wie Aceton, Methylethylketon, Diethylketon und tert.-Butylmethylketon sowie Dimethylsulfoxid und Dimethylformamid, besonders bevorzugt Dimethylformamid und tert.-Butylmethylketon.

Es können auch Gemische der genannten Lösungsmittel verwendet werden.

Zur Verbesserung der Ausbeuten bzw. der Beschleunigung der Reaktionsgeschwindigkeit kann es vorteilhaft sein, die Umsetzung in Gegenwart einer Base durchzuführen.

Als Basen kommen allgemein anorganische Verbindungen wie Alkalimetall-und Erdalkalimetallhydride wie Lithiumhydrid, Natriumhydrid, Kaliumhydrid und Calziumhydrid, Alkalimetallamide wie Lithiumamid, Natriumamid und Kaliumamid, metallorganische Verbindungen, insbesondere Alkalimetallorganyle wie Methyllithium, Butyllithium und Phenyllithium sowie Alkylmagnesiumhalogenide wie Methylmagnesiumchlorid in Betracht.

Besonders bevorzugt werden Natriumhydrid, Kaliumhydrid, Natriumamid, Methyllithium und Butyllithium.

Die Basen werden im allgemeinen äquimolar oder in einem überschuß von 1 bis 10 mol-%, bezogen auf das Edukt XIV, verwendet.

Die Edukte werden im allgemeinen in äquimolaren Mengen miteinander umgesetzt. Es kann für die Ausbeute vorteilhaft sein, das Silan XIV in einem über- oder Unterschuß bezogen auf XVa bzw. XVb einzusetzen.

In Abwandlung des vorstehend beschriebenen Verfahrens G erhält man die Verbindungen der allgemeinen Formeln Ia und Ib auch, wenn man anstelle der in 3-Position durch einen Isoxazolylrest substituierten Verbindungen XVa bzw. XVb eine Verbindung einsetzt, deren Substituent in 3-Position sich auf einer späteren Reaktionsstufe leicht in den entsprechenden Isoxazolylrest umwandeln läßt. 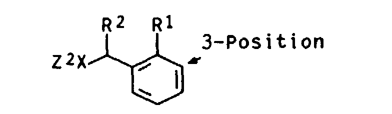 In dieser Hinsicht besonders geeignete Verbindungen sind solche, in denen der Substituent in 3-Position eine der folgenden Bedeutungen hat: Halogen wie insbesondere Chlor, Brom und Jod; Cyano; Formyl; -CH=NOH oder (ggf. durch einen Rest R substituiertes) Ethinyl.

Die Umwandlung des Substituenten erfolgt nach dem vorstehend bei Verfahren A aufgestellten Reaktionsschema gemäß der ebenfalls dort zitierten Literatur.

Als Ausgangsverbindungen insbesondere geeignet sind in diesem Verfahren G neben den eingangs beschriebenen Verbindungen XVa bzw. XVb solche Derivate, in denen der Rest in 3-Position die Bedeutung Chlor, Cyano oder Formyl hat.

Die Herstellung der für die vorstehend beschriebenen Umsetzungen benötigten Silane der allgemeinen Formeln II, IV, VI, VIII, XII und XIV ist beispielsweise in der US-A 4,775,664 (entspricht der EP-A 224 024) und der dort zitierten Literatur beschrieben.

Die des weiteren benötigten Vorprodukte der allgemeinen Formeln IIIa bzw. IIIb und XVa bzw. XVb, in denen X Sauerstoff bedeutet, sind auf verschiedenen Wegen zugänglich.

So erhält man die Verbindungen XVa (Z² = H, X = 0) dadurch, daß man einen geschützten 3-Formylbenzylalkohol der allgemeinen Formel XVI in an sich bekannter Weise in einem inerten organischen Lösungsmittel im allgemeinen in Gegenwart einer Base in das entsprechende Oxim XVIIa überführt, XVIIa anschließend in einem inerten organischen Lösungsmittel in Gegenwart eines Oxidationsmittels und einer Base an ein Alkin der Formel XVIIIa addiert und aus dem so erhaltenen 3-Isoxazolyl-benzylether XIXa in an sich bekanntere Weise in einem inerten organischen Lösungsmittel in Gegenwart einer Säure oder eines Katalysators die Schutzgruppe abspaltet.

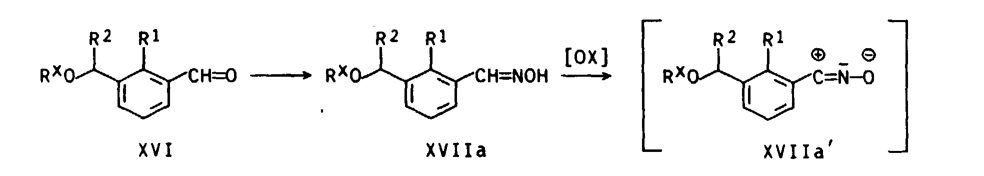

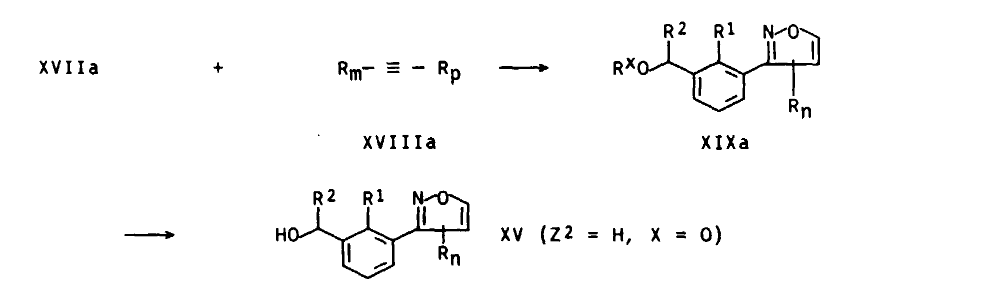

In den Formeln XVI, XVIIa, XVIIa' und XIXa bedeutet R^{x} eine Schutzgruppe wie Methoxymethyl, 2-Methoxyethoxymethyl, Tetrahydro-2-pyranyl, Tetrahydro-2-furanyl, tert.-Butyl-dimethylsilyl und Trimethylsilyl.

m und p in der Formel XVIIIa stehen für 0 und 1, wobei die Summe m + p dem Wert von n entspricht.

Die Umsetzung des Aldehyds XVI zum Oxim XVIIa erfolgt in an sich bekannter Weise (Houben-Weyl, Methoden der organischen Chemie, Bd. VII/1, S. 471 f, Bd. X/4, S. 56 f).

Die anschließende Spaltung des 3-Isoxazolylbenzylethers XIXa zum 3-Isoxazolyl-benzylalkohol erfolgt in an sich bekannter Weise (T. Greene, Protective Groups in Organic Chemistry, J. Wiley & Sons, New York 1981; Tietze et al., Reaktionen und Synthesen, Georg-Thieme-Verlag 1981, S. 363 f.) in einem inerten organischen Lösungsmittel in Gegenwart einer Säure oder eines Katalysators.

Die benötigen Vorprodukte XVb erhält man in ähnlicher Weise dadurch, daß man einen ethergeschützten 3-Formylbenzylalkohol der allgemeinen Formel XVI in an sich bekannter Weise in einem inerten organischen Lösungsmittel in Gegenwart einer Base mittels eines Phosphonium- oder Phosphonat-Reagens' in einer Wittig bzw. Horner-Wittig Reaktion in das entsprechende 3-Bromvinylderivat XX überführt, XX anschließend in einem inerten organischen Lösungsmittel in Gegenwart einer Base in ein Alkin der Formel XVIIIb überführt, welches danach in an sich bekannter Weise in einem inerten organischen Lösungsmittel in Gegenwart eines Oxidationsmittels und einer Base an ein Oxim der Formel XVIIb zum 3-Isoxazolyl-benzylether XIXb addiert wird, aus dem in an sich bekannter Weise die Schutzgruppe abgespalten wird. 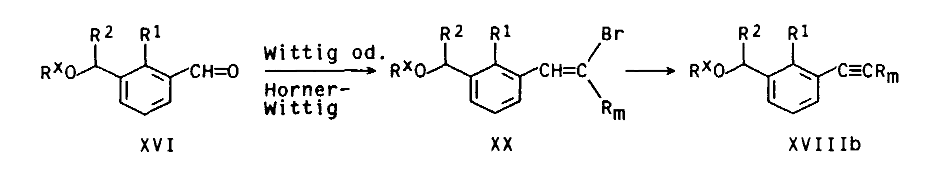 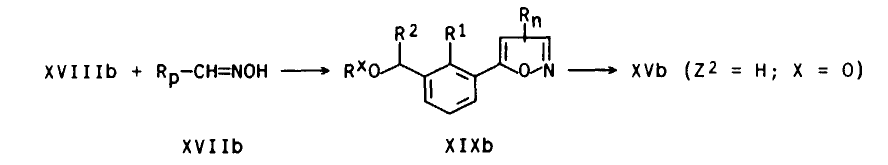 Bevorzugte Wittig bzw. Horner-Wittig Reagentien sind die Triphenylphosphoniumhalogenide und die Diethylphosphonate.

Die Reste R^{x} (Formeln XVI, XVIIIb und XIXb), Rₘ (Formeln XX und XVIIIb) und Rₚ (Formel XVIIb) haben die vorstehend gegebene Bedeutung.

Die Wittig oder Horner-Wittig Umsetzung des Aldehyds XVI erfolgt in an sich bekannter Weise (z.B. Liebigs Ann. Chem., 1980, S. 2061 f; Synthesis 1975, S. 458 f.; DE-A 3 927 479).

Die Umsetzung von XVIIb mit XVIIIb und die anschließende Spaltung des Ethers XIXb erfolgt analog den vorstehend für die Umsetzung von XVIIa mit XVIIIa und die Spaltung des Ethers XIXa beschriebenen Bedingungen.

Für die Herstellung der 3-Isoxazolyl-benzylalkoholen XVb (Z² = H), in denen n 0 oder 1 bedeutet, kommen insbesondere auch folgende aus der Literatur bekannte Umsetzungen in Betracht:
1. Analog zu Tietze et al., Reaktionen und Synthesen, Georg-Thieme-Verlag 1981, S. 299 f 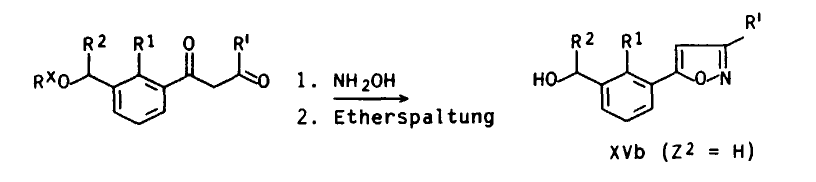 (R' = Wasserstoff oder ein Rest R)
2. Analog zu Huisgen et al., Chem. Ber. 1973, S. 3291 f. 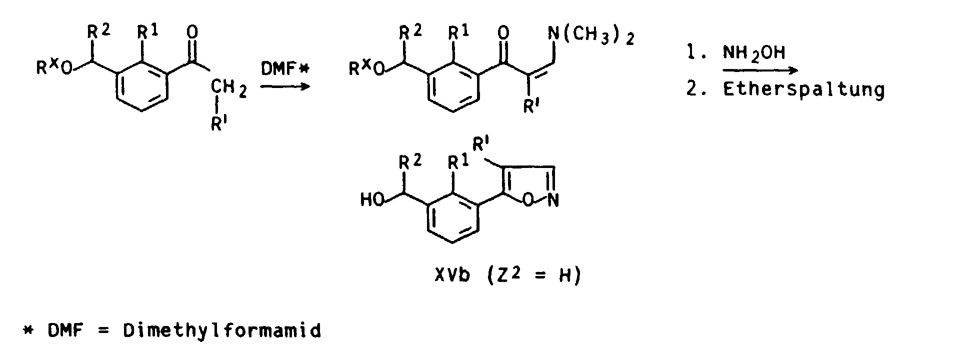
3. Analog zu Bowden et al., J. Chem. Soc. 1946, 953 f.

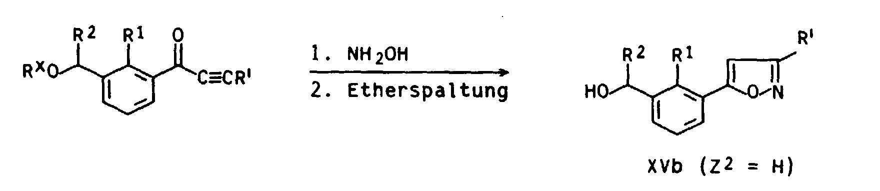

Die Herstellung des für die Synthese der 3-Isoxazolyl-benzylalkohole XVa und XVb benötigten 3-Formylbenzylethers XVI erfolgt nach an sich bekannten Methoden (DE-A 3 927 479) gemäß dem folgenden Reaktionsschema: 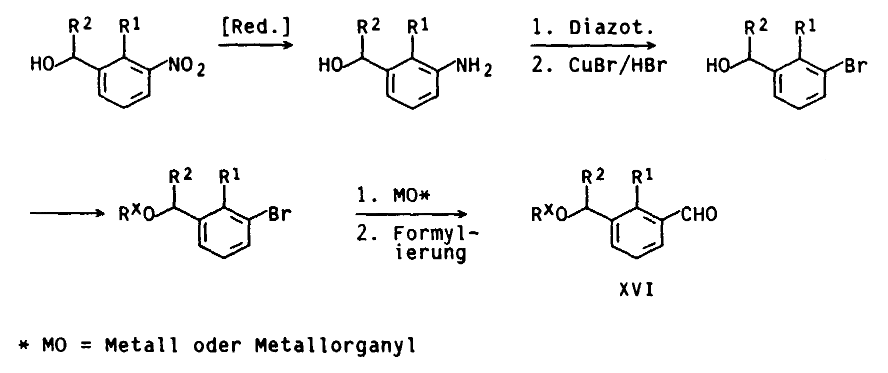 Die Reduktion [Red.] und die Diazotierung [Diazot.] kann nach den in EP-A 54 180 beschriebenen Verfahren erfolgen.

Der Alkohol läßt sich nach der in Tietze/Eicher (Reaktionen und Synthesen, Thieme Verlag, 1981, Seite 184) beschriebenen Methode verethern.

Zur Herstellung des Aldeyhds XVI kommt die Umsetzung der entsprechenden metallorganischen Verbindungen (Grignardverbindung oder Lithiumorganylverbindung) mit bestimmten Formamiden wie z.B. Dimethylformamid, 1-Formylpiperidin oder 2-(Formyl-methylamino)-pyridin in Frage (vgl. Houben-Weyl, Methoden der organischen Chemie, Band E 3, S. 130).

Die Benzylalkohole der allgemeinen Formel XVa bzw. XVb, in der R² Cyano, C₂-C₄-Alkinyl, C₂-C₄-Alkenyl oder C₁-C₄-Alkyl bedeutet, erhält man vorteilhaft dadurch, daß man zunächst die unsubstituierten Benzylalkohole mit R² = H zu den entsprechenden Benzaldehyden XXI oxidiert.

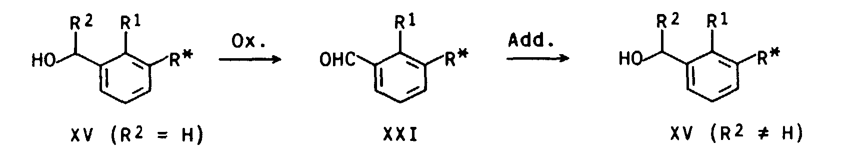

R* in den Formeln XV und XXI bedeutet hier den Isoxazoylrest. Als Oxidationsmittel kommen alle gängigen Oxidationsmittel, die primäre Alkohole in Aldehyde überführen, in Frage (Houben-Weyl, Methoden der organischen Chemie, Band E3, S. 265 ff). Besonders geeignet sind Verbindungen mit übergangsmetallen in höherer Oxidationsstufe, z.B. Pyridiniumchlorochromat.

Die Benzaldehyde XXI können in einem anschließenden Reaktionsschritt in an sich bekannter Weise zu den substituierten Benzylalkoholen mit R²≠H umgesetzt werden. Dabei wird
a) im Fall von R² = CN der Benzaldehyd mit Blausäure oder einem Metallcyanid ggf. in Gegenwart einer Säure umgesetzt;
b) im Fall von R² = C₂-C₄-Alkinyl, C₂-C₄-Alkenyl oder C₁-C₄-Alkyl, der Benzaldehyd mit Metallorganylen MR² oder R²MHal, wobei M für Alkali-, Erdalkali- oder Übergangsmetalle und Hal für Halogen steht, zur Reaktion gebracht.

Zur Herstellung der Cyanhydrine werden die Benzaldehyde mit Blausäure, in situ aus Metallcyaniden erzeugter Blausäure oder Metallcyaniden in Gegenwart von Alkalihydrogensulfitlösung umgesetzt, wobei gegebenenfalls basische Katalysatoren wie Kaliumcarbonat oder Phasentransferkatalysatoren wie z.B. Benzyltriethylammoniumchlorid zugegeben werden.

Als Metallcyanide werden bevorzugt Alkalimetallcyanide wie z.B. Natrium-oder Kaliumcyanid verwendet.

Die Umsetzung erfolgt in an sich bekannter Weise, z.B. wie in Houben-Weyl, Methoden der org. Chemie, Band VIII, S. 274-278, Ausgabe 1952 und Band E5, S. 1413 ff, 1985, beschrieben.

Als Metallorganyle eignen sich die entsprechenden metallorganischen verbindungen, insbesondere Lithiumorganylverbindungen LiR² wie Methyllithium, Ethyllithium, Butyllithium oder die entsprechenden Grignardverbindungen R²MgHal, worin Hal für Chlor, Brom oder Jod steht, z.B. Methylmagnesiumbromid, Ethylmagnesiumchlorid, Propylmagnesiumiodid oder Vinylmagnesiumiodid.

Die Umsetzung mit Metallorganylen kann in an sich bekannter Weise, z.B. wie in Houben-Weyl, Methoden der org. Chemie, Band 13/2a, S. 285ff, 1973 beschrieben in einem inerten organischen Lösungsmittel wie Ether oder Tetrahydrofuran unter Schutzgas durchgeführt werden, so daß sich nähere Ausführungen hierzu erübrigen.

Ausgehend von Benzylalkoholen des Typs XV (Z²=H, X=O) lassen sich durch Umsetzung derselben mit Trioxan und Trimethylsilylchlorid (A. Skipov et al. J. Gen. Chem. 1989, 1067) die entsprechenden Chlormethylether des Typs 111 (X=O, Y¹=Cl) herstellen. 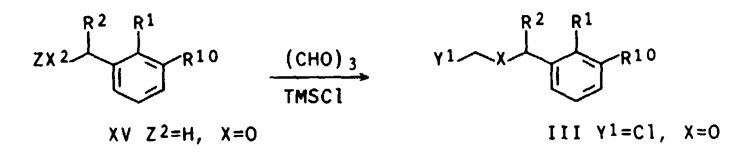 Weitere Verfahren zur Herstellung von III (Y¹=Cl,Br,J; X=O) sind in Houben-Weyl Band VI/3, S. 119 beschrieben.

Die Halogenmethylether des Typs III (Y¹=Cl,Br,J; X=O) können nach Houben-Weyl Band 13/2a, S. 114 bzw. R. Tacke (Zeitschr. f. Naturforsch. B 1983, 738) bzw. E. Corey (Tetrahedron Lett. 24, 3163 (1983)) in entsprechende metallierte Derivate des Typs XI (M⁴=Li,Na,K,Mg; X=O) umgewandelt werden, welche entweder nach Isolation und/oder Reinigung oder in-situ mit Elektrophilen des Typs X zu Ia/Ib umgesetzt werden. 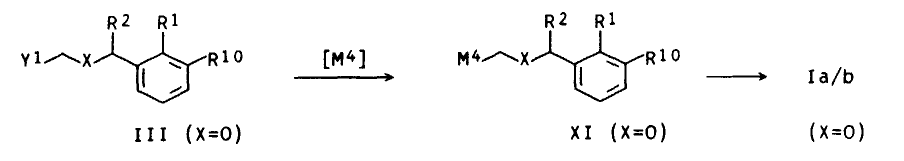 Unter [M⁴] sind hierbei die Metalle M⁴ selbst oder deren kommerziell erhältlichen Alkyl- bzw. Arylverbindungen zu verstehen.

Die Benzylalkohole XV (X=O; Z²=H) sind ebenso als Edukte für Benzylhalogenide/-sulfonate des Typs XIII (Y⁵=Cl,Br,I,Tosylat,Mesylat) nach Standardverfahren (s. Houben-Weyl Band 9, S. 388,663; Band 5/3, S. 760; Band 5/4, S. 361,610) geeignet.

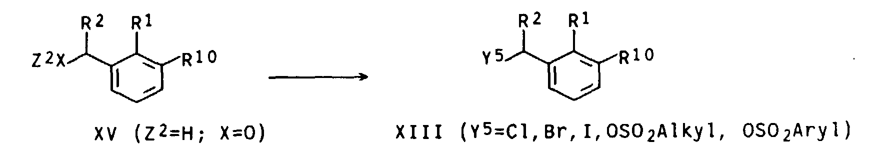

Durch Behandlung der Benzylalkohole XV (Z=0, Z²=H) mit Basen (z.B. NaH, KH, KO-t.-Bu, NaNH₂) ist es nach gängigen Verfahren möglich (s. Houben-Weyl Band 6/2, s. 5) die entsprechenden Alkoholate XV (X=O; Z=Li,Na,K,Mg,Ca) zu erzeugen und entweder in-situ oder nach Reinigung/Isolation mit geeigneten Silanen des Typs XIV zu den gewünschten Produkten Ia/b umzusetzen (s. US-A 2,572,402).

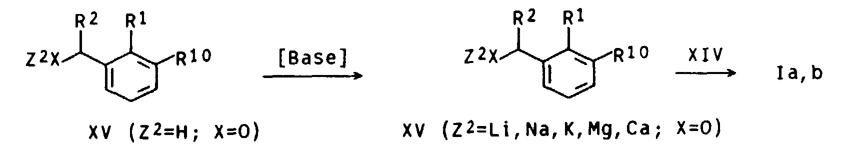

Als Basen kommen anorganische Verbindungen wie Alkalimetall- und Erdalkalimetallhydride wie Lithiumhydrid, Natriumhydrid, Kaliumhydrid und Calziumhydrid, Alkalimetallamide wie Lithiumamid, Natriumamid und Kaliumamid, metallorganische Verbindungen, insbesondere Alkalimetallorganyle wie Methyllithium, Butyllithium und Phenyllithium sowie Alkylmagnesiumhalogenide wie Methylmagnesiumchlorid oder auch die Metalle Z² selbst in Betracht.

Besonders bevorzugt werden Natriumhydrid, Kaliumhydrid, Natriumamid, Methyllithium und Butyllithium.

Benzylhalogenide des Typs XIII sind wertvolle Ausgangsmaterialien zur Herstellung von Metall-benzylverbindungen durch Halogen-Metallaustauschreaktion oder formale Insertion des Metalls in die Halogen-Kohlenstoffbindung wie bei der Grignard-Reaktion.

Zur Durchführung der Halogen-Metallaustauschreaktion sind folgende Reagenzien geeignet: Lithium, Natrium, Kalium, Methyllithium, Ethyllithium, n-Butyl-lithium, sek. Butyl-lithium, t.Butyl-lithium. Halogen-Metall-Austauschreaktionen werden wie in Gattermann, "Die Praxis des organischen Chemikers", de Gruyter Verlag, Berlin, 43. Aufl. 1982, S. 442 bzw. in Houben-Weyl Band 13/1, S. 134 ausgeführt in inerten Lösungsmitteln wie Tetrahydrofuran, Diethylether bzw. niedrigen Temperaturen (-120°-0°C) unter Schutzgas (N₂, Ar) ausgeführt.

Grignard-Verbindungen (Magnesium-Organyl-Halogenide) lassen sich durch Einwirkung von Benzylhalogeniden des Typs XIII (Y⁵=Cl,Br,I) auf Magnesium-Metall in inerten Lösungsmitteln wie Tetrahydrofuran, Diethylether unter Schutzgas (N₂, Ar) nach gängigen Vorschriften, wie in Gattermann, S. 431 beschrieben, herstellen. 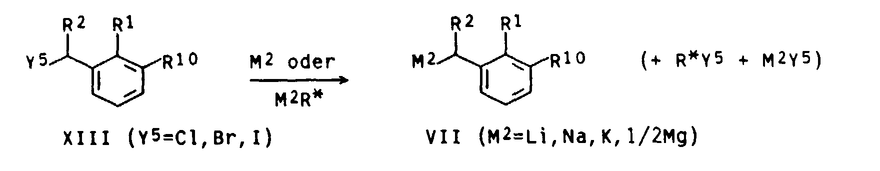 Metall-benzyl-Verbindungen des Typs VII können mit geeigneten Elektrophilen um ein bzw. zwei Kohlenstoffatome verlängert werden.

So führen Umsetzungen mit CH₂O, (CH₂O)₃, (CH₂O)ₙ zu Hydroxymethylgruppen, welche in an sich bekannter Weise (Literatur s. Darstellung Verbindung XIII) in Verbindungen des Typs IX (X=CH₂, Y³=Cl,Br,I,ISO₂-Alkyl, OSO₂-Aryl) überführt werden können. 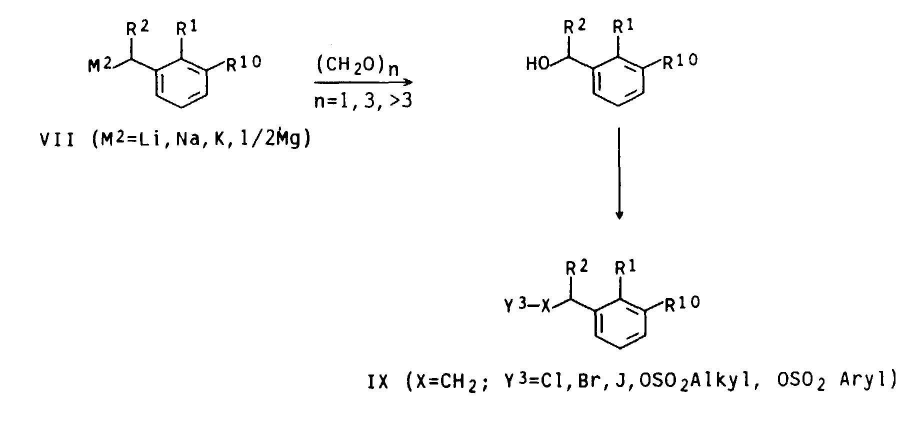 Umsetzungen von Grignard-Verbindungen mit Formaldehyd bzw. Formaldehyd-Äquivalenten sind in Houben-Weyl Band 13/2, S. 290 beschrieben.

Verbindungen des Typs 111 (X=CH₂) sind analog zu dem oben beschriebenen Weg für Verbindungen des Typs IX (X=CH₂) durch Umsetzung der Metallbenzylverbindungen VII (M²=Li,Na,K,1/2 Mg) mit Ethylenoxid zu 2-Hydroxy-ethyl-Derivaten erhältlich, welche wiederum in an sich bekannter Weise (Literatur s. Darstellung Verbindung XIII) in Verbindungen des Typs III (X=CH₂) überführt werden können. 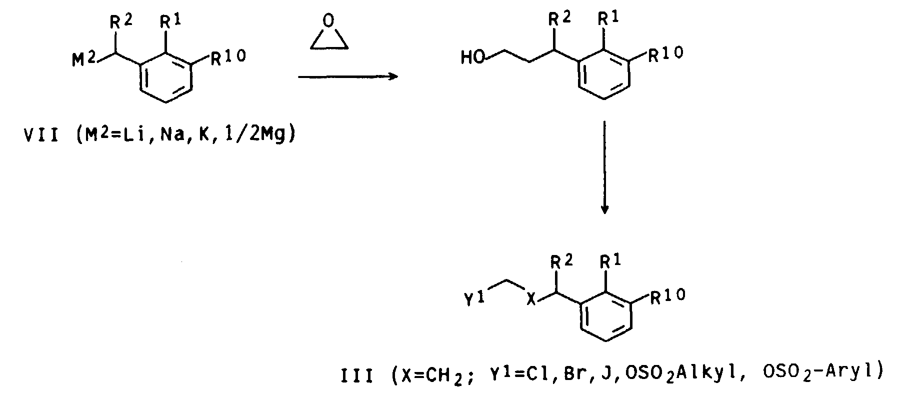 Repräsentativ für die Reaktion von Metallorganylen mit Ethylenoxid sind die in Houben-Weyl Band 13/2, S. 343 angeführten Beispiele.

Analog zur Herstellung der Verbindung VII (M²=Li,Na,K,1/2 Mg) aus Verbindung XIII (Y⁵=Cl,Br,I) lassen sich aus Verbindung III (X=CH₂; Y¹=Cl,Br,I) die Metallorganyle XI (X=CH₂; M⁴=Li,Na,K, 1/2 Mg) nach den bereits oben zitierten Literaturstellen herstellen. 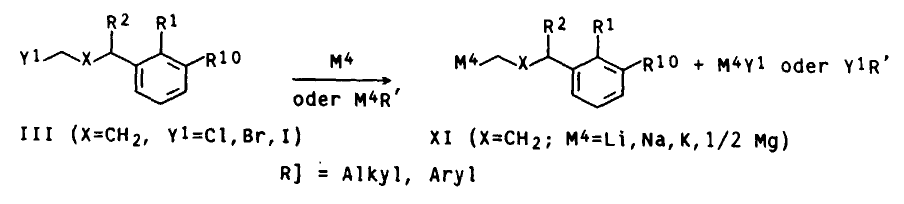 Die Herstellung von Allyl-benzol-Verbindungen des Typs V ist in der Literatur vielfach beschrieben; z.B.
T. Hirao Tetrahedron Lett. 1986, 27, 929
A. Luttinghaus Ann. d. Chem. 1945, 557, 46
Y. Yokoyama Tetrahedron Lett. 1985, 26, 6457
G. Tolstikov J. Organomet. Chem. 1985, 292, 133

Ausgehend von Metallarylverbindungen werden diese gegebenenfalls in Gegenwart eines oder mehrerer Katalysatoren mit in 3-Position nucleofug substituierten Prop-1-en-Verbindungen gekuppelt. Als Katalysatoren kommen Salze bzw. Komplexe von Metallen der Ib bis VIII-Gruppe des Periodensystems in Betracht, z.B. PdCl₂, Cu(AcAc)₂, VCl₃, wobei die Menge des Katalysators 10⁻³ bis 1,5 Mol-Äquivalente, bezogen auf die Metallaryl-Verbindung betragen kann.

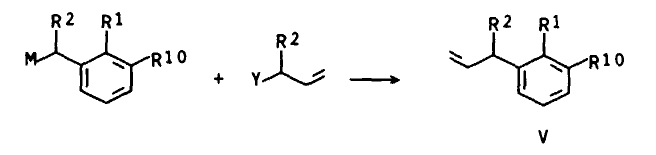

Bevorzugt werden Mg, Li, Na, K als Metalle sowie Cl, Br, I, Aryl- oder Alkylsulfonate als Nucleofuge. Die Reaktionen werden üblicherweise in inerten Lösungsmitteln wie Diethylether, Tetrahydrofuran, Pentan, Hexan, Cyclohexan, Heptan, Benzol, Toluol bei Temperaturen zwischen -78°C und +100⁰C unter Schutzgasatmosphäre (N₂, Ar) durchgeführt.

Im Hinblick auf die bestimmungsgemäße Verwendung der Verbindungen Ia und Ib kommen als Substituenten beispielsweise folgende Reste in Betracht:
R
Halogen wie Fluor, Chlor, Brom und Jod;
Alkyl wie Methyl, Ethyl, Propyl, 1-Methylethyl, Butyl, 1-Methylpropyl, 2-Methylpropyl und 1,1-Dimethylethyl, vorzugsweise Methyl und Ethyl;
Halogenalkyl wie Fluormethyl, Difluormethyl, Trifluormethyl, Chlordifluormethyl, Dichlorfluormethyl, Trichlormethyl, 1-Fluorethyl, 2-Fluorethyl, 2,2-Difluorethyl, 2,2,2-Trifluorethyl, 2-Chlor-2,2-difluorethyl, 2,2-Dichlor-2-fluorethyl, 2,2,2-Trichlorethyl und Pentafluorethyl;
Alkoxy wie Methoxy, Ethoxy, Propoxy, 1-Methylethoxy, Butoxy, 1-Methylpropoxy, 2-Methylpropoxy und 1,1-Dimethylethoxy;
Halogenalkoxy wie Difluormethoxy, Trifluormethoxy, Chlordifluormethoxy, Dichlorfluormethoxy, 1-Fluorethoxy, 2-Fluorethoxy, 2,2-Difluorethoxy, 1,1,2,2-Tetrafluorethoxy, 2,2,2-Trifluorethoxy, 2-Chlor-1,1,2-trifluorethoxy und Pentafluorethoxy;
Alkenyl wie Ethenyl, 1-Propenyl, 2-Propenyl, 1-Methylethenyl, 1-Butenyl, 2-Butenyl, 3-Butenyl, 1-Methyl-1-propenyl, 1-Methyl-2-propenyl, 2-Methyl-1-propenyl, 2-Methyl-2-propenyl;
Halogenalkenyl wie 2,2-Dichlorethenyl, 2,2-Dibromethenyl, 2,2-Difluorethenyl, 2-Chlor-2-fluorethenyl, 2-Brom-2-chlorethenyl, 2-Brom-2-fluorethenyl, 2,2-Di(trifluormethyl)-ethenyl, 2-Chlor-2-trifluormethylethenyl und 2-Fluor-2-trifluormethyl-ethenyl;
Phenylethenyl, welches ein bis fünf Halogenatome wie insbesondere Fluor und Chlor sowohl am Phenylring als auch an der Ethenylgruppierung tragen kann, insbesondere 2-Chlor-2-(4-chlor-phenyl)ethenyl;
Alkinyl wie Ethinyl, 1-Propinyl, 2-Propinyl, 1-Butinyl, 2-Butinyl, 3-Butinyl, 1-Methyl-2-propinyl;
Cycloalkyl wie Cyclopropyl, Cyclobutyl, Cyclopentyl, Cyclohexyl und Cycloheptyl;
Aryl wie Phenyl und Naphthyl;
Hetaryl wie ein 5- oder 6-gliedriges heteroaromatisches System z.B. Pyrrolyl, Pyrazolyl, Imidazolyl, Isoxazolyl, Oxazolyl, Isothiazolyl, Thiazolyl, Furanyl, Thienyl und Pyridyl;
eine Carboxylatgruppe CO₂R⁶ oder eine Carboxamidgruppe CONR⁷R⁸, wobei
R⁶, R⁷ und R⁸
für Wasserstoff oder Alkyl wie vorstehend genannt sowie für Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl,
3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, C₃-C₆-Cycloalkyl wie Cyclopropyl, Cyclobutyl, Cyclopentyl und Cyclohexyl, und Benzyl bedeutet, und
R⁶
vorzugsweise Methyl oder Ethyl;
R⁷ und R⁸
unabhängig voneinander für Wasserstoff, C₁-C₆-Alkyl wie vorstehend genannt, C₃-C₆-Cycloalkyl wie vorstehend genannt und Benzyl stehen oder gemeinsam mit dem Stickstoffatom an das sie gebunden sind einen 3- bis 8-gliedrigen, gesättigten oder 1- oder 2-fach ungesättigten heterocyclischen Rest, bestehend Kohlenstoffringgliedern bilden, wobei dieser Cyclus außerdem ein oder zwei weitere Heteroatome ausgewählt aus der Gruppe Sauerstoff, Schwefel und Stickstoff enthalten kann; Beispiele für derartige Ringsysteme sind bevorzugt:
5- bis 6-gliedrige, gesättigte oder ungesättigte Heterocyclen, enthaltend ein bis drei Stickstoffatome oder ein oder zwei Stickstoffatome und ein Sauerstoff- oder Schwefelatom wie 1-Pyrrolidinyl, 1-Isoxazolidinyl, 1-Isothiazolidinyl, 1-Pyrazolidinyl, 1-Oxazolidinyl, 1-Thiazolidinyl, 1-Imidazolidinyl, 1,2,4-Oxadiazolidin-1-yl, 1,2,4-Thiadiazolidin-1-yl, 1,2,4-Triazolidin-1-yl, 1,3,4-Oxadiazolidin-1-yl, 1,3,4-Thiadiazolidin-1-yl, 1,3,4-Oxadiazolidin-1-yl, 1,3,4-Thiadiazolidin-1-yl, 1,3,4-Triazolidin-1-yl, 2,3-Pyrrolin-1-yl, 2,4-Pyrrolin-1-yl, 2,3-Isoxazolin-1-yl, 3,4-Isoxazolin-1-yl, 4,5-Isoxazolin-1-yl, 2,3-Isothiazolin-1-yl, 3,4-Isothiazolin-1-yl, 4,5-Isothiazolin-1-yl, 2,3-Dihydropyrazol-1-yl, 3,4-Dihydropyrazol-1-yl, 4,5-Dihydropyrazol-1-yl, 2,3-Dihydrooxazol-1-yl, 3,4-Dihydrooxazol-1-yl, 3,4-Dihydrooxazol-1-yl, 1-Imidazolyl, 1,2,4-Oxadiazol-1-yl, 1,2,4-Thiadiazol-1-yl, 1,2,4-Triazol-1-yl, 1,3,4-Oxadiazol-1-yl, 1,3,4-Thiadiazol-1-yl und 1,3,4-Triazol-1-yl, 1-Piperidinyl, 1-Tetrahydropyridazinyl, 1-Tetrahydropyrimidinyl, 1-Tetrahydropyrazinyl, 1,3,5-Tetrahydro-triazin-1-yl und 1,2,4-Tetrahydrotriazin-1-yl, 1-Pyrolyl, 1-Isoxazolyl, 1-Isothiazolyl, 1-Pyrazolyl, 1-Oxazolyl, 1-Thiazolyl, 1-Imidazolyl und 1,2,4-Oxadiazol-1-yl, 1,2,4-Thiadiazol-1-yl, 1,2,4-Triazol-1-yl, 1,3,4-Oxadiazol-1-yl, 1,3,4-Thiadiazol-1-yl und 1,3,4-Triazol-1-yl;
R⁷
vorzugsweise Methyl oder Ethyl;
R⁸
vorzugsweise Methyl oder Ethyl;
n
0, 1 oder 2, wobei die Reste R verschieden sein können, wenn n 2 bedeutet;
R¹
Halogen wie bei R genannt, vorzugsweise Fluor und Chlor;
Alkyl wie bei R⁷ genannt, vorzugsweise Methyl und Ethyl;
R²
Wasserstoff;
Alkyl wie bei R genannt;
Alkenyl wie bei R genannt;
Alkinyl wie bei R genannt, vorzugsweise Ethinyl;
oder Cyano,
R³ und R⁴ unabhängig voneinander
C₁-C₄-Alkyl, vorzugsweise Methyl, Ethyl und Propyl, insbesondere Methyl;
oder C₂-C₈-Alkenyl, besonders C₂-C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Di-methyl-2-butenyl, 1,1-Di-methyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl;
wobei diese Reste ein bis neun Halogenatome wie Fluor, Chlor, Brom und Iod, vorzugsweise Fluor oder Chlor, insbesondere Fluor,
und/oder eine der folgenden Gruppen tragen können:
C₃-C₈-Cycloalkyl wie Cyclopropyl, Cyclobutyl, Cyclopentyl, Cyclohexyl, Cycloheptyl und Cyclooctyl, insbesondere Cyclopropyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, insbesondere Methoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, insbesondere Trifluormethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethylthio, insbesondere Methylthio;
C₁-C₄-Halogenalkylthio, besonders C₁-C₂-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, insbesondere Trifluormethylthio;
Phenyl, Phenoxy und Phenylthio, wobei die aromatischen Gruppen ihrerseits ein bis fünf Halogenatome wie Fluor, Chlor, Brom und Iod, vorzugsweise Fluor und Chlor, und/oder ein bis drei der folgenden Gruppen tragen können:
C₁-C₄-Alkyl wie Methyl, Ethyl, Propyl, 1-Methylethyl, Butyl, 1-Methylpropyl, 2-Methylpropyl und 1,1-Dimethylethyl, vorzugsweise Methyl, Ethyl und Propyl;
C₁-C₄-Halogenalkyl, besonders C₁-C₂-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, insbesondere Trifluormethyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, vorzugsweise Methoxy, Ethoxy und Propyloxy, insbesondere Methoxy und Ethoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, vorzugsweise Trifluormethoxy und Pentafluorethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethyl-thio, vorzugsweise Methylthio und Ethylthio;
oder C₁-C₄-Halogenalkylthio, besonders C₁-C₂-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, vorzugsweise Trifluormethylthio und Pentafluorethylthio;
C₃-C₈-Cycloalkyl wie vorstehend im allgemeinen und im besonderen genannt, welches ein bis drei der folgenden Gruppen tragen kann: Halogen wie Fluor, Chlor, Brom und Iod, vorzugsweise Fluor und Chlor;
C₁-C₄-Alkyl wie Methyl, Ethyl, Propyl, 1-Methylethyl, Butyl, 1-Methylpropyl, 2-Methylpropyl und 1,1-Dimethylethyl, insbesondere Methyl;
C₁-C₄-Halogenalkyl, besonders C₁-C₂-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl,
2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, insbesondere Trifluormethyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, insbesondere Methoxy und Ethoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und fluorethyloxy, insbesondere Trifluormethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethylthio, insbesondere Methylthio und Ethylthio;
und C₁-C₄-Halogenalkylthio, besonders C₁-C₂-Halogenalkylthio wie Chlormethylthio, Dichlormethylthio, Trichlormethylthio, Fluormethylthio, fluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, insbesondere Trifluormethylthio;
Phenyl, Naphthyl, Pyridyl oder Pyrimidyl, wobei die aromatischen Reste ein bis sieben Halogenatome wie Fluor, Chlor, Brom und Iod, vorzugsweise Fluor und Chlor, insbesondere Fluor;
und/oder ein bis vier der folgenden Gruppen tragen können:
C₁-C₄-Alkyl wie Methyl, Ethyl, Propyl, 1-Methylethyl, Butyl, 1-Methylpropyl, 2-Methylpropyl und 1,1-Dimethylethyl, vorzugsweise Methyl, Ethyl und Propyl, insbesondere Methyl;
C₁-C₄-Halogenalkyl, besonders C₁-C₂-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl,
2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, vorzugsweise Trifluormethyl und Pentafluorethyl, insbesondere Trifluormethyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, vorzugsweise Methoxy, Ethoxy und Propyloxy, insbesondere Ethoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy,insbesondere Trifluormethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethylthio, insbesondere Ethylthio;
und C₁-C₄-Halogenalkylthio, besonders C₁-C₂-Halogenalkylthio wie Chlormethylthio, Dichlormethylthio, Trichlormethylthio, 1-Fluorethylthio, 2-Fluorethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, insbesondere Trifluormethylthio;
oder R³ und R⁴ gemeinsam
C₂-C₅-Alkylen wie Ethylen (-CH₂CH₂-), Propylen (-CH₂CH₂CH₂-), Butylen (-CH₂CH₂CH₂CH₂-) und Pentylen (-CH₂CH₂CH₂CH₂CH₂-), welches ein bis drei C₁-C₃-Alkylgruppen wie Methyl, Ethyl, Propyl und 1-Methylethyl, tragen kann, vorzugsweise Butylen und Pentylen;
R⁵
Wasserstoff;
C₅-C₁₈-Alkyl, besonders C₁-C₆-Alkyl wie Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl;
wobei dieser Rest ein bis neun Halogenatome wie Fluor, Chlor, Brom und Iod, vorzugsweise Fluor oder Chlor, insbesondere Fluor,
und/oder eine der folgenden Gruppen tragen kann:
C₃-C₈-Cycloalkyl wie Cyclopropyl, Cyclobutyl, Cyclopentyl, Cyclohexyl, Cycloheptyl und Cyclooctyl, insbesondere Cyclopropyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, insbesondere Methoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, insbesondere Trifluormethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethylthio, insbesondere Methylthio;
C₁-C₄-Halogenalkylthio, besonders C₁-C₂-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, insbesondere Trifluormethylthio;
Phenyl, Phenoxy und Phenylthio, wobei die aromatischen Gruppen ihrerseits ein bis fünf Halogenatome wie Fluor, Chlor, Brom und Iod, vorzugsweise Fluor und Chlor, und/oder ein bis drei der folgenden Gruppen tragen können:
C₁-C₄-Alkyl wie Methyl, Ethyl, Propyl, 1-Methylethyl, Butyl, 1-Methylpropyl, 2-Methylpropyl und 1,l-Dimethylethyl, vorzugsweise Methyl, Ethyl und Propyl;
C₁-C₄-Halogenalkyl, besonders C₁-C₂-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, insbesondere Trifluormethyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, vorzugsweise Methoxy, Ethoxy und Propyloxy, insbesondere Methoxy und Ethoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, vorzugsweise Trifluormethoxy und Pentafluorethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethylthio, vorzugsweise Methylthio und Ethylthio;
oder C₁-C₄-Halogenalkylthio, besonders C₁-C₂-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, vorzugsweise Trifluormethylthio und Pentafluorethylthio;
oder eine der im allgemeinen und im besonderen für R³ genannten Gruppen;
X
eine Gruppe CH₂, O, S, NH oder NR⁹, wobei
R⁹
für C₁-C₄-Alkyl wie Methyl, Ethyl, Propyl, 1-Methylethyl, Butyl, 1-Methylpropyl, 2-Methylpropyl und 1,1-Dimethylethyl steht, vorzugsweise Methyl und Ethyl, insbesondere Methyl;
für C₃-C₆-Cycloalkyl wie Cyclopropyl, Cyclobutyl, Cyclopentyl und Cyclohexyl steht, insbesondere Cyclopropyl;
für C₂-C₄-Alkenyl wie Ethenyl, 2-Propenyl, 2-Butenyl und 3-Butenyl steht, insbesondere 2-Propenyl;
für C₂-C₄-Alkinyl wie Ethinyl, 2-Propinyl, 2-Butinyl oder 3-Butinyl steht, insbesondere 2-Propinyl;
oder für Benzyl steht, und wobei der Benzylrest seinerseits ein bis fünf Halogenatome wie Fluor, Chlor, Brom und Iod, vorzugsweise Fluor und Chlor,
und/oder ein bis drei der folgenden Gruppen tragen kann:
C₁-C₄-Alkyl wie Methyl, Ethyl, Propyl, 1-Methylethyl, Butyl, 1-Methylpropyl, 2-Methylpropyl und 1,1-Dimethylethyl, insbesondere Methyl;
C₁-C₄-Halogenalkyl, besonders C₁-C₂-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, insbesondere Trifluormethyl;
C₁-C₄-Alkoxy wie Methoxy, Ethoxy, Propyloxy, 1-Methylethoxy, Butyloxy, 1-Methyl-propyloxy, 2-Methylpropyloxy und 1,1-Dimethylethoxy, insbesondere Methoxy und Ethoxy;
C₁-C₄-Halogenalkoxy, besonders C₁-C₂-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, insbesondere Trifluormethoxy;
C₁-C₄-Alkylthio wie Methylthio, Ethylthio, Propylthio, 1-Methylethylthio, Butylthio, 1-Methyl-propylthio, 2-Methylpropylthio und 1,1-Dimethylethylthio, insbesondere Ethylthio;
und C₁-C₄-Halogenalkylthio, besonders C₁-C₂-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, insbesondere Trifluormethylthio.

Bevorzugt im Hinblick auf ihre biologische Wirkung zur Schädlingsbekämpfung sind solche 3-Isoxazolylphenylverbindungen der allgemeinen Formeln Ia und Ib, in denen R¹ Methyl oder Ethyl und R² Wasserstoff bedeutet.

Außerdem sind 3-Isoxazolylphenylverbindungen der allgemeinen Formel Ia und Ib bevorzugt, in denen R¹ Methyl oder Ethyl und R² Wasserstoff bedeutet und n für 0 steht.

Daneben werden 3-Isoxazolylphenylverbindungen der allgemeinen Formeln Ia und Ib bevorzugt, in denen R⁵ für Wasserstoff oder Methyl und R⁴ Methyl oder Cyclopropyl steht.

Weitere bevorzugte 3-Isoxazolylphenylverbindungen der allgemeinen Formeln Ia und Ib sind solche, in denen R³ Phenyl, Pyridinyl oder Pyrimidinyl bedeutet, wobei die aromatischen Reste ein bis fünf Halogenatome wie im allgemeinen und im besonderen vorstehend genannt und/oder ein bis drei der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio.

Außerdem werden 3-Isoxazolylphenylverbindungen der allgemeinen Formeln Ia und Ib besonders bevorzugt, in denen R⁵ für Wasserstoff oder Methyl, R⁴ für Methyl oder Cyclopropyl und R³ für Phenyl, Pyridinyl oder Pyrimidinyl steht, wobei die aromatischen Reste ein bis fünf Halogenatome wie vorstehend im allgemeinen und im besonderen genannt und/oder ein bis drei der vorstehend im allgemeinen und im besonderen genannten folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio.

Beispiele für besonders aktive Verbindungen Ia und Ib sind in der nachstehenden Tabelle wiedergegeben. Die in der Tabelle pro Zeile angegebenen Kombinationen von Substituenten beziehen sich gleichermaßen auf die Formeln Ia.1, Ia.2, Ib.1 und Ib.2:

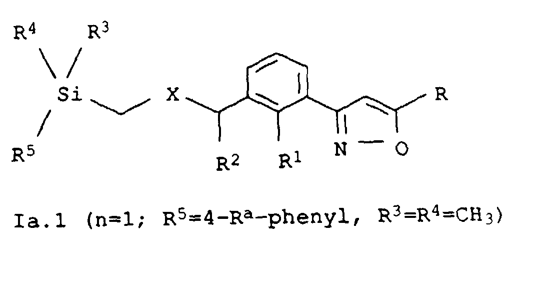

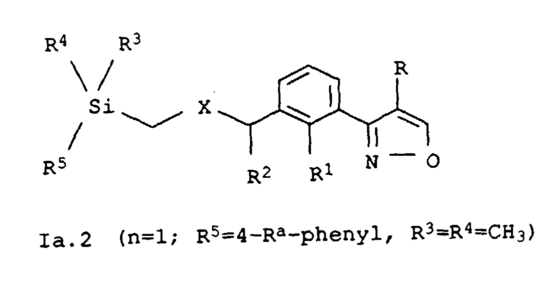

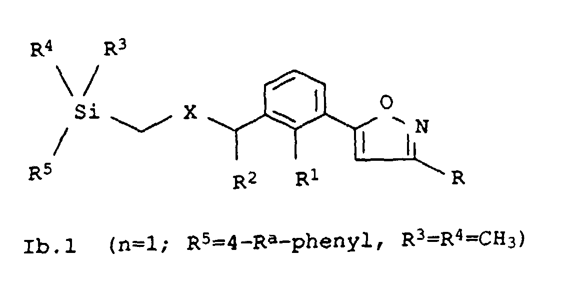

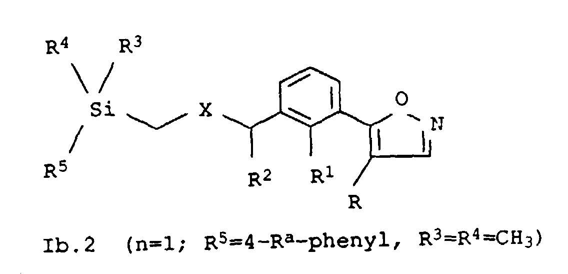

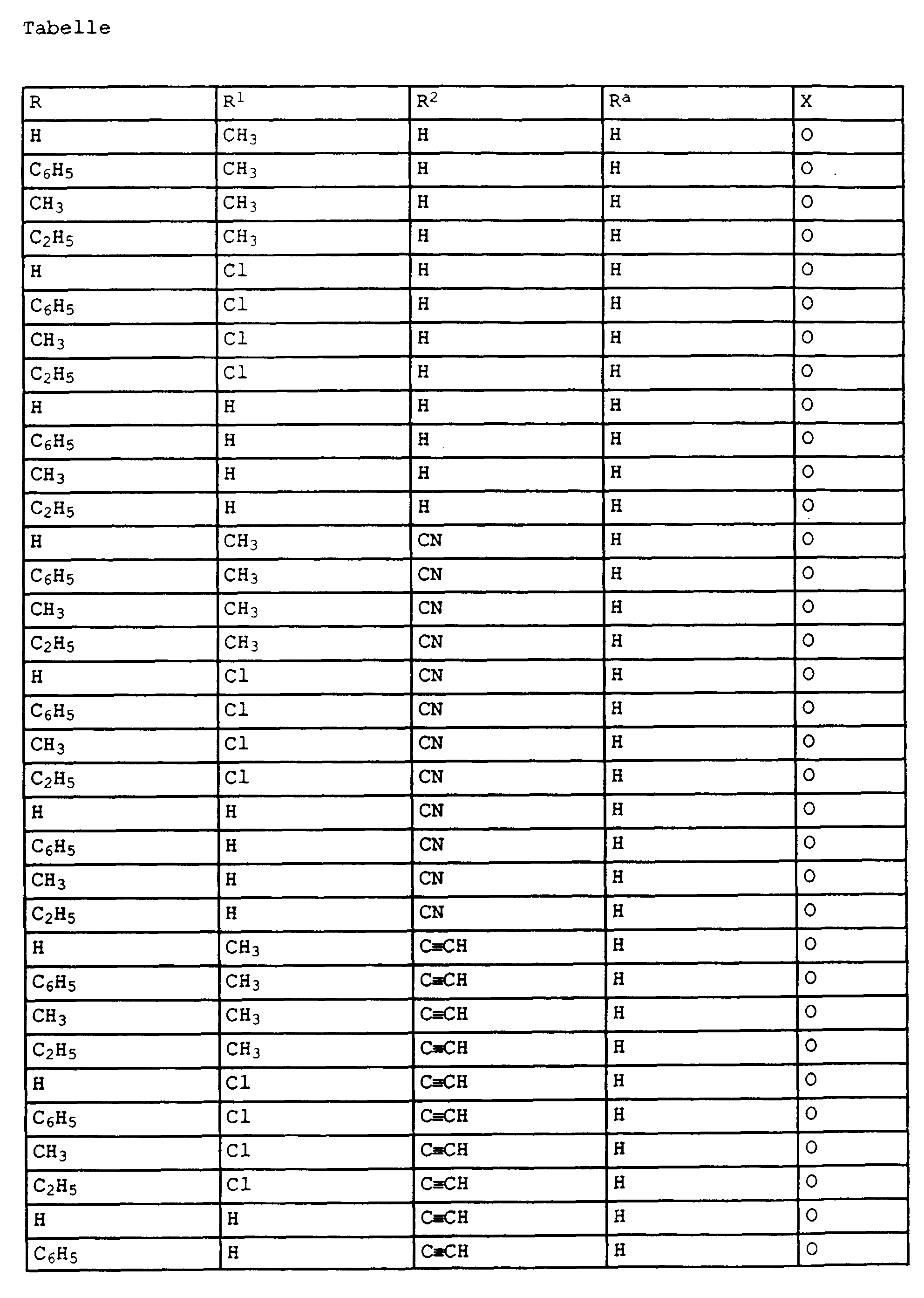

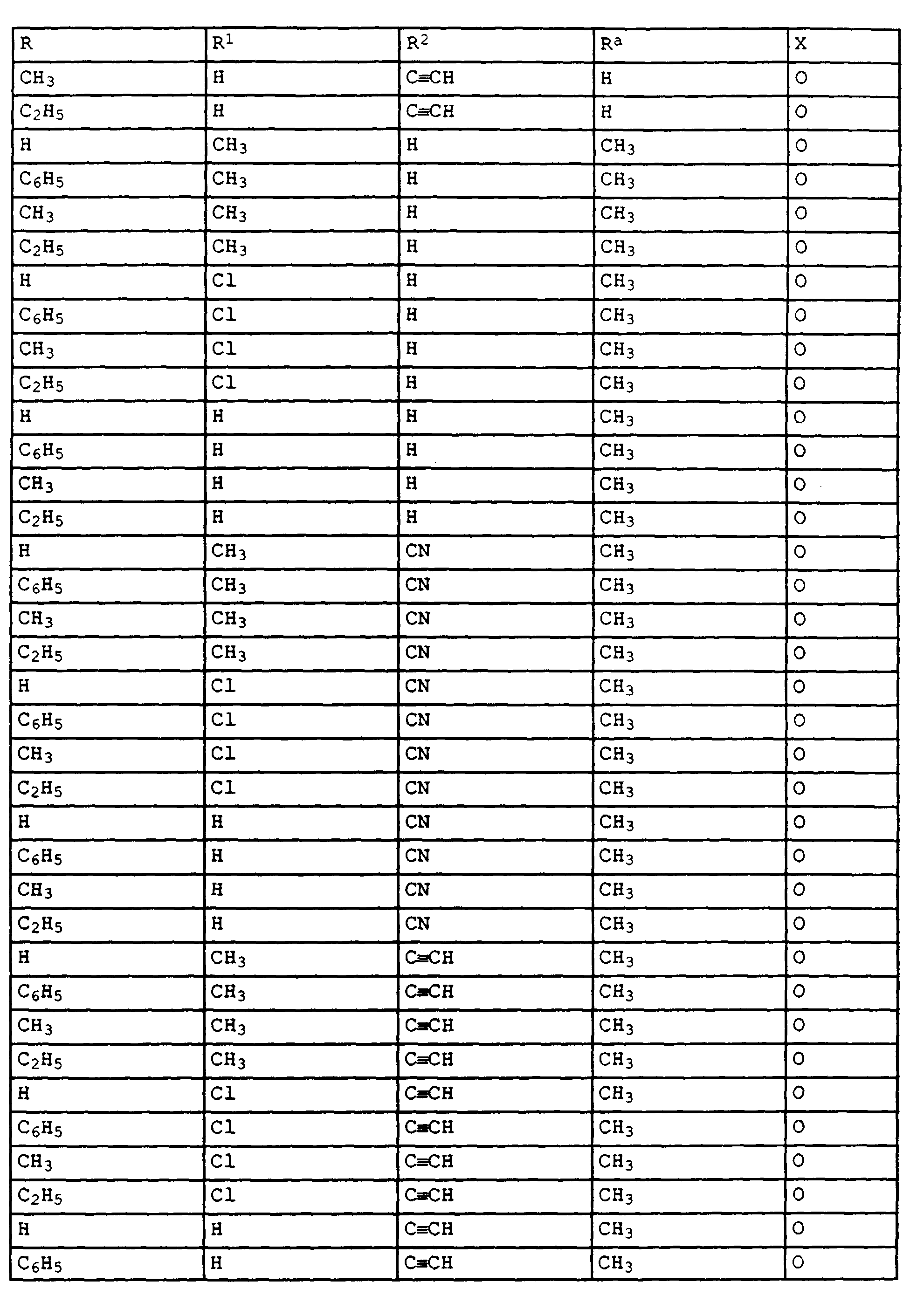

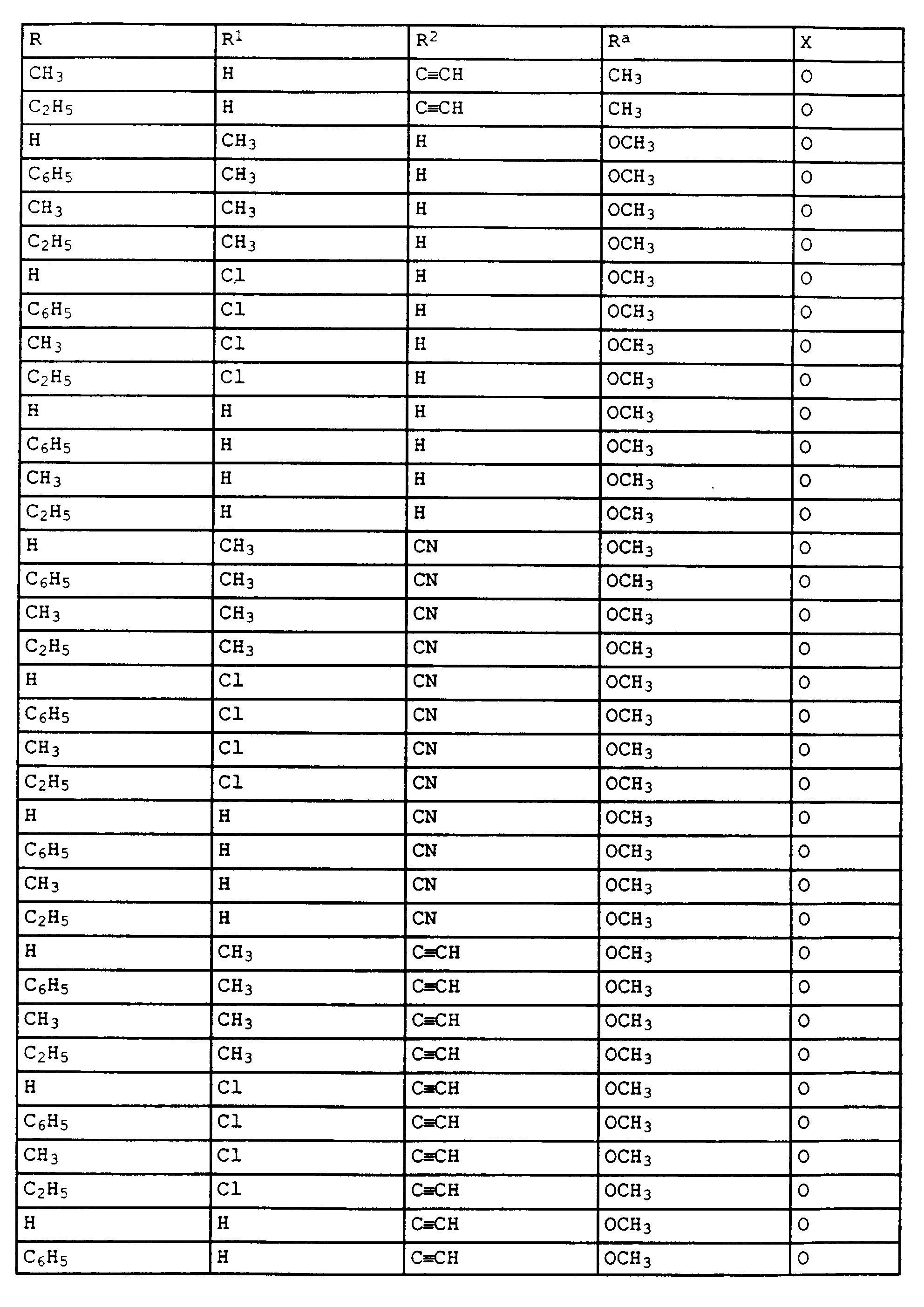

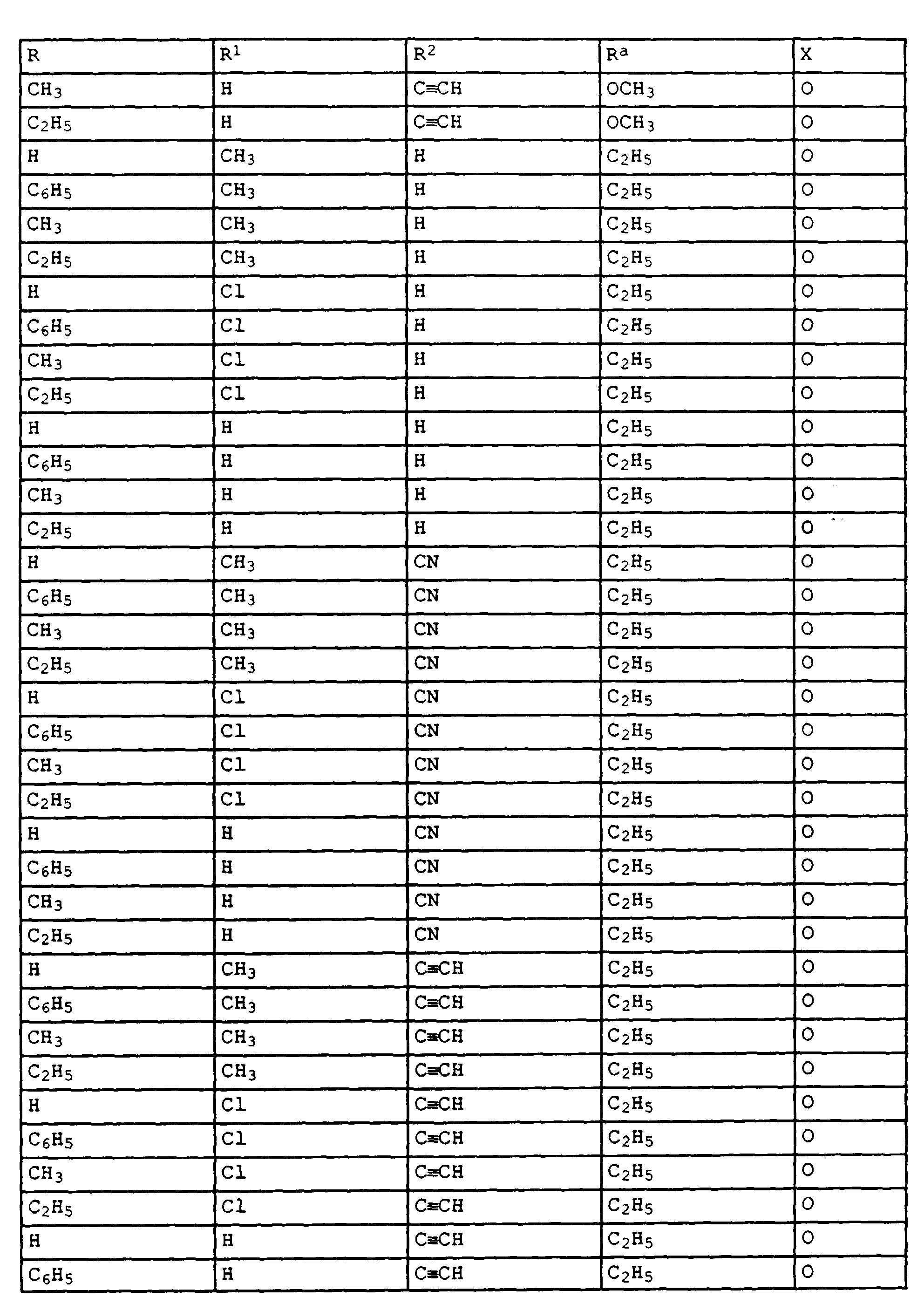

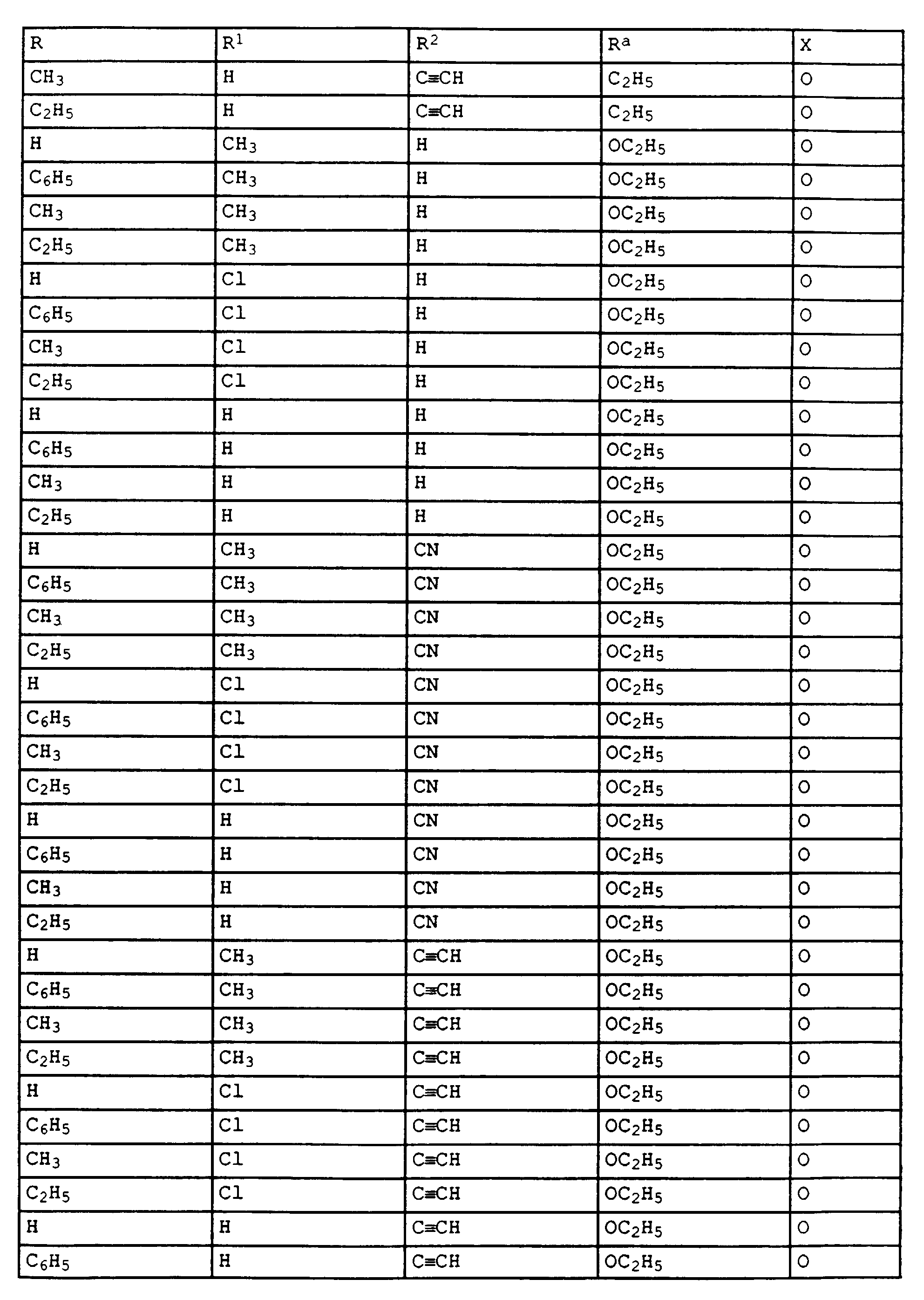

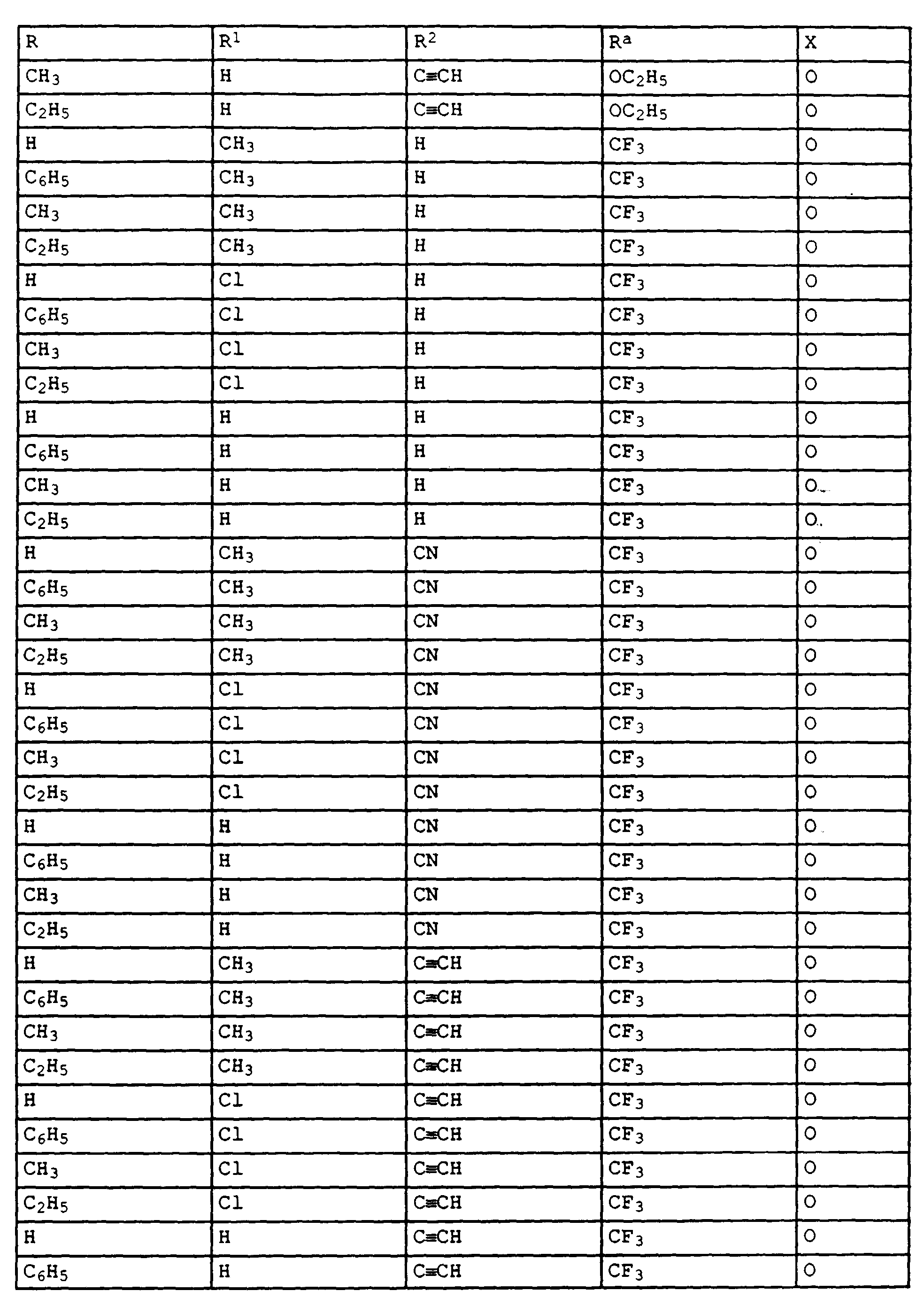

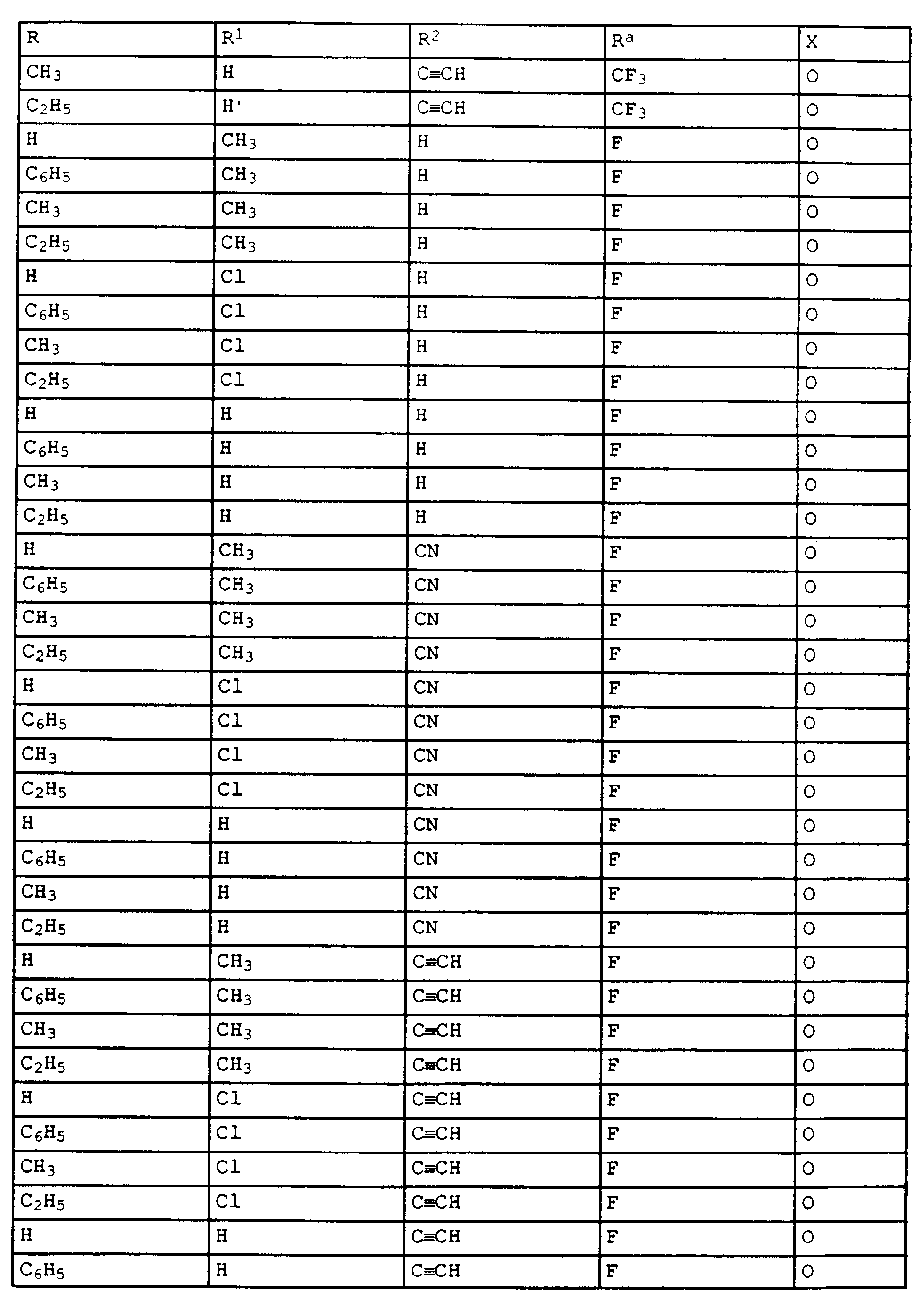

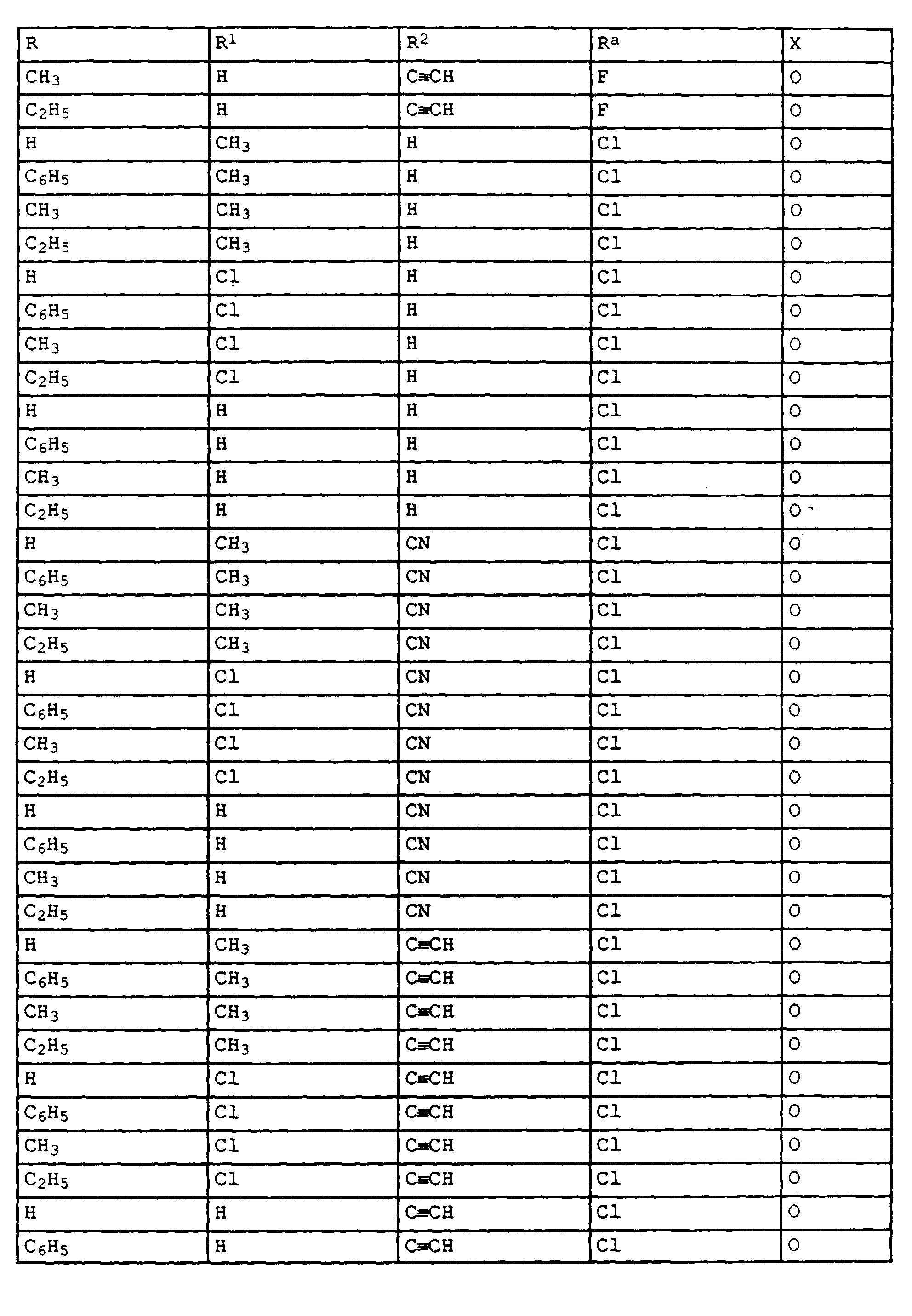

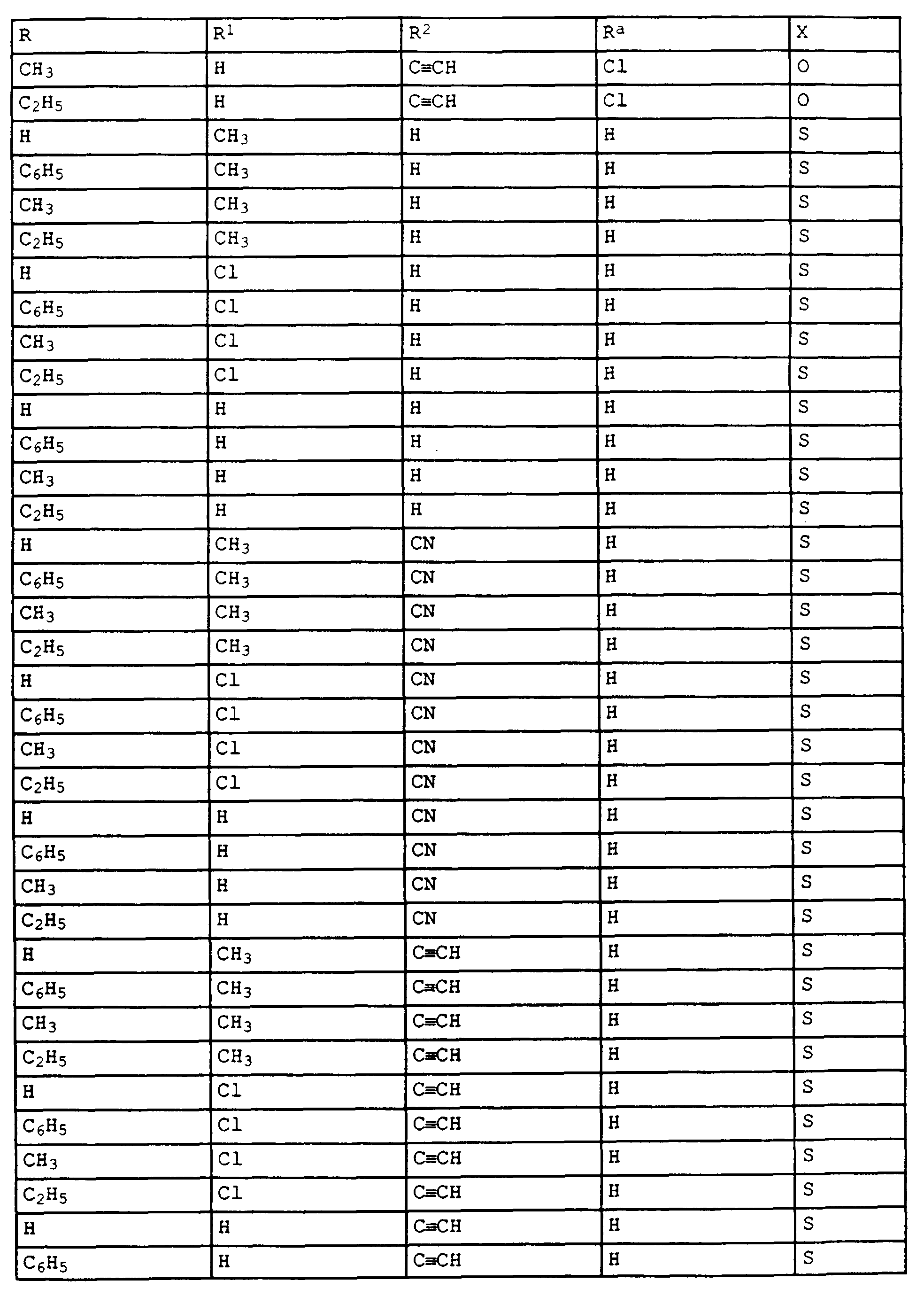

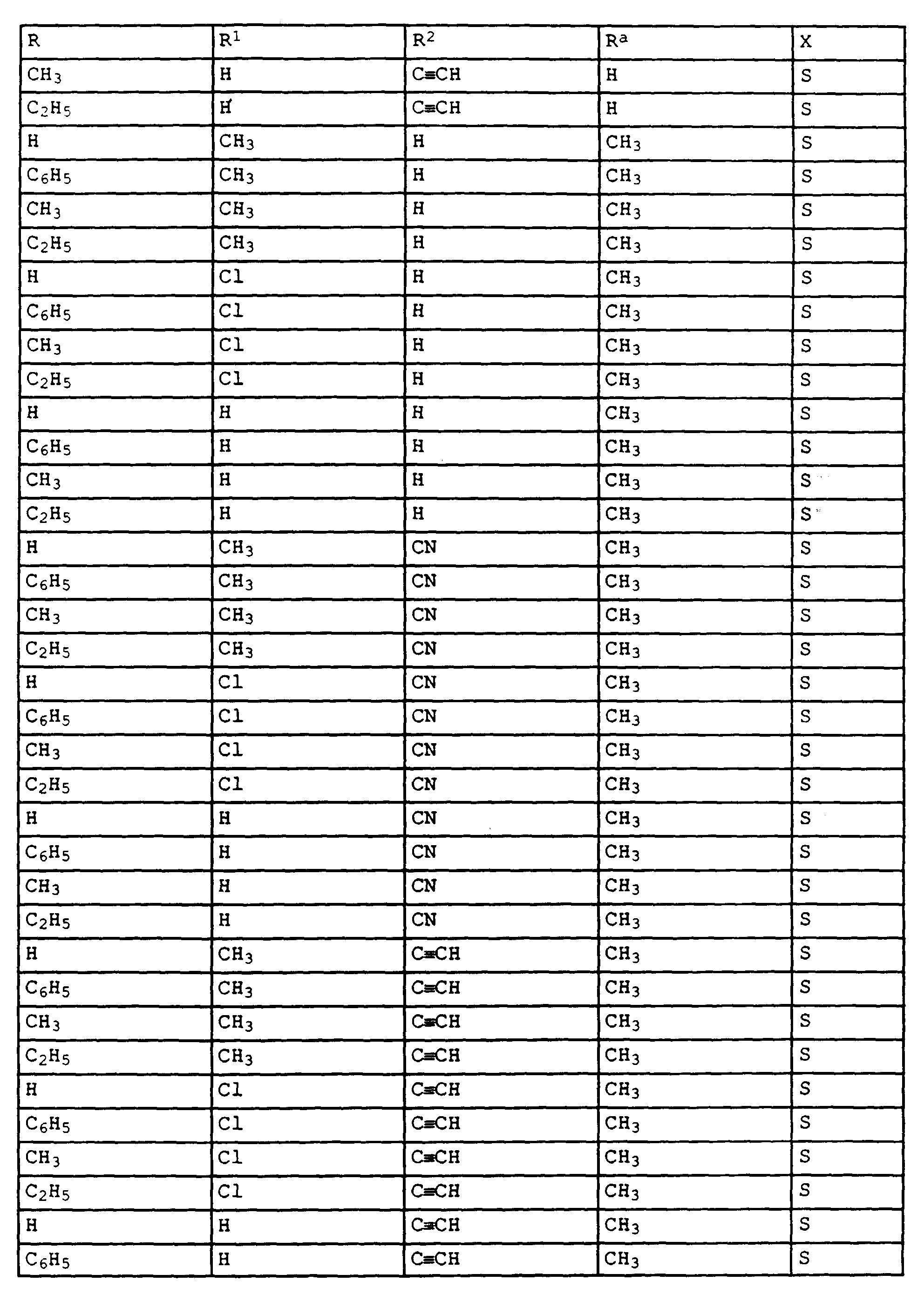

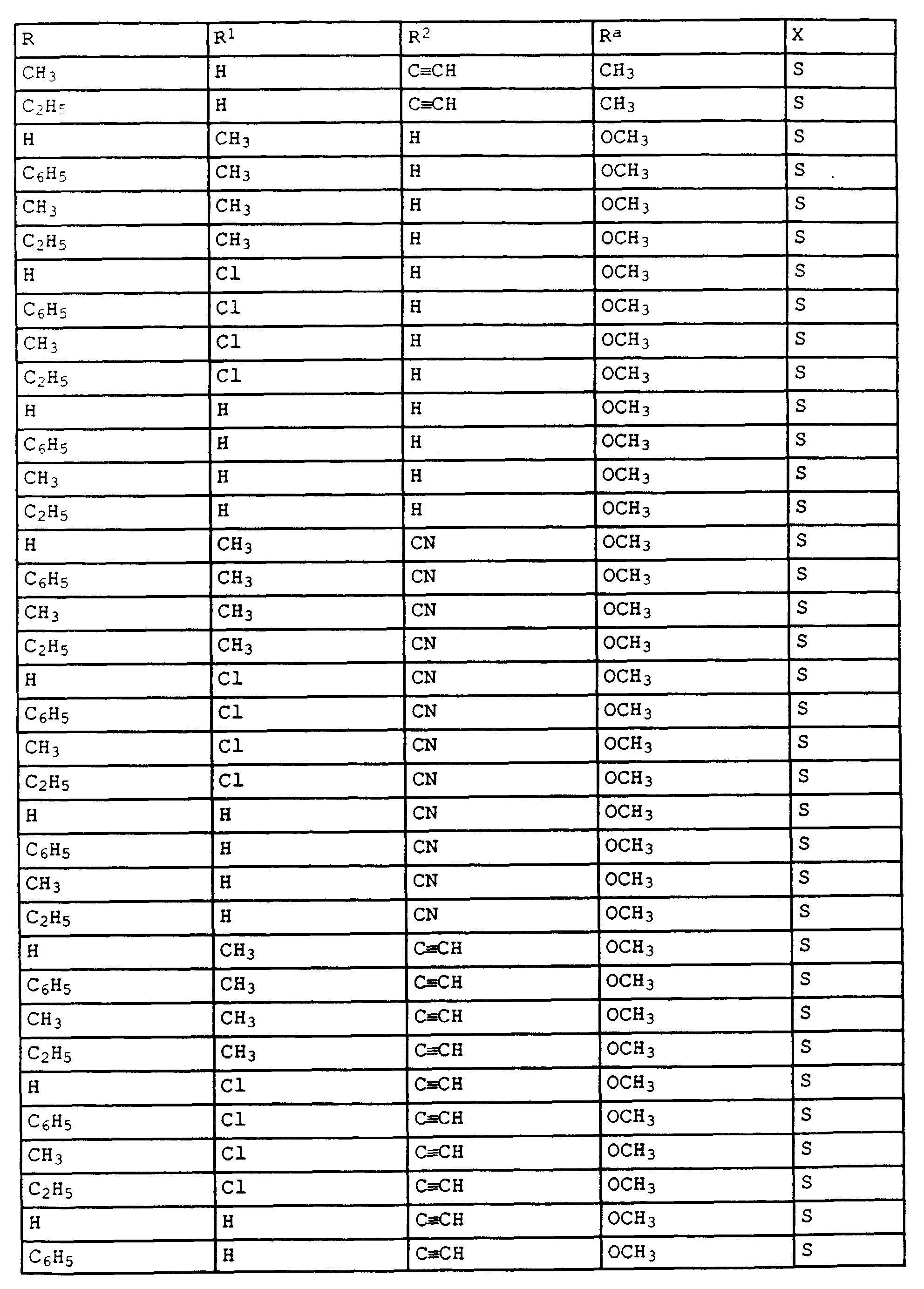

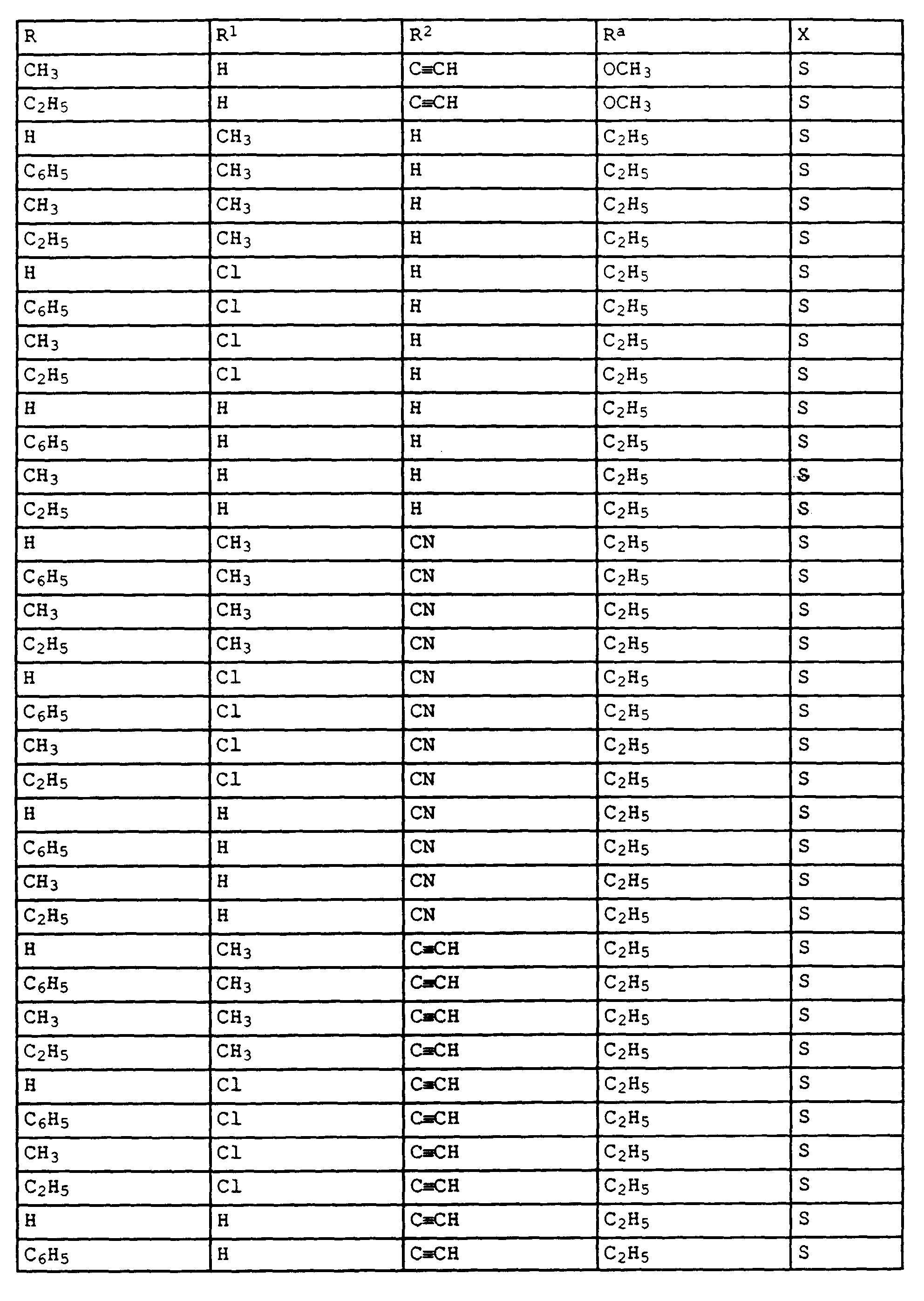

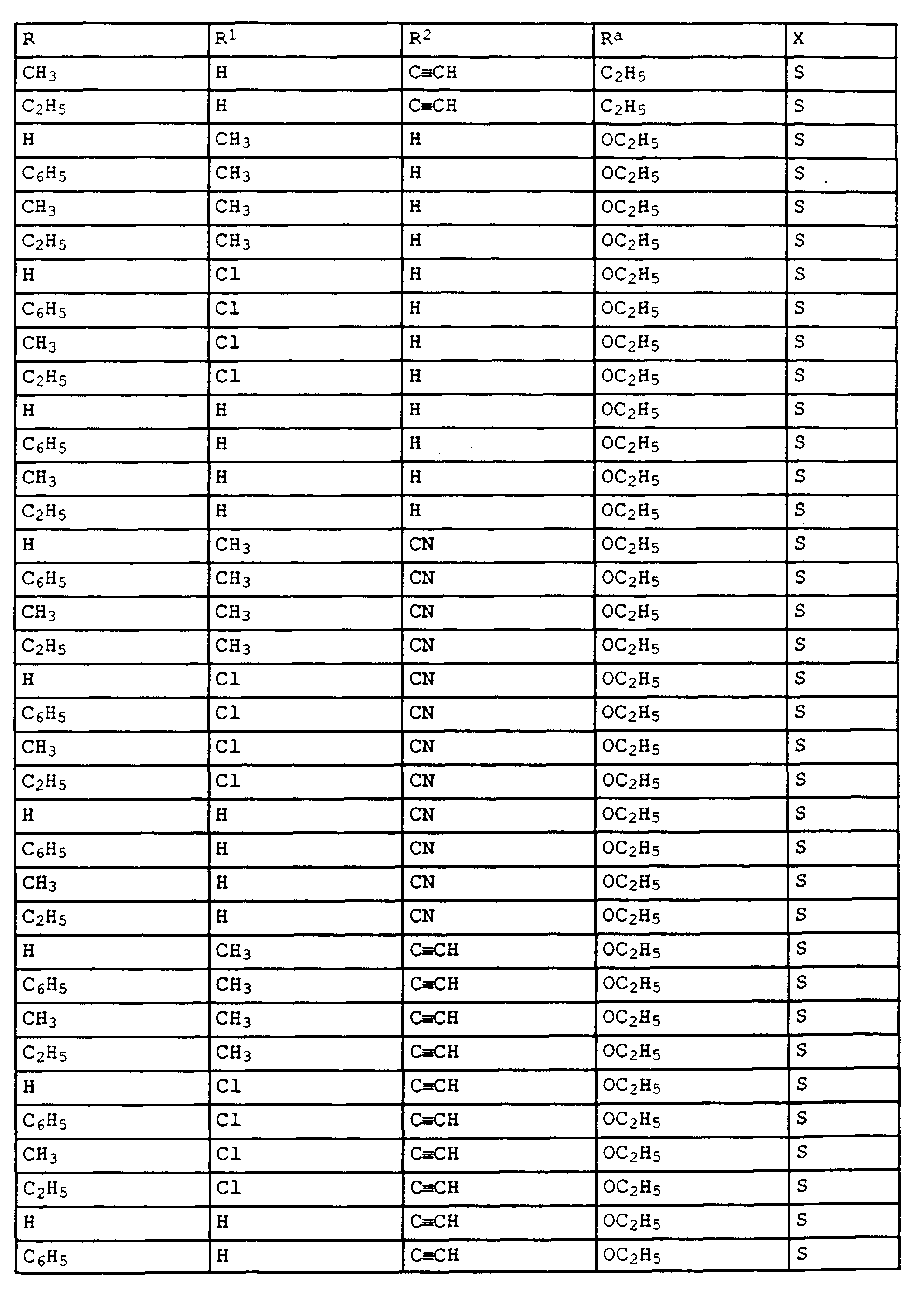

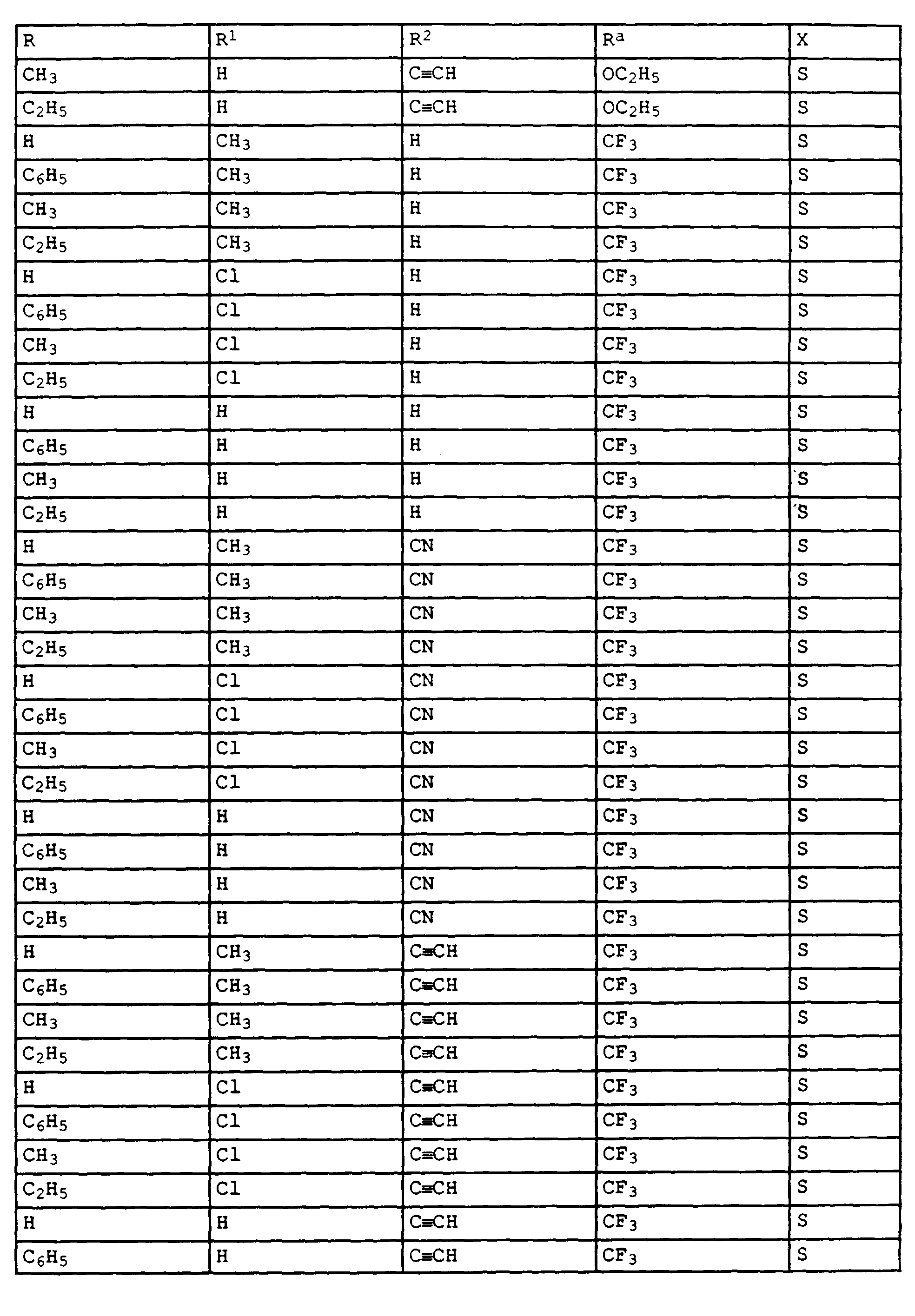

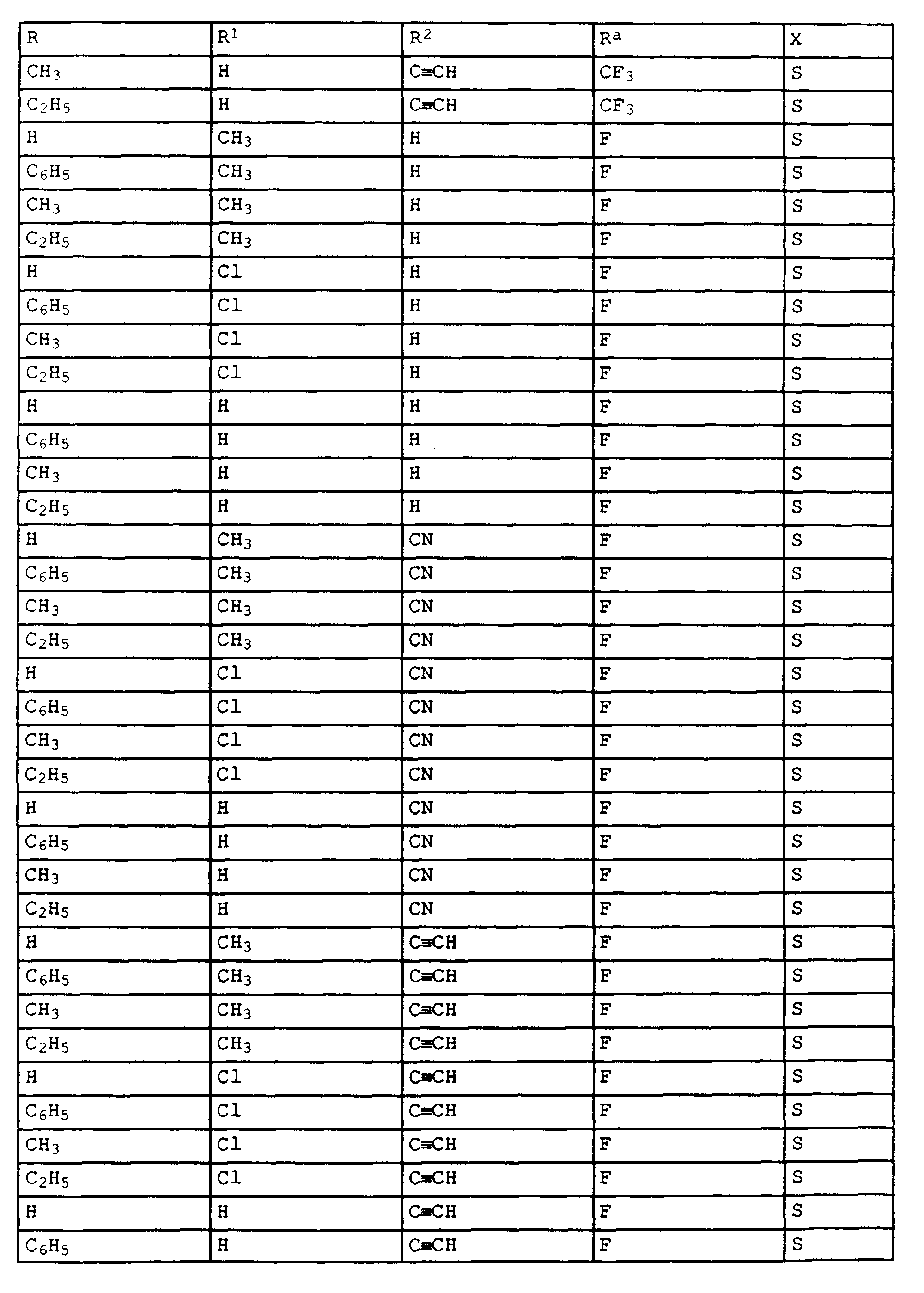

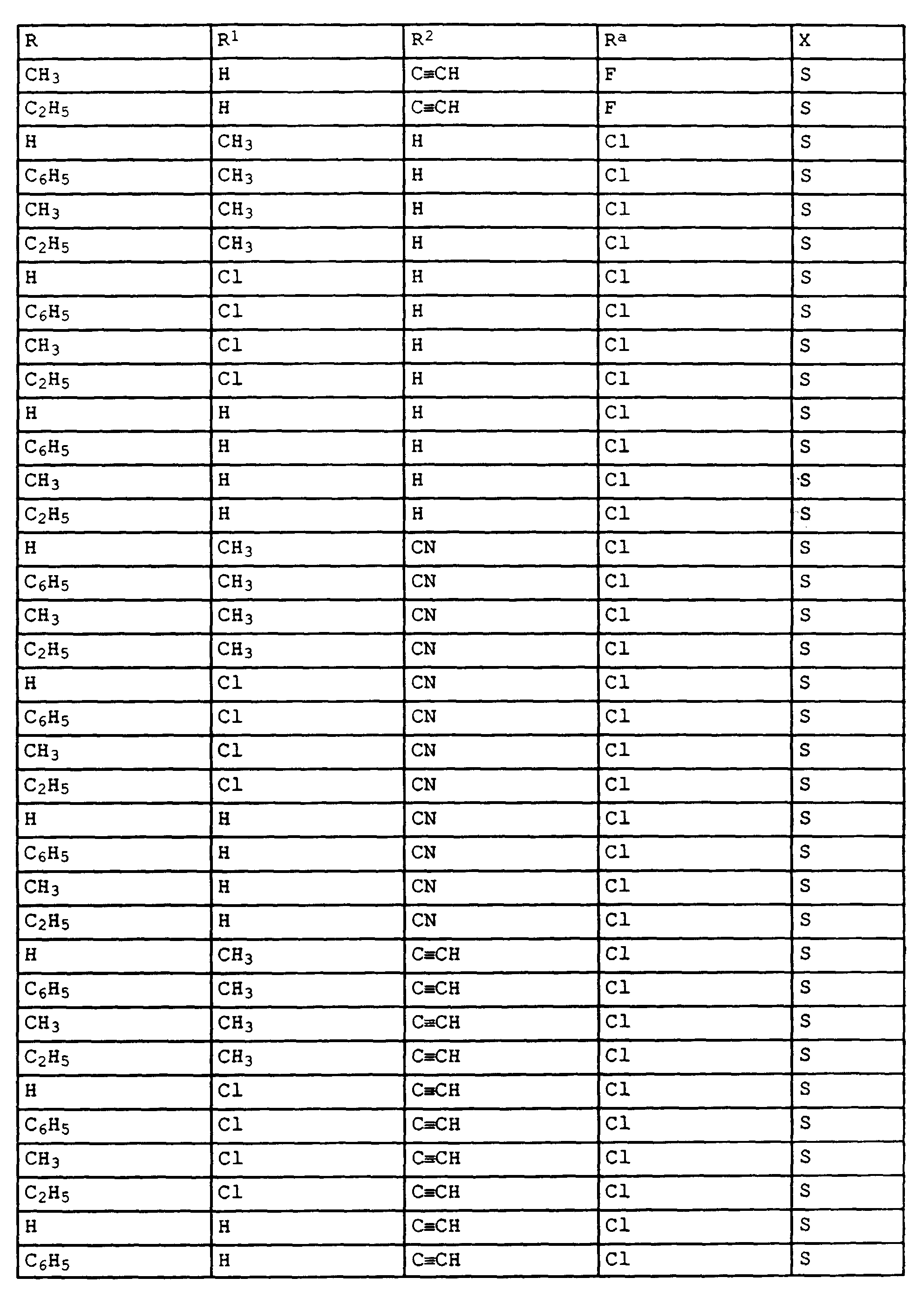

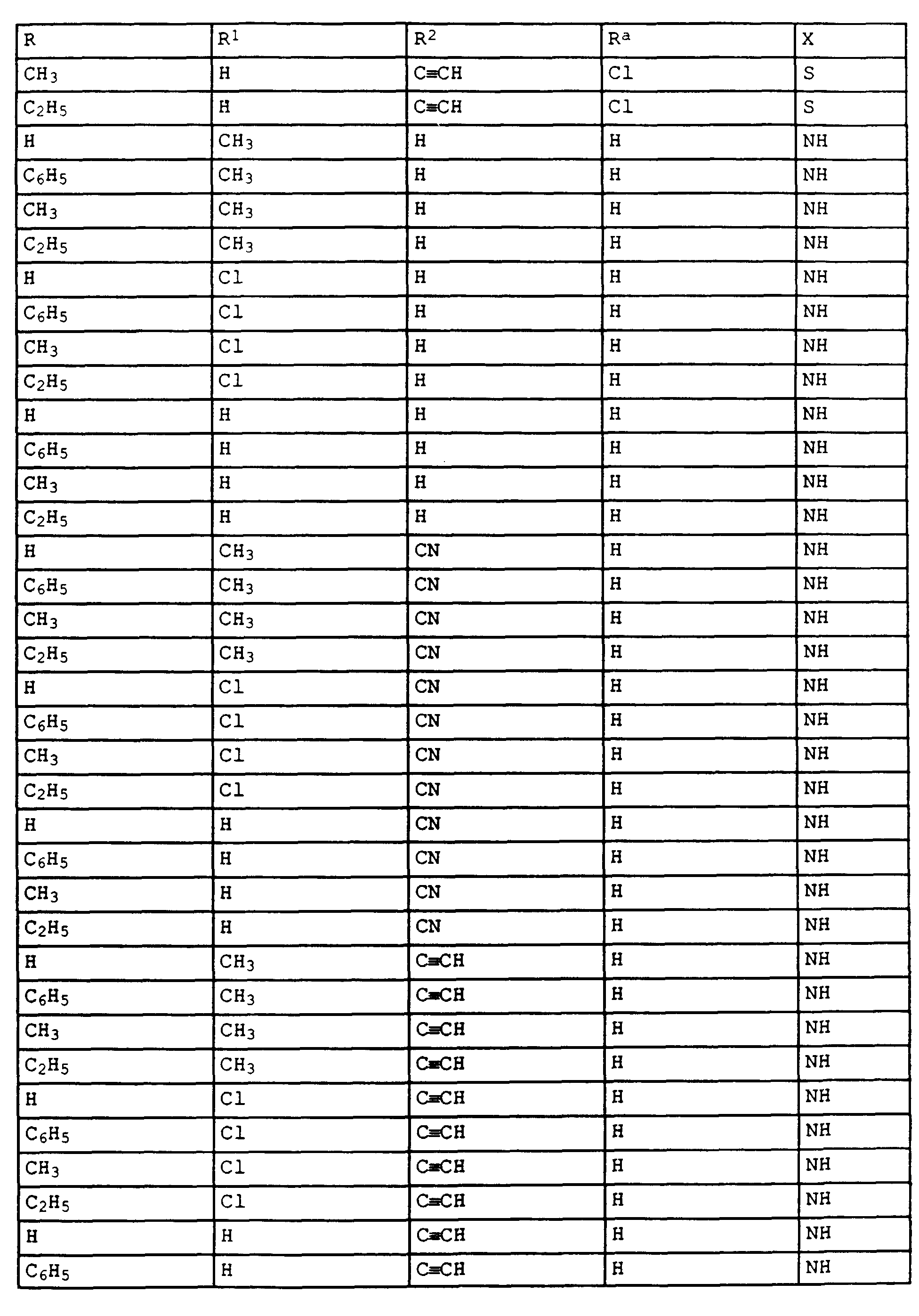

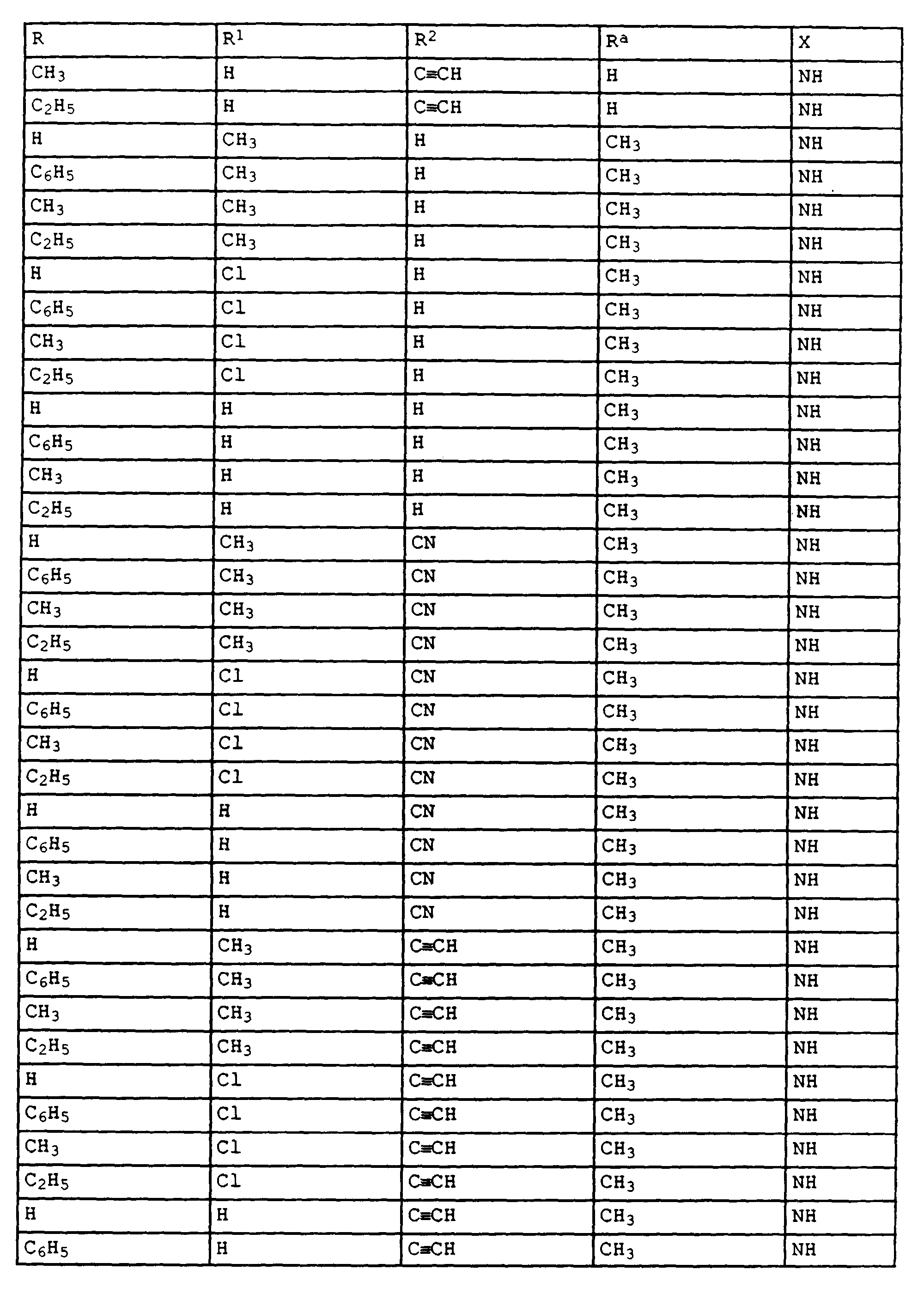

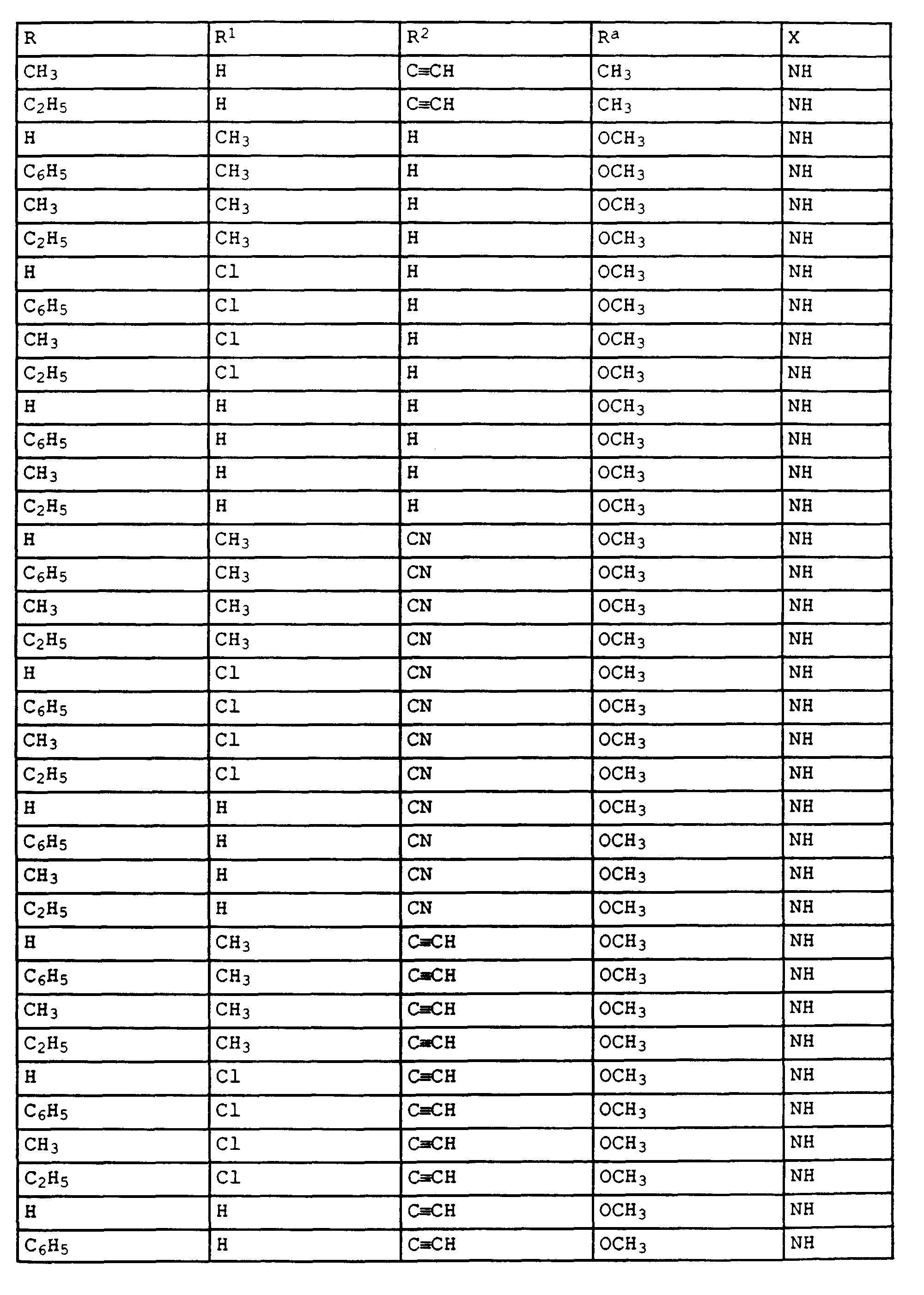

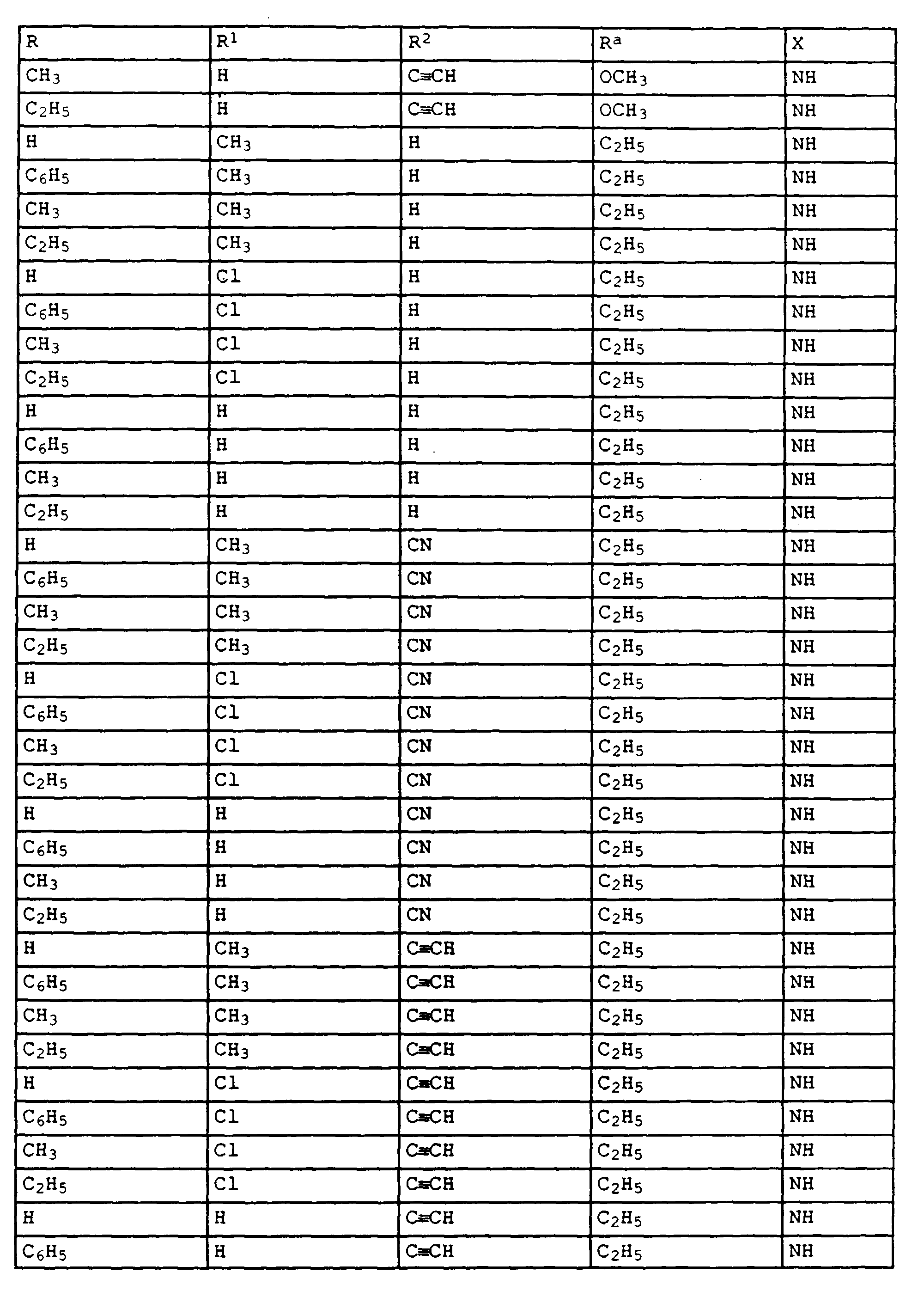

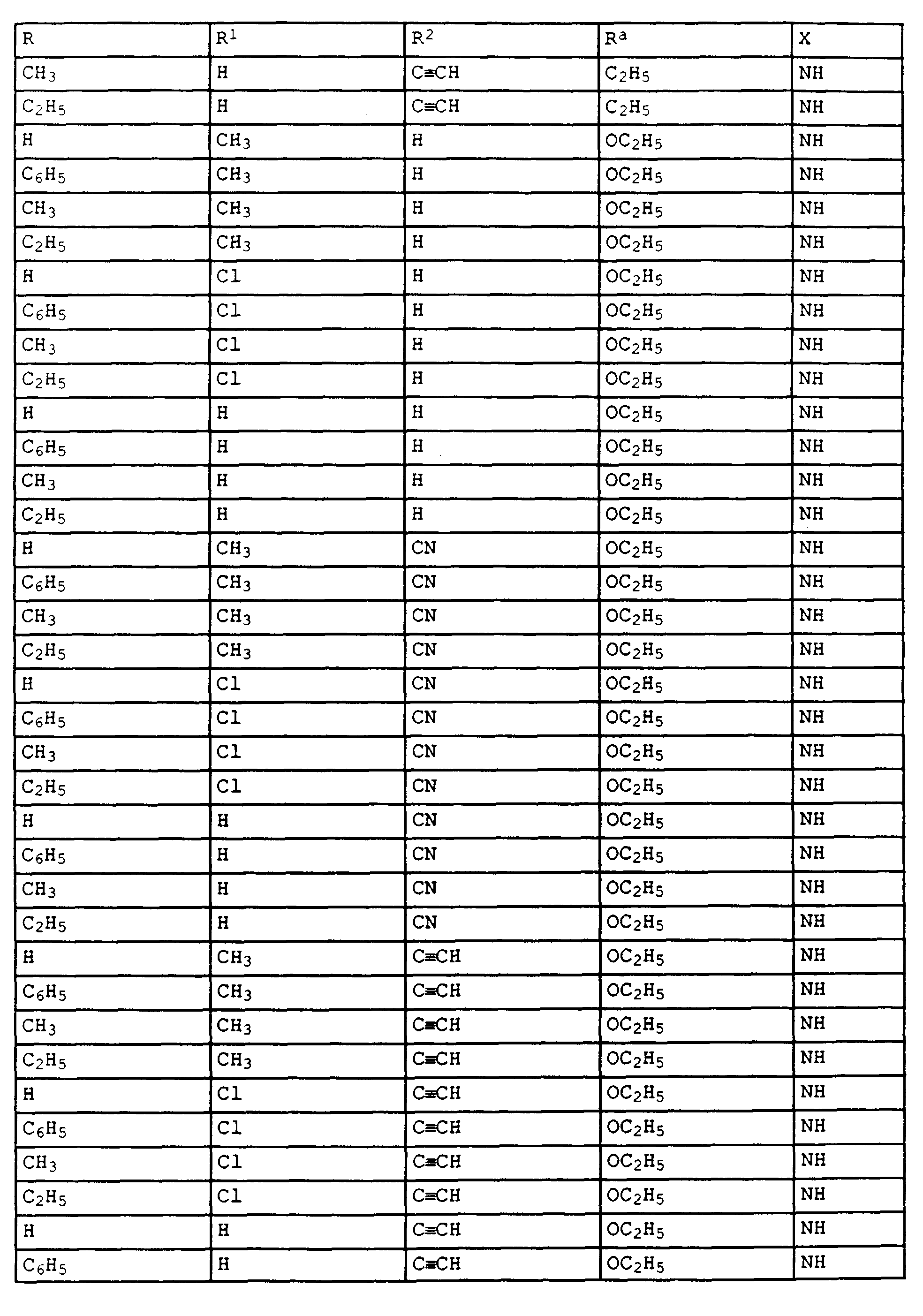

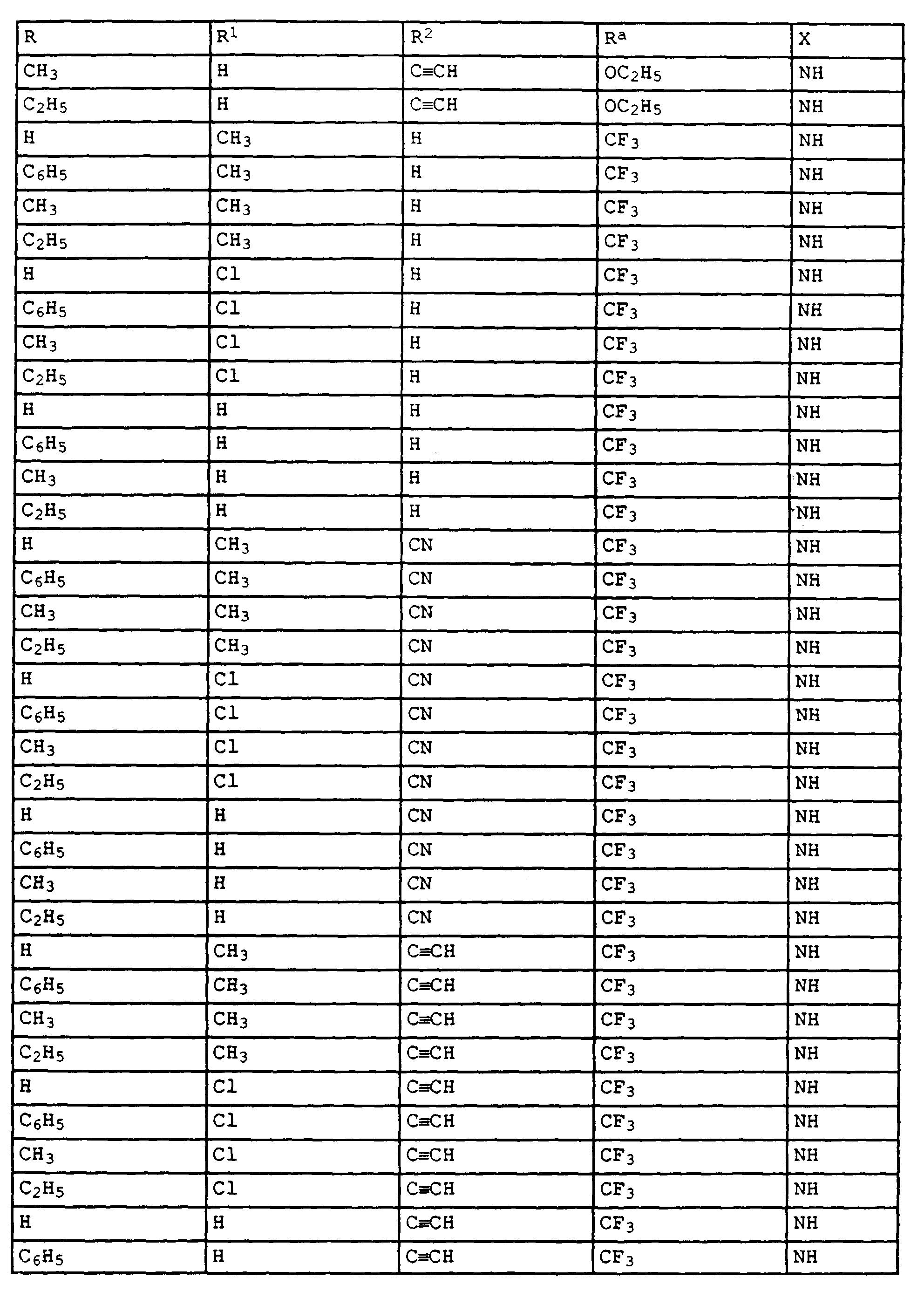

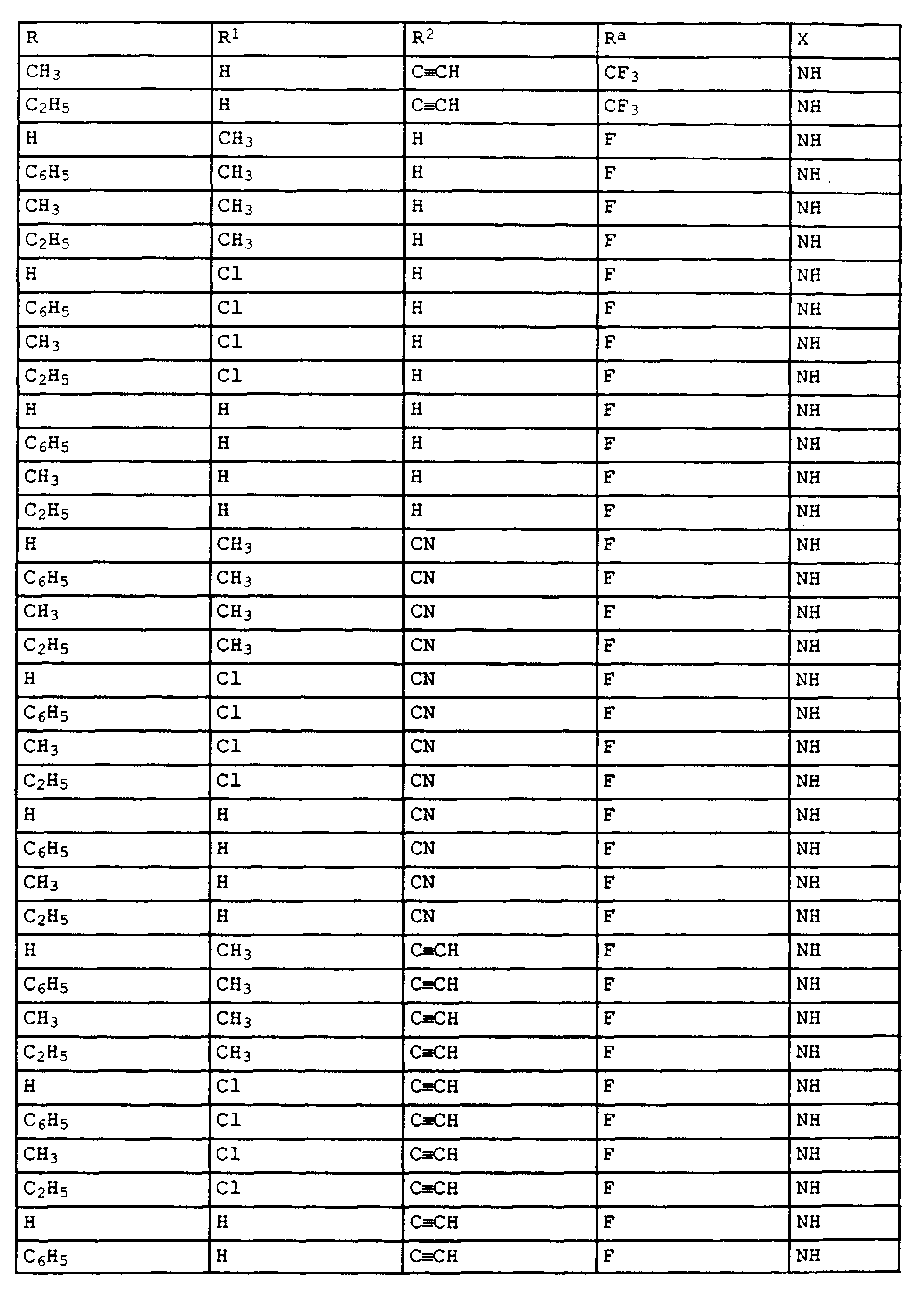

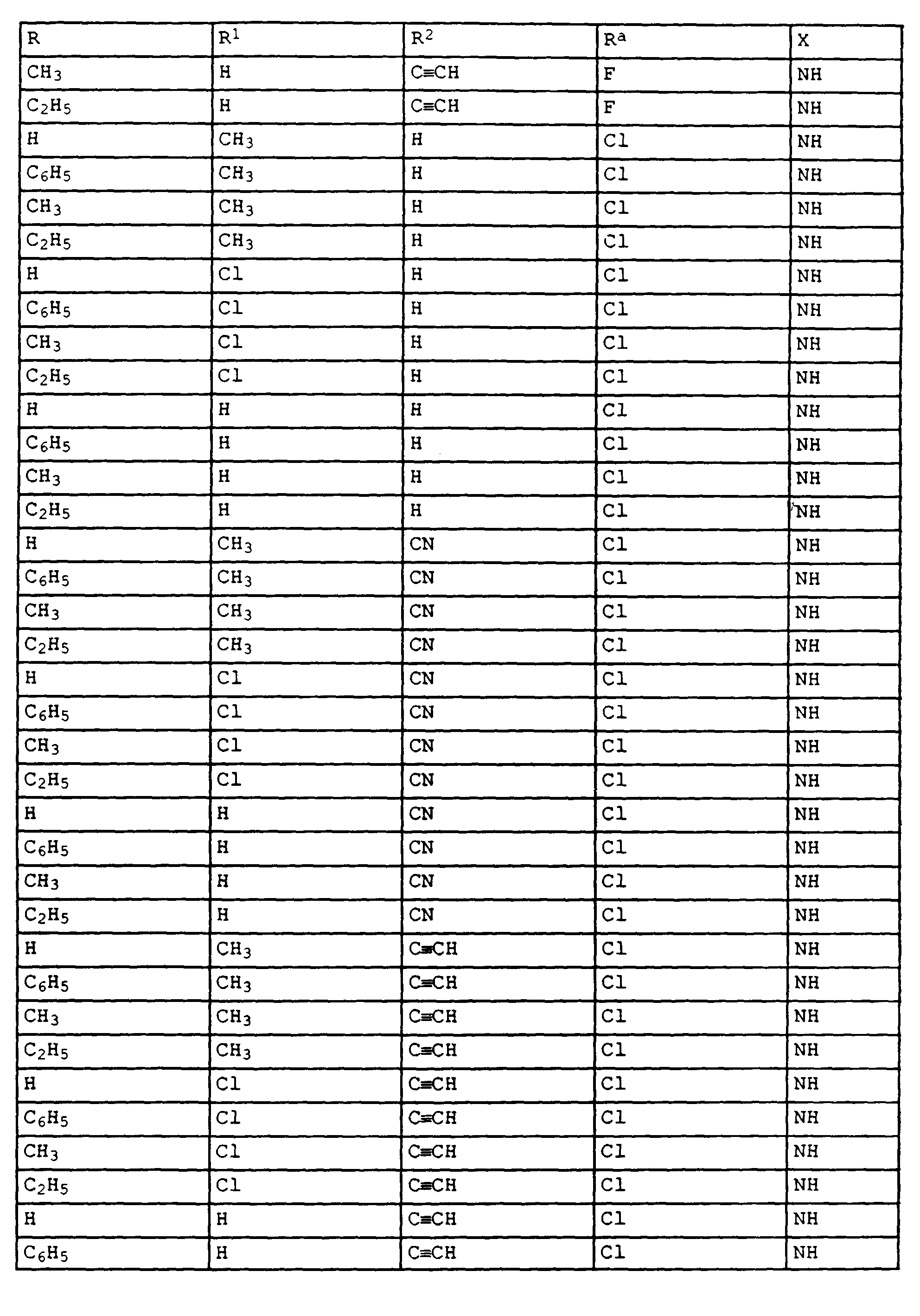

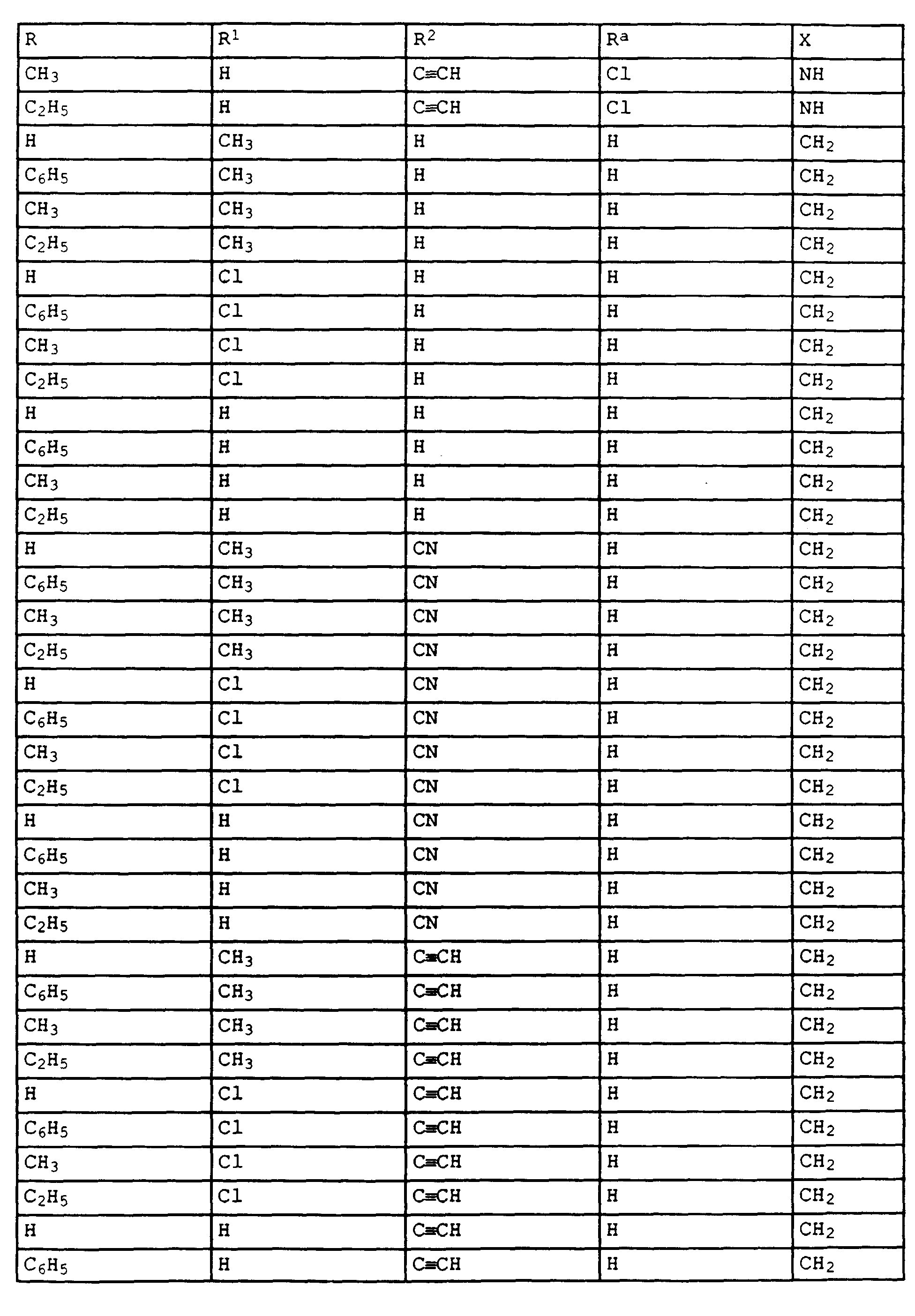

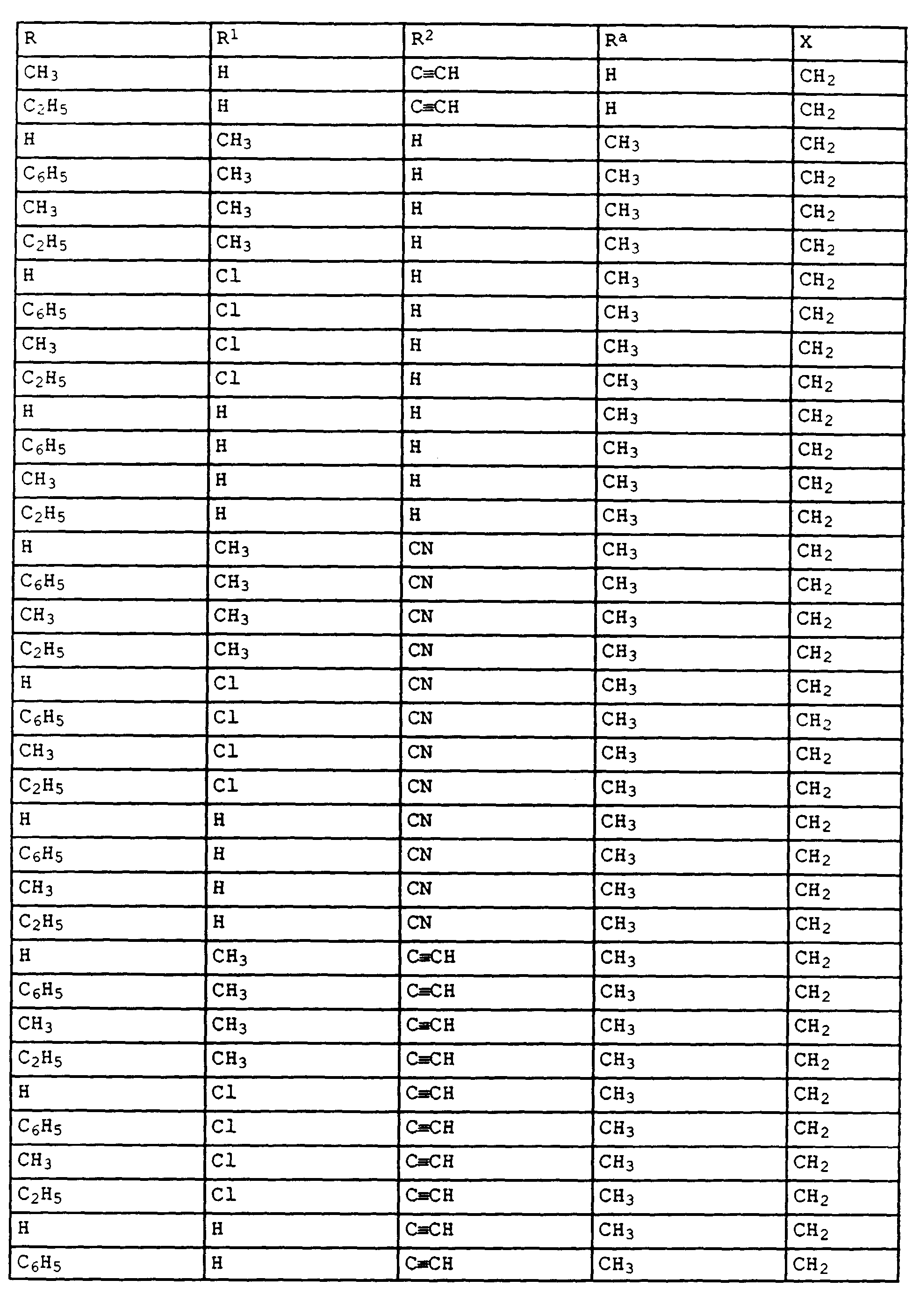

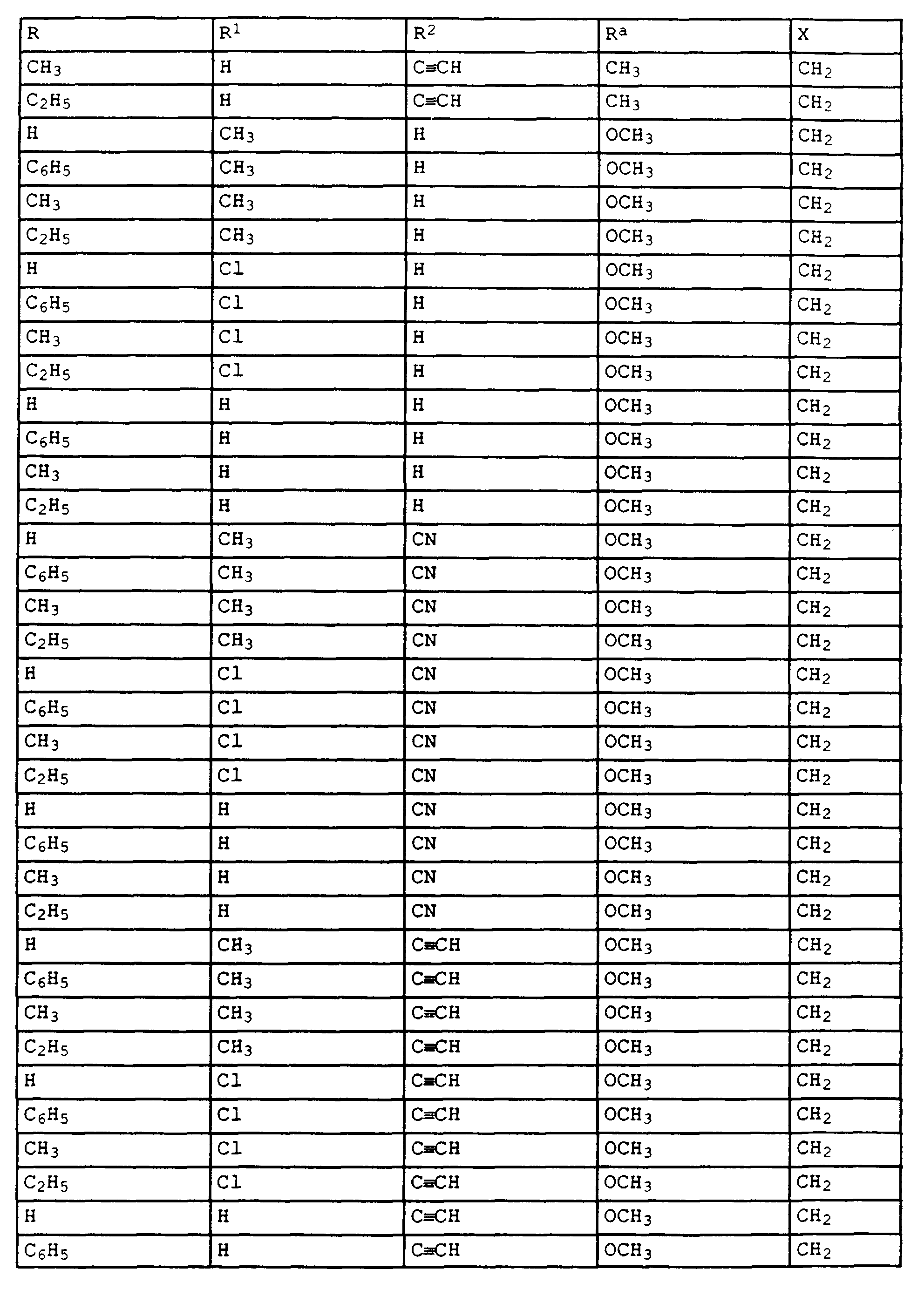

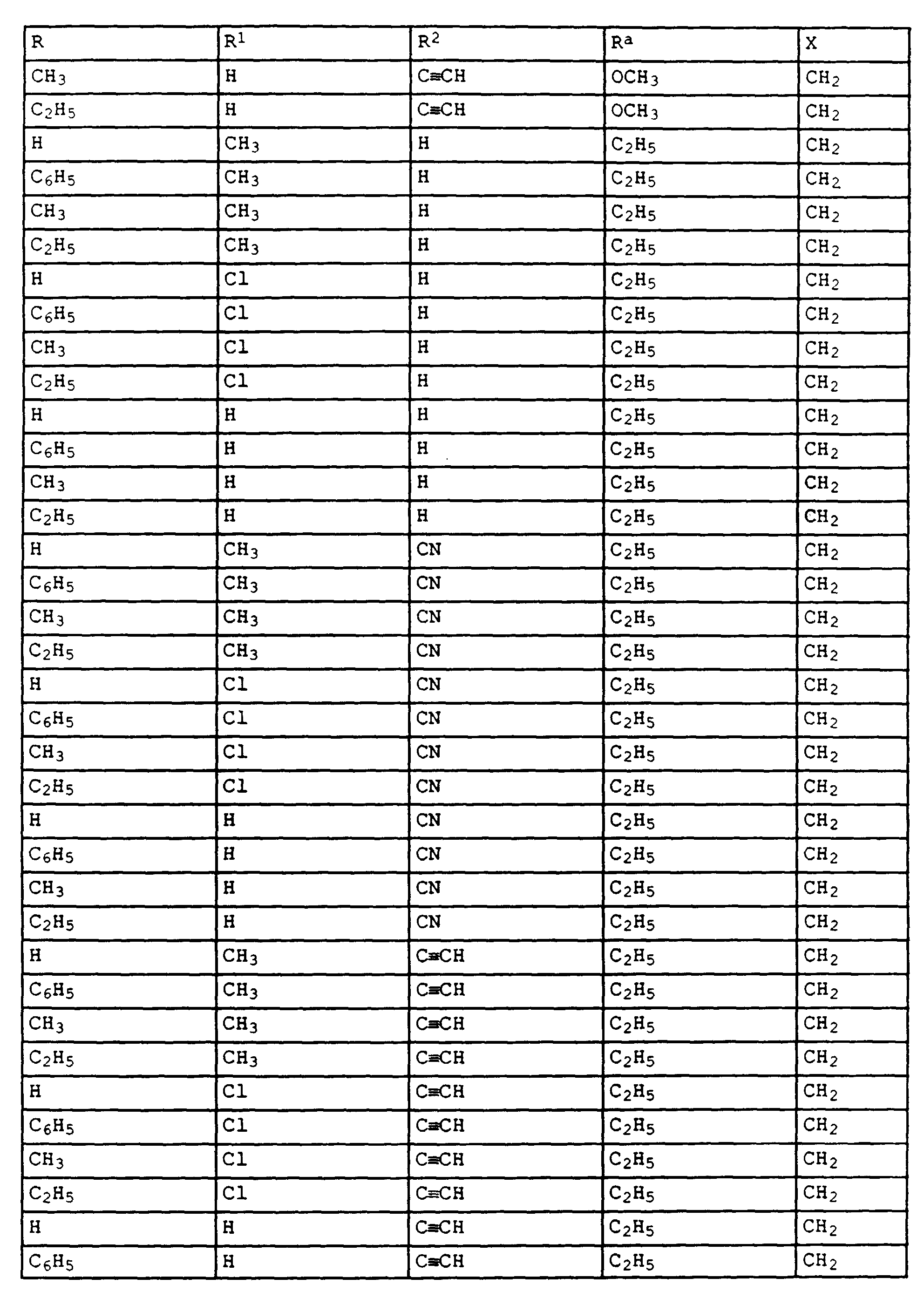

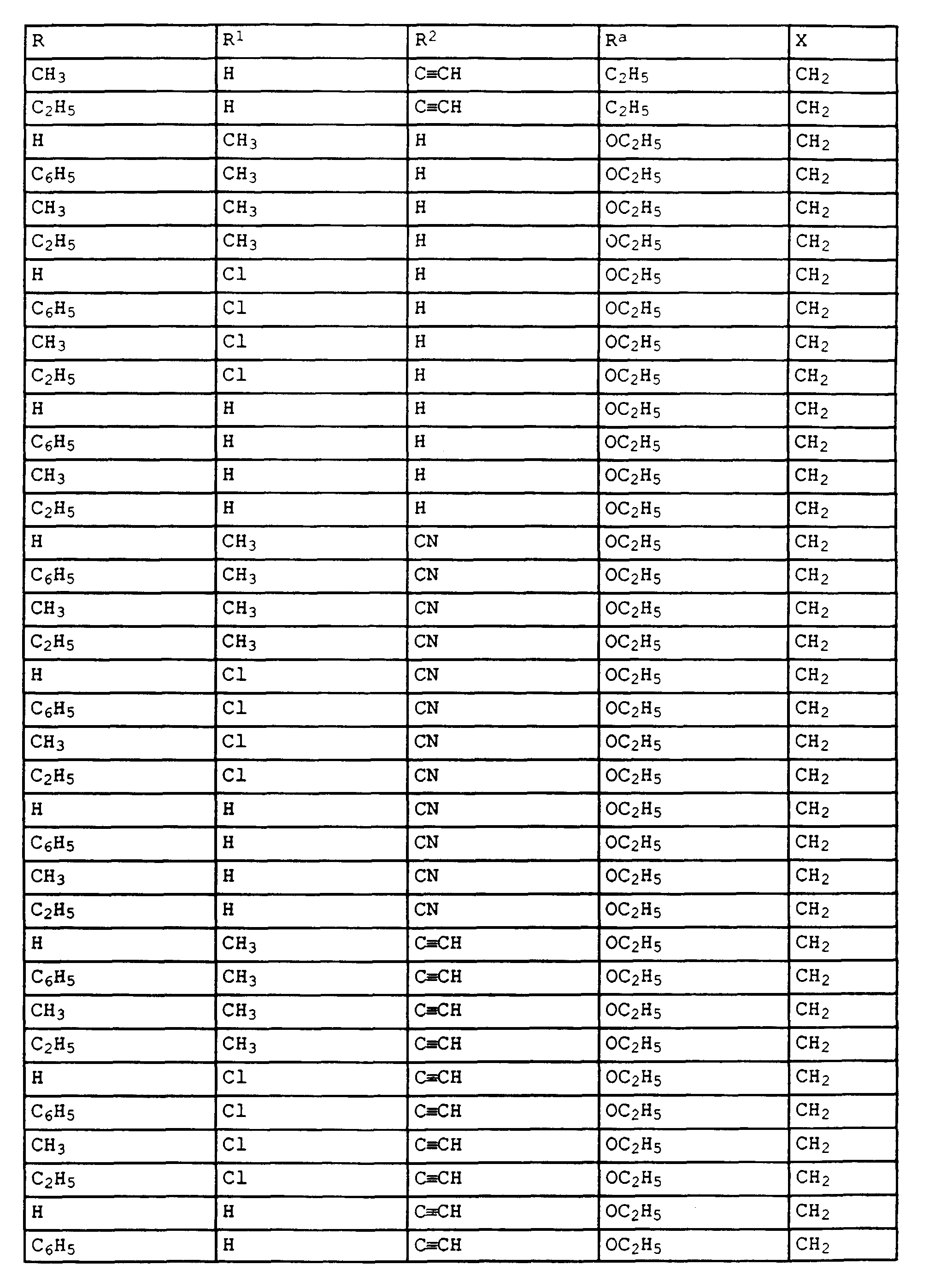

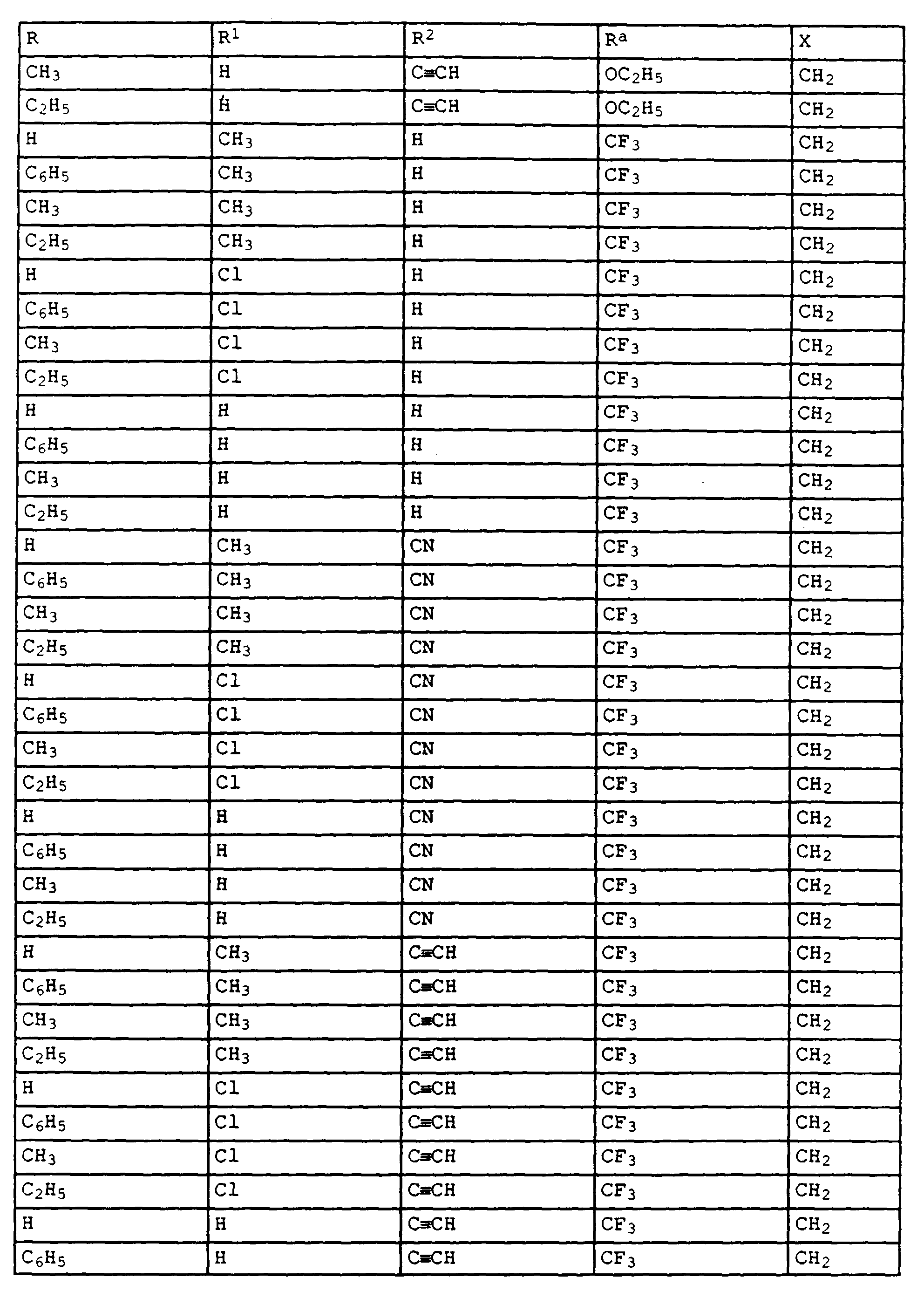

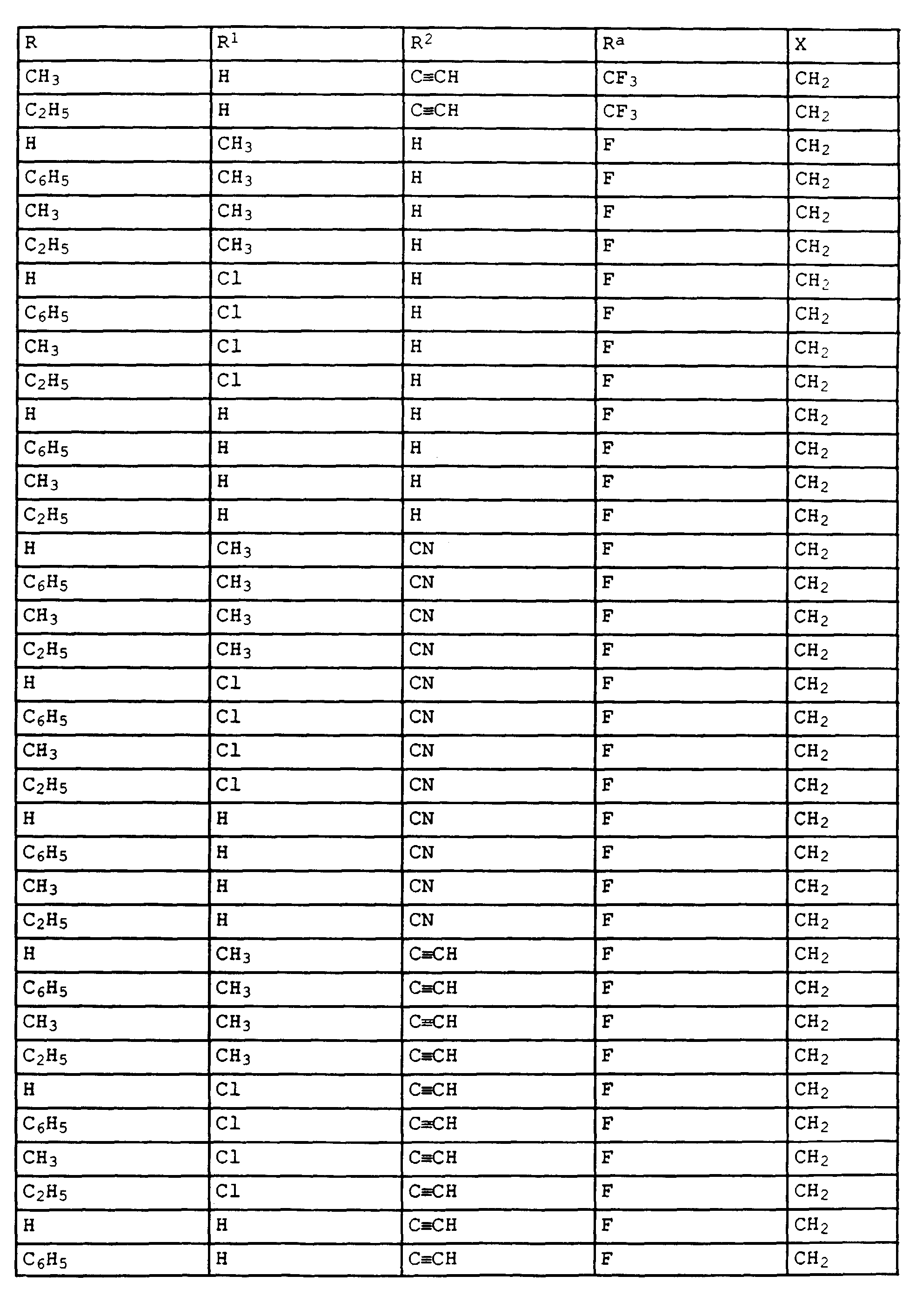

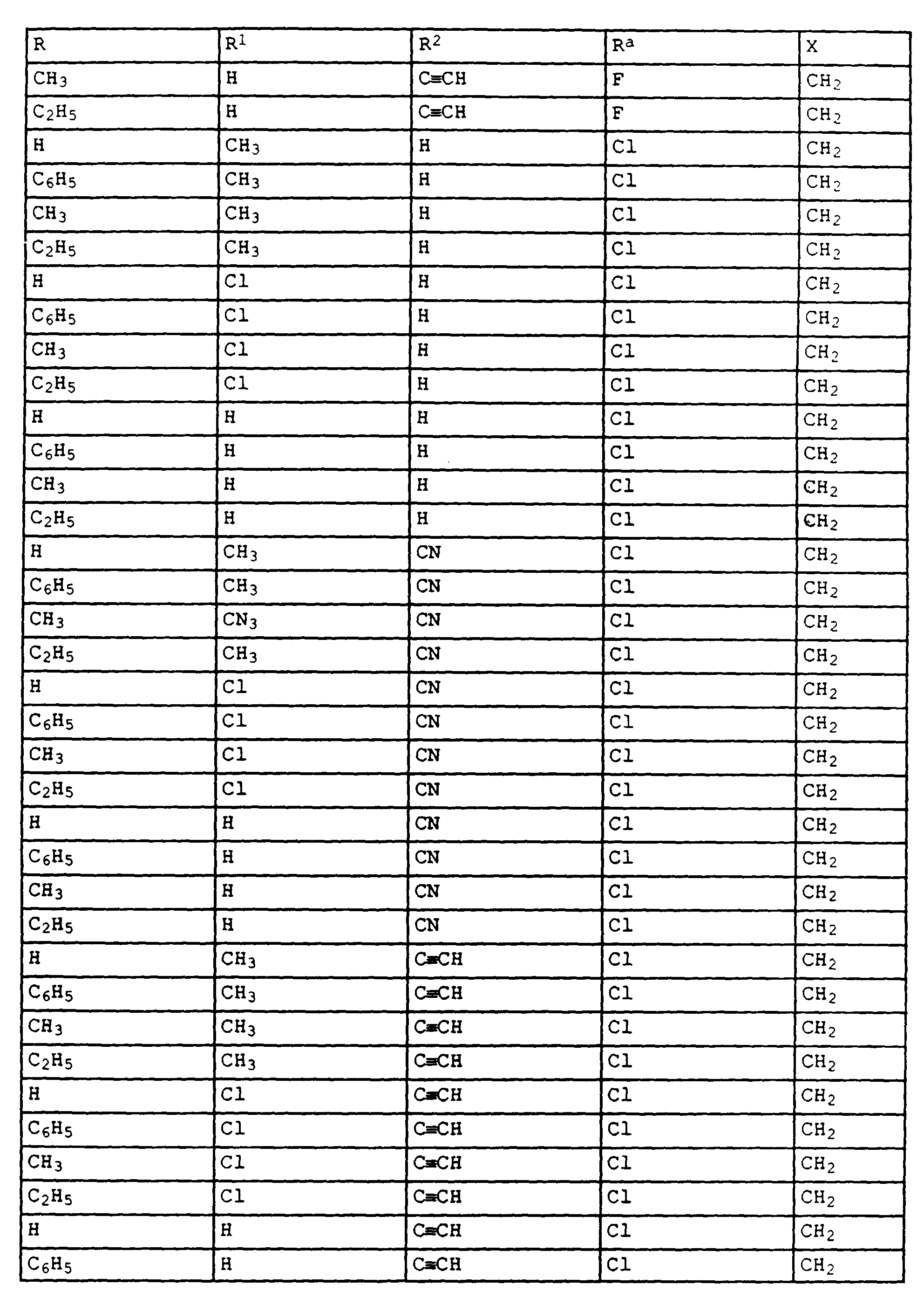

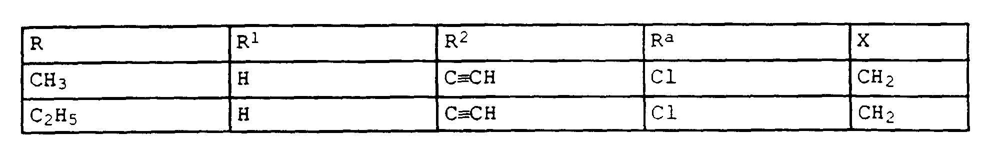

Die Verbindungen der Formel Ia und Ib sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keifferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Pannolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni, Zeiraphera canadensis.

Aus der Ordnung der Käfer (Coleoptera) beispielsweise Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus, Sitophilus granaria.

Aus der Ordnung der Zweiflügler (Diptera) beispielsweise Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hyoscyami, Phorbia antiqua, Phorbia brassicae, Phorbia coarctata, Rhagoletis cerasi, Rhagoletis pomonella, Tabanus bovinus, Tipula oleracea, Tipula paludosa.

Aus der Ordnung der Thripse (Thysanoptera) beispielsweise Frankliniella fusca, Frankliniella occidentalis, Frankliniella tritici, Scirtothrips citri, Thrips oryzae, Thrips palmi, Thrips tabaci.

Aus der Ordnung der Hautflügler (Hymenoptera) beispielsweise Athalia rosae, Atta cephalotes, Atta sexdens, Atta texana, Hoplocampa minuta, Hoplocampa testudinea, Monomorium pharaonis, Solenopsis geminata, Solenopsis invicta.

Aus der Ordnung der Wanzen (Heteroptera) beispielsweise Acrosternum hilare, Blissus leucopterus, Cyrtopeltis notatus, Dysdercus cingulatus, Dysdercus intermedius, Eurygaster integriceps, Euchistus impictiventris, Leptoglossus phyllopus, Lygus lineolaris, Lygus pratensis, Nezara viridula, Piesma quadrata, Solubea insularis, Thyanta perditor.

Aus der Ordnung der Pflanzensauger (Homoptera) beispielsweise Acyrthosiphon onobrychis, Adelges laricis, Aphidula nasturtii, Aphis fabae, Aphis pomi, Aphis sambuci, Brachycaudus cardui, Brevicoryne brassicae, Cerosipha gossypii, Dreyfusia nordmannianae, Dreyfusia piceae, Dyasphis radicola, Dysaulacorthum pseudosolani, Empoasca fabae, Macrosiphum avenae, Macrosiphum euphorbiae, Macrosiphon rosae, Megoura viciae, Metopolophium dirhodum, Myzodes persicae, Myzus cerasi, Nilaparvata lugens, Pemphigus bursarius, Perkinsiella saccharicida, Phorodon humuli, Psylla mali, Psylla piri, Rhopalomyzus ascalonicus, Rhopalosiphum maidis, Sappaphis mala, Sappaphis mali, Schizaphis graminum, Schizoneura lanuginosa, Trialeurodes vaporariorum, Viteus vitifolii.

Aus der Ordnung der Termiten (Isoptera) beispielsweise Calotermes flavicollis, Leucotermes flavipes, Reticulitermes lucifugus, Termes natalensis.

Aus der Ordnung der Geradflügler (Orthoptera) beispielsweise Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus, Tachycines asynamorus.

Aus der Klasse der Arachnoidea beispielsweise Spinnentiere (Acarina) wie Amblyomma americanum, Amblyomma variegatum, Argas persicus, Boophilus annulatus, Boophilus decoloratus, Boophilus microplus, Brevipalpus phoenicis, Bryobia praetiosa, Dermacentor silvarum, Eotetranychus carpini, Eriophyes sheldoni, Hyalomma truncatum, Ixodes ricinus, Ixodes rubicundus, Ornithodorus moubata, Otobius megnini, Paratetranychus pilosus, Dermanyssus gallinae, Phyllocoptruta oleivora, Polyphagotarsonemus latus, Psoroptes ovis, Rhipicephalus appendiculatus, Rhipicephalus evertsi, Sarcoptes scabiei, Tetranychus cinnabarinus, Tetranychus kanzawai, Tetranychus pacificus, Tetranychus telarius, Tetranychus urticae.

Aus der Klasse der Nematoden beispielsweise Wurzelgallennematoden, z.B. Meloidogyne hapla, Meloidogyne incognita, Meloidogyne javanica, Zysten bildende Nematoden z.B. Globodera rostochiensis, Heterodera avenae, Heterodera glycine, Heterodera schachtii, Heterodera trifolii, Stock- und Blattälchen, z.B. Belonolaimus longicaudatus, Ditylenchus destructor, Ditylenchus dipsaci, Heliocotylenchus multicinctus, Longidorus elongatus, Radopholus similis, Rotylenchus robustus, Trichodorus primitivus, Tylenchorhynchus claytoni, Tylenchorhynchus dubius, Pratylenchus neglectus, Pratylenchus penetrans, Pratylenchus curvitatus, Pratylenchus goodeyi.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder öldispersionen kommen Mineralölfraktionen von mittlerem bis hohem Siedepunkt, wie Kerosin oder Dieselöl, ferner Kohlenteeröle sowie öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulver, öldispersionen) durch Zusatz von Wasser bereitet werden. Zur Herstellung von Emulsionen, Pasten oder Öldispersionen können die Substanzen als solche oder in einem öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate und Fettsäuren sowie deren Alkali- und Erdalkalisalze, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin-Sulfitablaugen und Methylcellulose in Betracht.

Pulver-, Streu- und Stäubemittel können durch Mischen oder gemeinsames vermahlen der wirksamen Substanzen mit einem festen Trägerstoff hergestellt werden.

Die Formulierungen enthalten im allgemeinen zwischen 0,01 und 95 Gew.%, vorzugsweise zwischen 0,1 und 90 Gew.% des Wirkstoffs. Die Wirkstoffe werden dabei in einer Reinheit von 90 % bis 100 %, vorzugsweise 95 % bis 100 % (nach NMR-Spektrum) eingesetzt.

Beispiele für Formulierungen sind:
I. 5 Gew.-Teile der Verbindung Nr. 3.1 werden mit 95 Gew.-Teilen feinteiligem Kaolin innig vermischt. Man erhält auf diese Weise ein Stäubemittel, das 5 Gew.% des Wirkstoffs enthält.
II. 30 Gew.-Teile der Verbindung Nr. 3.1 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit (Wirkstoffgehalt 23 Gew.%).
III. 10 Gew.-Teile der Verbindung Nr. 3.2 werden in einer Mischung gelöst, die aus 90 Gew.-Teilen Xylol, 6 Gew.-Teilen des Anlagerungsproduktes von 8 bis 10 Mol Ethylenoxid an 1 Mol ÖlsäureN-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht (Wirkstoffgehalt 9 Gew.%).
IV. 20 Gew.-Teile der Verbindung Nr. 3.1 werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5 Gew.-Teilen des Anlagerungsproduktes von 40 Mol Ethylenoxid an 1 Mol Ricinusöl besteht (Wirkstoffgehalt 16 Gew.%).
V. 80 Gew.-Teile der Verbindung Nr. 3.2 werden mit 3 Gew.-Teilen des Natriumsalzes der Diisobutylnaphthalin-alpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen (Wirkstoffgehalt 80 Gew.%).
VI. Man vermischt 90 Gew.-Teile der Verbindung Nr. 3.2 mit 10 Gew.-Teilen N-Methyl-α-pyrrolidon und erhält eine Lösung, die zur Anwendung in Form kleinster Tropfen geeignet ist (Wirkstoffgehalt 90 Gew.%).
VII. 20 Gew.-Teile der Verbindung Nr. 3.1 werden in einer Mischung gelöst, die aus 40 Gew.-Teilen Cyclohexanon, 30 Gew.-Teilen Isobutanol, 20 Gew.-Teilen des Anlagerungsproduktes von 7 Mol Ethylenoxid an 1 Mol Isooctylphenol und 10 Gew.-Teilen des Anlagerungsproduktes von 40 Mol Ethylenoxid an 1 Mol Ricinusöl besteht. Durch Eingießen und feines Verteilen der Lösung in 100 000 Gew.-Teilen Wasser erhält man eine wäßrige Dispersion, die 0,02 Gew.% des Wirkstoffs enthält.
VIII. 20 Gew.-Teile des Wirkstoffs Nr. 3.2 werden mit 3 Gew.-Teilen des Natriumsalzes der Diisobutylnaphthalin-α-sulfonsäure, 17 Gew.-Teilen des Natriumsalzes einer Ligninsulfonsäure aus einer Sulfit-Ablauge und 60 Gew.-Teilen pulverförmigem Kieselsäuregel gut vermischt und in einer Hammermühle vermahlen. Durch feines Verteilen der Mischung in 20 000 Gew.-Teilen Wasser erhält man eine Spritzbrühe, die 0,1 Gew.% des Wirkstoffs enthält.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Wirkstoffkonzentrationen in den anwendungsfertigen Zubereitungen können in größeren Bereichen variiert werden.

Im allgemeinen liegen sie zwischen 0,0001 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,01 bis 10, vorzugsweise 0,1 bis 1 kg/ha.

Zu den Wirkstoffen können öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

### Synthesebeispiele

Die in den nachstehenden Synthesebeispielen wiedergegebenen Vorschriften wurden unter entsprechender Abwandlung der Ausgangsverbindungen zur Gewinnung weiterer Verbindungen Ia und Ib benutzt. Die so erhaltenen Verbindungen sind in den nachstehenden Tabellen mit physikalischen Angaben aufgeführt.

### Herstellung von Ausgangsstoffen

### 1. 3-Amino-2-methylbenzylalkohol

Eine Lösung von 203 g 2-Methyl-3-nitrobenzylalkohol in 1000 ml Ethanol wird in Gegenwart von 5 g Pd/Kohle (10%ig) bei 30 bis 35°C hydriert. Der Katalysator wird abfiltriert, die Lösung eingeengt und der erhaltene Feststoff getrocknet. Man erhält 145 g 3-Amino-2-methylbenzylalkohol (Smp. 104 - 108°C).

### 2. 3-Brom-2-methylbenzylalkohol

Zu einem auf 0°C abgekühlten Gemisch von 888 ml Wasser, 162 ml Bromwasserstoffsäure (47%ig) und 81,2 g 3-Amino-2-methylbenzylalkohol wird eine Lösung von 40,7 g Natriumnitrat in 300 ml Wasser getropft. Man rührt 30 Minuten bei 0°C und gibt dann bei dieser Temperatur portionsweise eine Suspension von 168,7 g Kupfer(I)-bromid in 750 ml Wasser hinzu. Das Reaktionsgemisch wird nacheinander 1 Stunde bei 10°C, 1 Stunde bei Raumtemperatur und 2 Stunden bei 100°C gerührt. Nach dem Abkühlen wird das Reaktionsgemisch mehrmals mit Ether extrahiert. Die vereinigten organischen Phasen werden mit Wasser gewaschen, getrocknet und eingeengt. Nach säulenchromatographischer Reinigung über Kieselgel mit Toluol als Fließmittel erhält man 64,2 g 3-Brom-2-methylbenzylalkohol (Smp. 97 -100°C).

### 3. (3-Brom-2-methylbenzyl)-(tetrahydro-2-pyranyl)ether

Zu einer Lösung von 208,9 g 3-Brom-2-methylbenzylalkohol und 87,4 g 3,4-Dihydro-2H-pyran in 1600 ml Ether werden bei 0°C 2,1 ml konzentrierte Salzsäure gegeben. Man rührt 4 Tage lang bei Raumtempratur und tropft dann 50 ml 10%ige Kalilauge und 500 ml Wasser hinzu. Die organische Phase wird abgetrennt, die wäßrige Phase mit Ether extrahiert und die vereinigten organischen Phasen werden mit Wasser gewaschen, getrocknet und eingeengt. Nach säulenchromatographischer Reinigung über Kieselgel mit Toluol als Fließmittel erhält man 224,6 g der gewünschten Verbindung.
NMR-Spektrum [300-MHz; CDCl₃; δ (ppm)]:
1,4-1,91 (6H); 2,42 (3H); 3,55 (1H); 3,89 (1H); 4,47 (1H); 4,68 (1H); 4,8 (1H); 7,02 (1H); 7,32 (1H); 7,47 (1H).

### 4. (3-Formyl-2-methylbenzyl)-(tetrahydro-2-pyranyl)ether

Unter Stickstoffatmosphäre werden 1,2 g Mg (Magnesiumspäne) in 15 ml absolutem Tetrahydrofuran vorgelegt. Bei 65°C fügt man einige Tropfen Dibromethan hinzu. Während man die Temperatur weiterhin bei 65°C hält wird eine Lösung von 14,25 g (3-Brom-2-methylbenzyl)-(tetrahydro-2-pyranyl)-ether in 50 ml Tetrahydrofuran zugetropft. Anschließend rührt man 2 Stunden unter Rückfluß. Zu der auf 0°C abgekühlten Reaktionsmischung wird eine Lösung von 5,65 g N-Formylpiperidin in 10 ml absolutem Tetrahydrofuran getropft. Man rührt 20 Stunden bei Raumtemperatur, stellt mit ca. 50 ml 5%iger Salzsäure schwach sauer und extrahiert mehrmals mit Ether. Die vereinigten Etherextrakte werden mit Wasser gewaschen, getrocknet und eingeengt. Das Rohprodukt (11 g) kann säulenchromatographisch über Kieselgel mit Toluol/Aceton (97,5:2,5) gereinigt werden.
NMR-Spektrum [250-MHz; CDCl₃; δ (ppm)]:
1,48-1,93 (6H); 2,64 (3H); 3,57 (1H); 3,9 (1H); 4,54 (1H); 4,72 (1H); 4,86 (1H); 7,36 (1H); 7,65 (1H); 7,76 (1H); 10,33 (1H).

### 5. [3-(2',2'-Dibromvinyl)-2-methylbenzyl]-(tetrahydro-2-pyranyl)ether

Zu einer Lösung von 64,85 g Triphenylphosphin in 60 ml Methylenchlorid wird bei 0°C eine Lösung von 41,44 g Tetrabrommethan in 40 ml Methylenchlorid getropft. Man rührt 30 Minuten bei 0°C und tropft dann 23,1 g (3-Formyl-2-methylbenzyl)-(tetrahydro-2-pyranyl)ether in 25 ml Methylenchlorid hinzu. Nach 2stündigem Rühren bei Raumtemperatur wird der Feststoff abfiltriert und das Filtrat eingeengt. Zum Filtrat werden 200 ml Cyclohexan und 200 ml Wasser hinzugegeben. Man rührt 1 Stunde unter Rückfluß, trennt die organische Phase ab, trocknet und engt ein. Nach säulenchromatographischer Reinigung über Kieselgel mit Cyclohexan und Toluol als Fließmittel erhält man neben 4 g 3-(2',2'-Dibromvinyl)-2-methylbenzylbromid 18,4 g der gewünschten Verbindung.
NMR-Spektrum [300-MHz; CDCl₃; δ (ppm)]:
1,48 - 1,92 (6H); 2,23 (3H); 3,55 (1H); 3,9 (1H); 4,48 (1H); 4,72 (1H); 4,81 (1H); 7,19 (1H); 7,28 (1H); 7,38 (1H); 7,5 (1H).

### 6. [3-(2',2'-Dichlorvinyl)-2-methylbenzyl]-(tetrahydro-2-pyranyl)ether

### Methode A:

Zu einer Suspension von 3,37 g Kalium-tert.-butylat in 50 ml Heptan werden unter Stickstoffatmosphäre bei 0-5°C zügig 7,86 g Triphenylphosphin gegeben. Anschließend werden ebenfalls bei 0-5°C 3,59 g Chloroform in 30 ml Heptan innerhalb von 1 Stunde zugetropft. Das entstandene tert.-Butanol wird bei 0°C unter vermindertem Druck abdestilliert. Bei 5-10°C tropft man innerhalb von 30 Minuten eine Lösung von 7,02 g (3-Formyl-2-methylbenzyl)-(tetrahydro-2-pyranyl)ether in 10 ml Heptan ein, rührt 2 Stunden bei 5°C und 15 Stunden bei Raumtemperatur. Der ausgefallene Feststoff wird abfiltriert und die Lösung eingeengt. Nach säulenchromatographischer Reinigung über Kieselgel mit Toluol als Fließmittel erhält man 2,3 g des gewünschten Ethers.

### Methode B:

Zu einer Lösung von 12,8 g Trichlormethyl-phosphonsäure-diethylester in 45 ml Ether und 35 ml Tetrahydrofuran werden unter Stickstoffatmosphäre bei -100°C 33,1 ml (0,053 mol) n-Butyllithium (15 %ige Lösung in Hexan) und anschließend 11,7 g (3-Formyl-2-methylbenzyl)-(tetrahydro-2-pyranyl)-ether in 10 ml Ether/Tetrahydrofuran (1:1) getropft. Unter Rühren läßt man auf Raumtemperatur aufwärmen und erhitzt 1 Stunde unter Rückfluß. Die Reaktionsmischung wird auf -50^{o}C abgekühlt, mit 50 ml 2N Schwefelsäure versetzt, in 300 ml Wasser gegossen und mehrmals mit Ether extrahiert. Die vereinigten Etherphasen werden mit Wasser gewaschen, getrocknet und eingeengt. Nach säulenchromatographischer Reinigung über Kieselgel mit Toluol als Fließmittel erhält man 4,7 g der gewünschten Verbindung.
NMR-Spektrum [300-MHz; CDCl₃; δ (ppm)]:
1,47-1,93 (6H); 2,25 (3H); 3,57 (1H); 3,92 (1H); 4,48 (1H); 4,72 (1H); 4,81 (1H); 6,95 (1H); 7,2 (1H); 7,35 (2H).

### 1. Synthese der 3-Isoxazolyl-benzylderivate XVa

1.1 3-(3'-Isoxazolyl)-2-methylbenzylalkohol 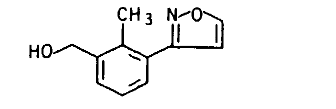
   A (3-Hydroxyiminomethyl-2-methylbenzyl)-(tetrahydro-2-pyranyl)-ether
      Eine Lösung aus 6,0 g (3-Formyl-2-methylbenzyl)-(tetrahydro-2-pyranyl)ether und 50 ml Toluol wurde bei 25°C mit einer Lösung aus 2,67 g Hydroxylaminhydrochlorid und 10 ml Wasser versetzt. Nach der Zugabe von 2,01 g Natriumcarbonat in 10 ml H₂O wurde über Nacht bei 25°C gerührt. Im Verlauf der Reaktion auskristallisiertes Produkt wurde abfiltriert und in Ether gelöst. Aus den vereinigten organischen Phasen erhielt man nach Waschen und Trocknen 6,4 g Produkt.
      NMR-Spektrum [300 MHz; CDCl₃; δ (ppm)]: 1,2-1,85 (6H); 2,32 (3H); 3,50 (1H); 3,78 (1H); 4,40-4,85 (3H); 7,05-7,7 (3H); 8,42 (1H); 11,27 (1H).
   B (3-(3'-Isoxazolyl)-2-methylbenzyl)-(tetrahydro-2-pyranyl)-ether
      In eine Lösung aus 6,23 g (3-Hydroxyiminomethyl-2-methyl-benzyl)-(tetrahydro-2-pyranyl)ether und 50 ml CH₂Cl₂ wurde bei 0 bis 5°C innerhalb 30 Minuten Acetylen eingeleitet. Anschließend wurden 20,6 ml einer 10%igen Natriumhypochlorit-Lösung versetzt mit einer Spatelspitze Natriumacetat bei 10°C unter weiterer Acetylen-Einleitung zugetropft. Nach beendeter Zugabe wurde für weitere 15 Minuten Acetylen bei 10°C eingeleitet. Danach wurde 1 Stunde bei 10°C gerührt. Nach 14 Stunden bei 25°C wurden die beiden Phasen getrennt. Aus der organischen Phase erhielt man nach Waschen, Trocknen und säulenchromatographischer Reinigung (Kieselgel; Toluol/Aceton 97,5:2,5) 4,8 g an Produkt.
      NMR-Spektrum [250 MHz; CDCl₃; δ (ppm)]: 1,40-2,0 (6H); 2,38 (3H); 3,55 (1H); 3,92 (1H); 4,45-4,90 (3H); 6,48 (1H); 7,20-7,50 (3H); 8,43 (1H).
   C 4,7 g (3-(3'-Isoxazolyl)-2-methylbenzyl)-(tetrahydro-2-pyranyl)ether gelöst in 40 ml Methanol wurden mit 2,72 ml konzentrierter Salzsäure für 14 Stunden bei 25°C gerührt. Anschließend wurde unter Eiskühlung mit Natriummethanolat-Lösung neutralisiert und die neutrale Lösung bei vermindertem Druck eingeengt. Der Rückstand wurde mit Wasser versetzt und die Lösung wurde mehrmals mit Diethylether extrahiert. Aus den vereinigten Etherextrakten erhielt man 3,0 g 3-(3'-Isoxazolyl)-2-methylbenzylalkohol.
      NMR-Spektrum [300 MHz; CDCl₃; δ (ppm)]: 2,25 (3H); 2,70 (1H); 4,65 (2H); 6,43 (1H); 7,15-7,50 (3H); 8,27 (1H).

### 2. Synthese der 3-Isoxazolyl-benzylderivate XVb

2.1.3-[5'-(3'-Ethylisoxazolyl)]-2-methylbenzylalkohol 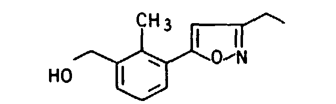
   A (3-Ethinyl-2-methylbenzyl)-(tetrahydro-2-pyranyl)ether
      Eine Lösung von 5,85 g (3-(2',2'-Dibromvinyl)-2-methyl-benzyl)-(tetrahydro-2-pyranyl)ether und 50 ml Tetrahydrofuran wurde bei -78°C mit 19,7 ml einer 1,6 molaren Lösung von n-Butyllithium in n-Hexan versetzt. Nach 1 h bei -78°C wurde 1 h bei 25°C belassen und anschließend wurde die Reaktionslösung zu 300 ml Eiswasser gegegeben. Die so erhaltene Mischung wurde mit Diethylether extrahiert. Aus den vereinigten organischen Phasen erhielt man nach Waschen, Trocknen und chromatographischer Reinigung (Kieselgel, Toluol) 3,1 g des Produkts (Reinheitsgrad von 80 % NMR).
      NMR-Spektrum [200 MHz; CDCl₃; δ (ppm)]: 1,40-2,00 (6H); 2,48 (3H); 3,30 (1H); 3,60 (1H); 3,95 (1H); 4,40-4,95 (3H); 7,1-7,55 (3H).
   B (3-[5'-(3'-Ethylisoxazolyl)]-2-methylbenzyl)-(tetrahydro-2 -pyranyl)ether
      Ein Gemisch aus 9,2 g Phenylisocyanat, 10,6 g (3-Ethinyl-2-methylbenzyl)-(tetrahydro-2-pyranyl)ether und 20 ml Toluol wurde bei 25°C mit einer Lösung aus 3,43 g Nitropropan und 10 ml Toluol und mit 3 Tropfen Triethylamin versetzt. Nach 14 h bei 25°C wurde für 2 h auf 100°C erhitzt. Nach Abkühlung auf 25°C wurde die Reaktionsmischung von festen Bestandteilen befreit. Aus der so erhaltenen Lösung erhielt man nach Chromatographie [Kieselgel; Toluol/Aceton 98:2] 2,3 g des Produktes.
      NMR-Spektrum [300 MHz; CDCl₃; δ (ppm)]: 1,36 (3H); 1,42-1,95 (6H); 2,21 (3H); 2,75 (2H); 3,55 (1H); 3,92 (1H); 4,4-49 (3H); 6,23 (1H); 7,0-7,6 (3H).
   C 2,3 g 3-[5'-(3'-Ethylisoxazolyl)]-2-methylbenzyl-(tetrahydro-2-pyranyl)ether gelöst in 40 ml Methanol wurden mit 1,22 ml konzentrierter Salzsäure für 14 Stunden bei 25°C gerührt. Anschließend wurde unter Eiskühlung mit Natriummethanolat-Lösung neutralisiert und die neutrale Lösung bei vermindertem Druck eingeengt. Der Rückstand wurde mit Wasser versetzt und die Lösung wurde mehrmals mit Diethylether extrahiert. Aus den vereinigten Etherextrakten erhielt man 1,4 g 3-[5'-(3'-Ethylisoxazolyl)]-2-methylbenzylalkohol.
      NMR-Spektrum [300 MHz; CDCl₃, δ (ppm)]: 1,33 (2H); 2,37 (3H); 3,75 (2H); 4,72 (2H); 6,21 (1H); 7,2-7,6 (3H)

### 3. Synthese der 3-Isoxazolylphenylderivate Ia und Ib

3.1 Herstellung von Dimethyl-3-(2'-methyl-3'-(3''-isoxazolyl)phenyl)-propyl-phenyl-silan
   3.1.1 1-Chlor-2-methyl-3-prop-2-enyl-benzol
      158 g Vanadiumtrichlorid werden in 800 ml Dichlormethan gelöst und bei 25 °C mit 500 ml einer Lösung von 1 Mol 2-Methyl-3-chlor-phenyl-magnesiumchlorid in THF versetzt. Nach 0,5 h Rühren werden 121 g Allylbromid zugetropft, 10 h bei 25 °C gerührt, dann 6 h unter Rückfluß erhitzt. Das erhaltene Reaktionsgemisch wird in 2 1 gesättigte, wäßrige Natriumhydrogencarbonat-Lösung gegossen und anschließend mit Methyl-t.butylether extrahiert. Durch Destillation werden 70,9 g 1-Chlor-2-methyl-3-prop-2-enyl-benzol (Kp = 78 °C/1 mbar) erhalten.
   3.1.2 1-Cyano-2-methyl-3-prop-2-enyl-benzol
      In 150 ml N-methyl-pyrrolidon werden 30 g 1-Chlor-2-methyl-3-prop-2-enyl-benzol gelöst und mit 25 g Kupfer-(I)-cyanid versetzt. Das Reaktionsgemisch wird während 30 h unter Rühren auf 190 °C erhitzt. Nach Abkühlen auf 20 °C werden 125 ml Ethylendiamin und 300 ml Wasser zugegeben. Anschließend wird 1 h bei 50 °C und 14 h bei 20 °C gerührt. Aufarbeitung erfolgt durch Extraktion mit Diethylether, Waschen der organischen Phase, Trocknen über Natriumsulfat, Entfernen des Trockenmittels, Abdestillieren des organischen Lösungsmittel. Es werden 24,5 g Rohprodukt erhalten. Nach Chromatographie (Kieselgel/Toluol) werden 14,4 g reines 1-Cyano-2-methyl-3-prop-2-enyl-benzol isoliert.
      ¹H-NMR [300 MHz; CDCl₃; δ (ppm)]:
      2,45 (3H); 3,40 (2H); 4,9 - 5,1 (2H); 5,9 (1H); 7,1 - 7,4 (3H)
   3.1.3 Dimethyl-3-(2'-methyl-3'-cyano-phenyl)propyl-phenyl-silan
      In 100 ml Cyclohexan (abs.) werden 9,0 g 1-Cyano-2-methyl-3-prop-2-enylbenzol gelöst und mit 7,75 g Dimethylphenylsilan bei Raumtemperatur versetzt. Zu diesem Gemisch werden 0,1 g Hexachlor-platinsäure-hexahydrat gelöst in 2 ml Isopropanol (abs) gegeben. Das Reaktionsgemisch wird 3 h bei 55 °C gerührt. Durch Destillation am Rotationsverdampfer wird das Lösungsmittel entfernt. Hochsiedende Komponenten werden durch Vakuum-Destillation (Kondensat 82 -105 °C/0,1 mbar) abgetrennt. Der Rückstand wird durch Säulenchromatographie (Kieselgel/Toluol) gereinigt. Es werden 12,2 g Dimethyl-3-(2'-methyl-3'-cyano-phenyl)-propyl-phenyl-silan erhalten.
      ¹H-NMR [300 MHz; CDCl₃; δ (ppm)]: 0,25 (6H); 0,8 (2H); 1,55 (2H); 2,4 (3H); 2,6 (2H); 7,1 - 7,6 (8H)
   3.1.4 Dimethyl-3-(2'-methyl-3'-cyano-phenyl)propyl-phenyl-silan
      In 100 ml Toluol (abs.) werden 11 g Dimethyl-3-(2'-methyl-3'-cyanophenyl)propyl-phenyl-silan gelöst und bei 20 °C unter Stickstoff langsam mit 28 ml einer 25 %igen Lösung von Diisobutylaluminiumhydrid in Toluol versetzt. Es wird 6 h unter Rückfluß erhitzt, dann bei 20 °C zuerst mit 3 ml Methanol anschließend mit 50 ml 10 %iger Salzsäure versetzt. Das Reaktionsgemisch wird 14 h bei 20 °C gerührt. Nach der Phasentrennung wird die organische Phase mit dest. Wasser gewaschen, über Na₂SO₄ getrocknet, nach Filtration mittels Rotationsverdampfer und Vakuumpumpe von anhaftenden Lösungsmittel befreit.
      Es werden 10,2 g Dimethyl-3-(2'-methyl-3'-formyl-phenyl)propyl-phenyl-silan erhalten.
      ¹H-NMR [300 MHz; CDCl₃; δ (ppm)]: 0,25 (6H); 0,85 (2H); 1,55 (2H); 2,58 (3H); 2,7 (2H); 7,2 - 7,7 (8H); 10,3 (1H)
   3.1.5 Dimethyl-3-(2'-methyl-3'-(2''-hydroxy-imino-methyl)-phenyl)propyl-phenyl-silan
      In 150 ml Toluol werden 10,1 g Dimethyl-3-(2'-methyl-3'-formyl-phenyl)-propyl-phenylsilan gelöst und bei 20 °C mit einer Lösung von 3,42 g Hydroxylaminhydrochlorid in 30 ml Wasser versetzt.
      Anschließend wird eine Lösung von 2,65 g Natriumcarbonat in 30 ml Wasser zugetropft. Das Reaktionsgemisch wird während 14 h kräftig bei 20 °C gerührt. Nach der Phasentrennung wird die organische Phase mit Wasser gewaschen, über Natriumsulfat getrocknet, filtriert und abschließend am Rotationsverdampfer vom Lösungsmittel befreit. Der verbleibende Rückstand wird säulenchromatographisch (Kieselgel/Toluol/Aceton 95:5) gereinigt. Es werden 7,0 g Dimethyl-3-(2'-methyl-3'-(2''-hydroxyiminomethyl)-phenyl)-propyl-phenyl-silan erhalten.
      ¹H-NMR [300 MHz; CDCl₃; δ (ppm)]: 0,25 (6H); 0,8 (2H); 1,55 (2H); 2,25 (3H); 2,6 (2H); 7,0 - 7,6 (8H); 7,0 -7,6 (8H); 8,5 (1H); 9,1 (1H)
   3.1.6 Dimethyl-3-(2'-methyl-3'-(3''-isoxazolyl)phenyl)propyl-phenyl-silan
      In 70 ml Dichlormethan werden 2,6 g Dimethyl-3-(2'-methyl-3'-(2''-hydroxy-iminomethyl)phenyl)propyl-phenyl-silan gelöst. In diese Lösung wird bei 0 °C während 0,5 h unter kräftigem Rühren Acetylen eingeleitet. Ohne die Acetyleneinleitung zu unterbrechen werden anschließend 7,0 ml einer 10 %igen Natriumhypochlorit (versetzt mit 0,5 g Natriumacetat) während 0,3 h zugetropft. Danach wird noch weitere 0,5 h Acetylen eingeleitet. Unter langsamer Erwärmung auf 20 °C wird das Reaktionsgemisch 14 h kräftig gerührt. Nach Zugabe von 70 ml Dichlormethan werden die Phasen getrennt. Die organische Phase wird zweimal mit Wasser gewaschen, über Natriumsulfat getrocknet, filtriert und am Rotationsverdampfer vom Lösungsmittel befreit. Der verbleibende Rückstand wird chromatographisch (Kieselgel; Petrolether/Methyl-tert.butylether 95:5) gereinigt. Es werden 1,8 g Dimethyl-3-(2'-methyl-3'-(3''-isoxa-zolyl)phenyl)propyl-phenyl-silan isoliert.
      ¹H-NMR [360 MHz; CDCl₃; δ (ppm)]: 0,25 (6H); 0,85 (2H); 1,6 (2H); 2,3 (3H); 2,7 (2H); 6,5 (1H); 7,15 - 7,5 (7H); 8,4 (1H)

### 3.2 Herstellung von Dimethyl-3-(2'-methyl-3'-(3''-isoxazolyl)phenyl)-propyl-(4'-ethoxy-phenyl)-silan

3.2.1 Dimethyl-(4-ethoxy-phenyl)-chlor-silan
   12 g Magnesium-Späne werden mit Tetrahydrofuran (abs.) überschichtet. Zunächst wird eine Lösung von 100,5 g 4-Ethoxy-brom-benzol in 100 ml Tetrahydrofuran (abs.) unter gelinder Erwärmung langsam zugetropft. Nach dem Einsetzen der exothermen Bildung des Grignard-Reagenzes wird so schnell zugetropft, daß die Reaktion von selbst siedet. Es wird 1 h unter Rückfluß erhitzt, nachdem die Zugabe beendet war. Die so erhaltene Grignard-Lösung wird nach Erkalten auf 20 °C zu einer Lösung von 129 g Dichlor-dimethylsilan in 100 ml Tetrahydrofuran (abs.) innerhalb 1 h bei 0 °C zugetropft. Nach Ende der Zugabe läßt man auf 20 °C aufwärmen und erhitzt dann 1 h auf Rückfluß. Anschließend wird auf 20 °C abgekühlt und von Rückstand abfiltriert. Der Rückstand wurde nachgewaschen mit Tetrahydrofuran. Die vereinigte organischen Phasen wurde bei 760 mbar eingeengt. Es werden 156 g eines dunklen Öls erhalten. Zweifache Destillation des Öls ergibt 54,4 g (Kp. 99 °C/0,4 mbar) Dimethyl-(4-ethoxy-phenyl)-chlor-silan.
3.2.2 Dimethyl-(4-ethoxy-phenyl)-silan
   Zu einer Suspension von 2,55 g Lithiumaluminiumhydrid in 30 ml Diethylether (abs.) wird unter Stickstoff bei 15 - 20 °C eine Lösung von 51 g Dimethyl-(4-ethoxy-phenyl)-chlorsilan in 100 ml Diethylether (abs.) getropft. Es wird 1 h bei 20 °C gerührt, dann 1 h unter Rückfluß erhitzt. Nach Abkühlung der Reaktionslösung auf 20 °C wird diese auf 200 ml 2 N Schwefelsäure gegossen. Die Phasen werden getrennt und die organischen Phasen werden nach mehrmaligen Waschen der wässrige Phase mit Diethylether vereinigt. Die organische Phase wird am Rotationsverdampfer eingeengt. Durch Destillation des Rückstandes werden 29,0 g (Kp. 53 °C/0,2 mbar) Dimethyl-(4-ethoxyphenyl)-silan erhalten.
3.2.3 Dimethyl-3-(2'-methyl-3'-cyano-phenyl)-propyl-(4'-ethoxy-phenyl)-silan
   Herstellung analog zu Beispiel 3.1.3
   ¹H-NMR [200 MHz; CDCl₃; δ (ppm)]: 0,22 (6H); 0,8 (2H); 1,4 (3H); 1,55 (2H); 2,4 (3H); 2,55 (2H); 4,0 (2H); 6,8 - 7,4 (7H)
3.2.4 Dimethyl-3-(2'-methyl-3'-formyl-phenyl)propyl-(4'ethoxy-phenyl)-silan
   Herstellung analog zu Beispiel 3.1.4
   ¹H-NMR [360 MHz; CDCl₃; δ (ppm)]: 0,2 (6H); 0,75 (2H); 1,4 (3H); 1,6 (2H); 2,5 (3H); 2,75 (2H); 4,0 (2H); 6,8 - 7,6 (7H); 10,25 (1H)
3.2.5 Dimethyl-3-(2'-methyl-3'(2''-hydroxy-iminomethyl)phenyl)propyl-(4'-ethoxy-phenyl)-silan
   Herstellung analog zu Beispiel 3.1.5
   ¹H-NMR [200 MHz; CDCl₃; δ (ppm)]: 0,25 (6H); 0,8 (2H); 1,4 (3H); 1,75 (2H); 2,2 (3H); 2,6 (2H); 4,0 (2H); 6,8 - 7,6 (7H); 8,45 (1H); 9,3 (1H)
3.2.6 Dimethyl-3-(2'-methyl-3'(3''-isoxazolyl)phenyl)propyl-(4'-ethoxy-phenyl)-silan
   Herstellung analog zu Beispiel 3.1.6
   ¹H-NMR [270 MHz; CDCl₃; δ (ppm)]: 0,25 (6H); 0,8 (2H); 1,35 (3H); 1,6 (2H) ; 2,25 (3H) ; 2,65 (2H); 4,0 (2H); 6,4 (1H); 6,8 - 7,35 (7H); 8,4 (1H)

### Anwendungsbeispiele

Die insektizide Wirkung der 3-Isoxazolylphenylverbindungen der allgemeinen Formeln Ia und Ib ließ sich durch folgende Versuche zeigen:

Die Wirkstoffe wurden
a) als 0,1 %ige Lösung in Aceton oder
b) als 10 %ige Emulsion in einem Gemisch aus 70 Gew.-% Cyclohexanol, 20 Gew.-% Nekanil® LN (Lutensol® AP6, Netzmittel mit Emulgier- und Dispergierwirkung auf Basis ethoxylierter Alkylphenole) und 10 Gew.-% Emulphor® EL (Emulan® EL, Emulgator auf Basis ethoxylierter Fettalkohole)
aufbereitet und entsprechend der gewünschten Konzentration mit Aceton im Falle a) bzw. mit Wasser im Falle von b) verdünnt.

### Nephotettix cincticeps (Reiszikade), Kontaktwirkung

Reispflanzen von einer Höhe von ca. 8 cm wurden mit der wäßrigen Wirkstoffaufbereitung behandelt und anschließend mit 10 adulten Zikaden belegt.

Nach 48 h wurde die Mortalität nach dem folgenden Bewertungsmodus in Prozent bestimmt:
100 % = keine überlebenden Zikaden;
80 % = 1 - 2 überlebende Zikaden;
60 % = 3 - 4 überlebende Zikaden;
0 % = mehr als 4 überlebende Zikaden.

Bei diesem Test wurde bei Anwendung von 200 ppm der Verbindung Beispiel 3.2 100 % Wirkung erzielt.

## Patentansprüche

1. 3-Isoxazolylphenylverbindungen der allgemeinen Formeln Ia und Ib, 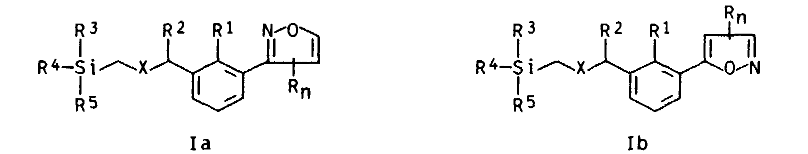 in denen die Substituenten und der Index folgende Bedeutung haben:
R
Halogen; C₁-C₄-Alkyl; C₁-C₄-Halogenalkyl; C₁-C₄-Alkoxy; C₁-C₄-Halogenalkoxy; C₂-C₄-Alkenyl; C₂-C₄-Halogenalkenyl;
Phenylethenyl, welches ein bis fünf Halogenatome tragen kann;
C₂-C₄-Alkinyl; C₃-C₈-Cycloalkyl; Aryl; Hetaryl; CO₂R⁶ oder CONR⁷R⁸,
wobei R⁶
Wasserstoff, C₁-C₆-Alkyl, C₃-C₆-Cycloalkyl und Benzyl bedeutet, und
R⁷ und R⁸
unabhängig voneinander für Wasserstoff, C₁-C₆-Alkyl, C₃-C₆-Cycloalkyl und Benzyl stehen oder
gemeinsam mit dem Stickstoffatom an das sie gebunden sind einen 3- bis 8-gliedrigen, gesättigten oder 1- oder 2-fach ungesättigten heterocyclischen Rest, bestehend aus Kohlenstoffringgliedern bilden, wobei dieser Cyclus außerdem ein oder zwei weitere Heteroatome ausgewählt aus der Gruppe Sauerstoff, Schwefel und Stickstoff enthalten kann;
n
0, 1 oder 2, wobei die Reste R verschieden sein können, wenn n 2 bedeutet;
R¹
Halogen oder C₁-C₄-Alkyl;
R²
Wasserstoff; C₁-C₄-Alkyl; C₂-C₄-Alkenyl; C₂-C₄-Alkinyl oder Cyano;
R³ und R⁴ unabhängig voneinander
C₁-C₄-Alkyl oder C₂-C₈-Alkenyl, wobei diese Reste ein bis neun Halogenatome und/oder eine der folgenden Gruppen tragen können: C₃-C₈-Cycloalkyl, C₁-C₄-Alkoxy, C₁-C₄-Halogenalkoxy, C₁-C₄-Alkylthio, C₁-C₄-Halogenalkylthio, Phenyl, Phenoxy und Phenylthio, wobei die aromatischen Gruppen ihrerseits ein bis fünf Halogenatome und/oder ein bis drei der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
C₃-C₈-Cycloalkyl, welches ein bis drei der folgenden Gruppen tragen kann: Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
Phenyl, Naphthyl, Pyridyl oder Pyrimidyl, wobei die aromatischen Reste ein bis sieben Halogenatome und/oder ein bis vier der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
oder R³ und R⁴ gemeinsam
C₂-C₅-Alkylen, welches ein bis drei C₁-C₃-Alkylgruppen tragen kann;
R⁵
Wasserstoff;
C₅-C₁₈-Alkyl, wobei dieser Rest ein bis neun Halogenatome und/oder eine der folgenden Gruppen tragen kann: C₃-C₈-Cycloalkyl, C₁-C₄-Alkoxy, C₁-C₄-Halogenalkoxy, C₁-C₄-Alkylthio, C₁-C₄-Halogenalkylthio, Phenyl, Phenoxy und Phenylthio, wobei die aromatischen Gruppen ihrerseits ein bis fünf Halogenatome und/oder ein bis drei der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio;
oder eine der bei R³ genannten Gruppen;
X
eine Gruppe CH₂, O, S oder NR⁹, wobei
R⁹
für Wasserstoff, C₁-C₄-Alkyl, C₃-C₆-Cycloalkyl, C₂-C₄-Alkenyl, C₂-C₄-Alkinyl oder Benzyl steht, und wobei der Benzylrest seinerseits ein bis fünf Halogenatome und/oder ein bis drei der folgenden Gruppen tragen kann: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio.

2. 3-Isoxazolylphenylverbindungen der allgemeinen Formel Ia und Ib gemäß Anspruch 1, dadurch gekennzeichnet, daß R¹ Methyl oder Ethyl und R² Wasserstoff bedeuten.

3. 3-Isoxazolylphenylverbindungen der allgemeinen Formel Ia und Ib gemäß Anspruch 1, dadurch gekennzeichnet, daß R¹ Methyl oder Ethyl, R² Wasserstoff und n 0 bedeuten.

4. 3-Isoxazolylphenylverbindungen der allgemeinen Formeln Ia und Ib gemäß Anspruch 1, dadurch gekennzeichnet, daß R⁵ Wasserstoff oder Methyl und R⁴ Methyl oder Cyclopropyl bedeutet.

5. 3-Isoxazolylphenylverbindungen der allgemeinen Formeln Ia und Ib gemäß Anspruch 1, dadurch gekennzeichnet, daß R³ Phenyl, Pyridyl oder Pyrimidinyl bedeutet, wobei die aromatischen Reste ein bis fünf Halogenatome und/oder ein bis drei der folgenden Gruppen tragen können: C₁-C₄-Alkyl, C₁-C₄-Halogemalkyl, C₁-C₄-Alkoxy, C₁-C₄-Halogenalkoxy, C₁-C₄-Alkylthio und C₁-C₄-Halogenalkylthio.

6. 3-Isoxazolylphenylverbindungen der allgemeinen Formeln Ia und Ib gemäß Anspruch 1, dadurch gekennzeichnet, daß R⁵ Wasserstoff oder Methyl, R⁴ Methyl oder Cyclopropyl und R³ Phenyl, Pyridyl oder Pyrimidinyl bedeutet, wobei die aromatischen Reste ein bis fünf Halogenatome und/oder ein bis drei der folgenden Gruppen tragen können: C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio.

7. Verfahren zur Herstellung der 3-Isoxazolylphenylverbindungen der allgemeinen Formeln Ia und Ib gemäß Anspruch 1, dadurch gekennzeichnet, daß man ein Silan der allgemeinen Formel II, 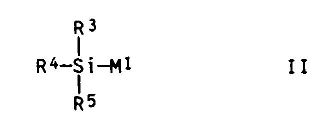 in der M¹ für ein Äquivalent eines Alkalimetall- oder Erdalkalimetallions steht, in an sich bekannter Weise in einem inerten organischen Lösungsmittel mit einer Verbindung der allgemeinen Formel IIIa bzw. IIIb, 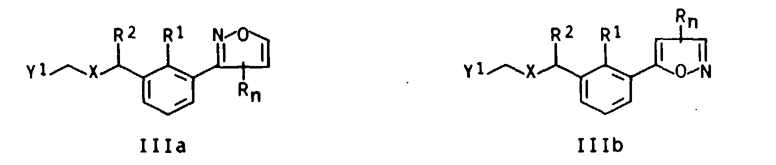 in denen Y¹ für eine nucleofuge Abgangsgruppe steht, umsetzt.

8. Verfahren zur Herstellung der 3-Isoxazolylphenylverbindungen der allgemeinen Formeln Ia und Ib gemäß Anspruch 1 in denen X für eine Gruppe CH₂ steht, dadurch gekennzeichnet, daß man ein Silan der allgemeinen Formel IV, 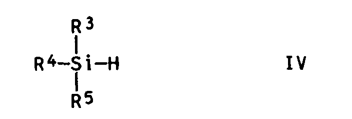 in an sich bekannter Weise in einem inerten organischen Lösungsmittel mit einer Verbindung der allgemeinen Formel Va bzw. Vb, 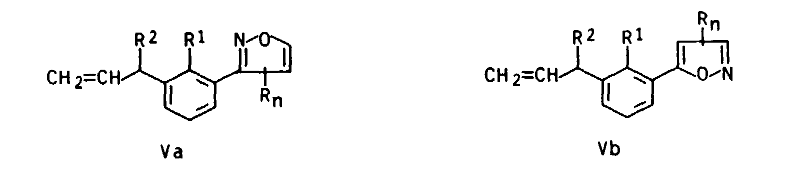 umsetzt.

9. verfahren zur Herstellung der 3-Isoxazolylphenylverbindungen der allgemeinen Formeln Ia und Ib gemäß Anspruch 1 in denen X für eine Gruppe CH₂ steht, dadurch gekennzeichnet, daß man ein Silan der allgemeinen Formel VI, 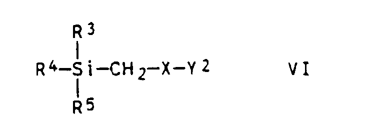 in der Y² für eine nucleofuge Abgangsgruppe steht, in an sich bekannter Weise in einem inerten organischen Lösungsmittel mit einer Verbindung der allgemeinen Formel VIIa bzw. VIIb, 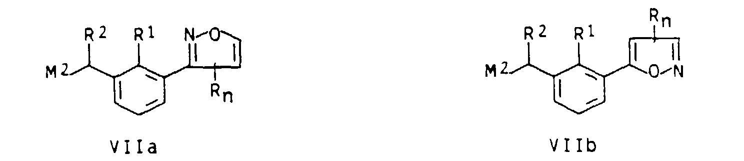 in denen M² für ein Äquivalent eines Alkalimetall- oder Erdalkalimetallions steht, umsetzt.

10. verfahren zur Herstellung der 3-Isoxazolylphenylverbindungen der allgemeinen Formeln Ia und Ib gemäß Anspruch 1 in denen X für eine Gruppe CH₂ steht, dadurch gekennzeichnet, daß man ein Silan der allgemeinen Formel VIII, 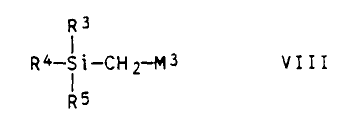 in der M³ für ein Äquivalent eines Alkalimetall- oder Erdalkalimetallions steht, in an sich bekannter Weise in einem inerten organischen Lösungsmittel mit einer Verbindung der allgemeinen Formel IXa bzw. IXb, 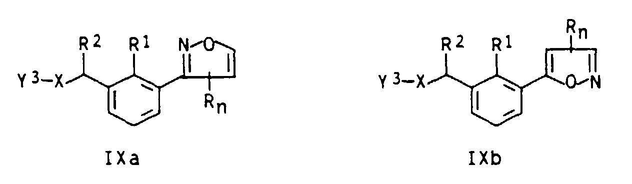 in denen Y³ für eine nucleofuge Abgangsgruppe steht, umsetzt.

11. Verfahren zur Herstellung der 3-Isoxazolylphenylverbindungen der allgemeinen Formeln Ia und Ib gemäß Anspruch 1, dadurch gekennzeichnet, daß man ein Silan der allgemeinen Formel X, 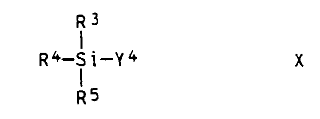 in der Y⁴ für eine nucleofuge Abgangsgruppe steht, in an sich bekannter Weise in einem inerten organischen Lösungsmittel mit einer Verbindung der allgemeinen Formel XIa bzw. XIb, 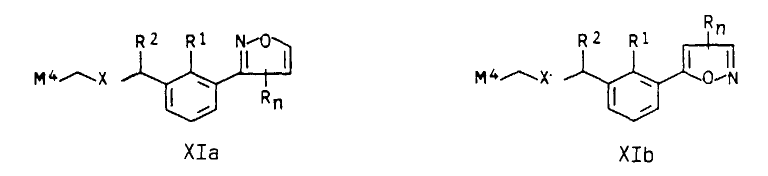 in denen X für eine Gruppe CH₂ und M⁴ für ein Äquivalent eines Alkalimetall- oder Erdalkalimetallions steht, umsetzt.

12. Verfahren zur Herstellung der 3-Isoxazolylphenylverbindungen der allgemeinen Formeln Ia und Ib gemäß Anspruch 1 in denen X nicht für eine Gruppe CH₂ steht, dadurch gekennzeichnet, daß man ein Silan der allgemeinen Formel XII, 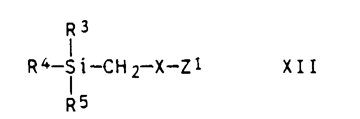 in der Z¹ für Wasserstoff oder ein Äquivalent eines Alkalimetall- oder Erdalkalimetallions steht, in an sich bekannter Weise in einem inerten organischen Lösungsmittel mit einer Verbindung der allgemeinen Formel XIIIa bzw. XIIIb, 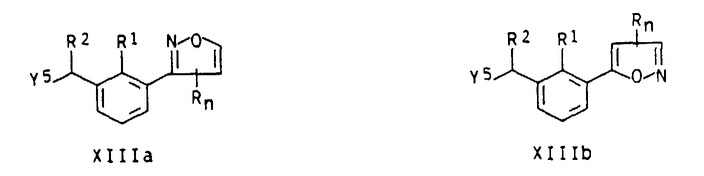 in denen Y⁵ für eine nucleofuge Abgangsgruppe steht, umsetzt.

13. Verfahren zur Herstellung der 3-Isoxazolylphenylverbindungen der allgemeinen Formeln Ia und Ib gemäß Anspruch 1 in denen X nicht für eine Gruppe CH₂ steht, dadurch gekennzeichnet, daß man ein Silan der allgemeinen Formel XIV, 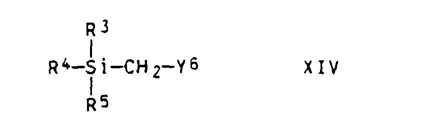 in der Y⁶ für eine nucleofuge Abgangsgruppe steht, in an sich bekannter Weise in einem inerten organischen Lösungsmittel mit einer Verbindung der allgemeinen Formel XVa bzw. XVb, 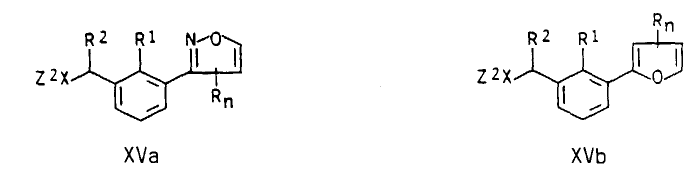 in denen Z² für Wasserstoff oder ein Äquivalent eines Alkalimetall-oder Erdalkalimetallions steht, umsetzt.

14. Mittel zur Bekämpfung von Schädlingen, enthaltend einen 3-Isoxazolylphenylverbindung der allgemeinen Formel Ia oder Ib gemäß Anspruch 1 und inerte Zusatzstoffe.

15. Verfahren zur Bekämpfung von Schädlingen, dadurch gekennzeichnet, daß man die Schädlinge und/oder deren Lebensraum mit einer wirksamen Menge einer 3-Isoxazolylphenylverbindung der Formel Ia oder Ib gemäß Anspruch 1 behandelt.

## Claims

1. A 3-isoxazolylphenyl compound of the formula Ia or Ib 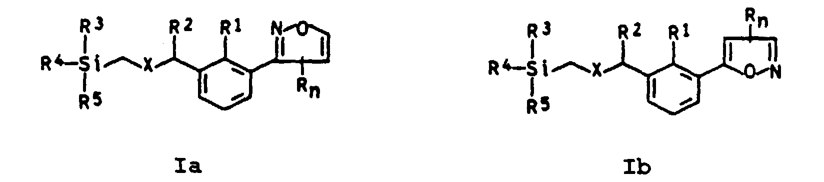 where
R is halogen; C₁-C₄-alkyl; C₁-C₄-haloalkyl; C₁-C₄-alkoxy; C₁-C₄-haloalkoxy; C₂-C₄-alkenyl; C₂-C₄-haloalkenyl; phenylethenyl which may carry from one to five halogen atoms;
C₂-C₄-alkynyl; C₃-C₈-cycloalkyl; aryl; hetaryl; CO₂R⁶ or CONR⁷R⁸,
where R⁶ is hydrogen, C₁-C₆-alkyl, C₃-C₆-cycloalkyl or benzyl and
R⁷ and R⁸ independently of one another are each hydrogen, C₁-C₆-alkyl, C₃-C₆-cycloalkyl or benzyl or, together with the nitrogen atom to which they are bonded, form a 3-membered to 8-membered, saturated or monounsaturated or diunsaturated heterocyclic radical consisting of carbon ring members, where this cyclic structure may furthermore contain one or two further hetero atoms selected from the group consisting of oxygen, sulfur and nitrogen;
n is 0, 1 or 2, and the radicals R may be different when n is 2;
R¹ is halogen or C₁-C₄-alkyl;
R² is hydrogen; C₁-C₄-alkyl; C₂-C₄-alkenyl; C₂-C₄-alkynyl or cyano;
R³ and R⁴ independently of one another are each C₁-C₄-alkyl or C₂-C₈-alkenyl, where these radicals may carry from one to nine halogen atoms or one of the following groups: C₃-C₈-cycloalkyl, C₁-C₄-alkoxy, C₁-C₄-haloalkoxy, C₁-C₄-alkylthio, C₁-C₄-haloalkylthio, phenyl, phenoxy and phenylthio, and the aromatic groups in turn may carry from one to five halogen atoms or from one to three of the following groups: C₁-C₄-alkyl, C₁-C₄-haloalkyl, C₁-C₄-alkoxy, C₁-C₄-haloalkoxy, C₁-C₄-alkylthio and C₁-C₄-haloalkylthio;
C₃-C₈-cycloalkyl which may carry from one to three of the following groups: halogen, C₁-C₄-alkyl, C₁-C₄-haloalkyl, C₁-C₄-alkoxy, C₁-C₄-haloalkoxy, C₁-C₄-alkylthio and C₁-C₄-haloalkylthio;
phenyl, naphthyl, pyridyl or pyrimidyl, where the aromatic radicals may carry from one to seven halogen atoms or from one to four of the following groups: C₁-C₄-alkyl, C₁-C₄-haloalkyl, C₁-C₄-alkoxy, C₁-C₄-haloalkoxy, C₁-C₄-alkylthio and C₁-C₄-haloalkylthio;
or R³ and R⁴ together form C₂-C₅-alkylene which may carry from one to three C₁-C₃-alkyl groups;
R⁵ is hydrogen;
C₅-C₁₈-alkyl which may carry from one to nine halogen atoms or one of the following groups: C₃-C₈-cycloalkyl, C₁-C₄-alkoxy, C₁-C₄-haloalkoxy, C₁-C₄-alkylthio, C₁-C₄-haloalkylthio, phenyl, phenoxy and phenylthio, where the aromatic groups in turn may carry from one to five halogen atoms or from one to three of the following groups: C₁-C₄-alkyl, C₁-C₄-haloalkyl, C₁-C₄-alkoxy, C₁-C₄-haloalkoxy, C₁-C₄-alkylthio and C₁-C₄-haloalkylthio; or one of the groups stated for R³;
X is CH₂, O, S or NR⁹, where
R⁹ is hydrogen, C₁-C₄-alkyl, C₃-C₆-cycloalkyl, C₂-C₄-alkenyl, C₂-C₄-alkynyl or benzyl, and the benzyl radical in turn may carry from one to five halogen atoms or from one to three of the following groups: C₁-C₄-alkyl, C₁-C₄-haloalkyl, C₁-C₄-alkoxy, C₁-C₄-haloalkoxy, C₁-C₄-alkylthio and C₁-C₄-haloalkylthio.

2. A 3-isoxazolylphenyl compound of the formula Ia or Ib as claimed in claim 1, wherein R¹ is methyl or ethyl and R² is hydrogen.

3. A 3-isoxazolylphenyl compound of the formula Ia or Ib as claimed in claim 1, wherein R¹ is methyl or ethyl, R² is hydrogen and n is 0.

4. A 3-isoxazolylphenyl compound of the formula Ia or Ib as claimed in claim 1, wherein R⁵ is hydrogen or methyl and R⁴ is methyl or cyclopropyl.

5. A 3-isoxazolylphenyl compound of the formula Ia or Ib as claimed in claim 1, wherein R³ is phenyl, pyridyl or pyrimidinyl, where the aromatic radicals may carry from one to five halogen atoms or from one to three of the following groups: C₁-C₄-alkyl, C₁-C₄-haloalkyl, C₁-C₄-alkoxy, C₁-C₄-haloalkoxy, C₁-C₄-alkylthio and C₁-C₄-haloalkylthio.

6. A 3-isoxazolylphenyl compound of the formula Ia or Ib as claimed in claim 1, wherein R⁵ is hydrogen or methyl, R⁴ is methyl or cyclopropyl and R³ is phenyl, pyridyl or pyrimidinyl, where the aromatic radicals may carry from one to five halogen atoms or from one to three of the following groups: C₁-C₄-alkyl, C₁-C₄-haloalkyl, C₁-C₄-alkoxy, C₁-C₄-haloalkoxy, C₁-C₄-alkylthio and C₁-C₄-haloalkylthio.

7. A process for the preparation of a 3-isoxazolylphenyl compound of the formula Ia or Ib as claimed in claim 1, wherein a silane of the formula II 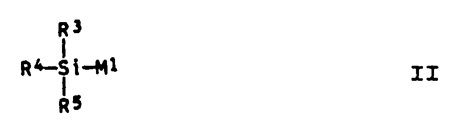 where M¹ is one equivalent of an alkali metal or alkaline earth metal ion, is reacted in a conventional manner, in an inert organic solvent, with a compound of the formula IIIa or IIIb 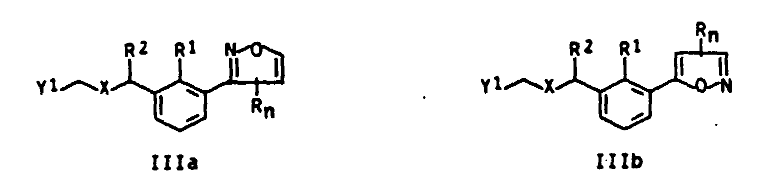 where Y¹ is a nucleofugic leaving group.

8. A process for the preparation of a 3-isoxazolylphenyl compound of the formula Ia or Ib as claimed in claim 1, in which X is CH₂, wherein a silane of the formula IV 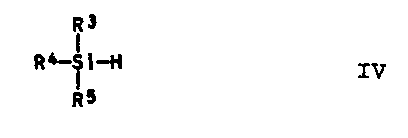 is reacted in a conventional manner, in an inert organic solvent, with a compound of the formula Va or Vb

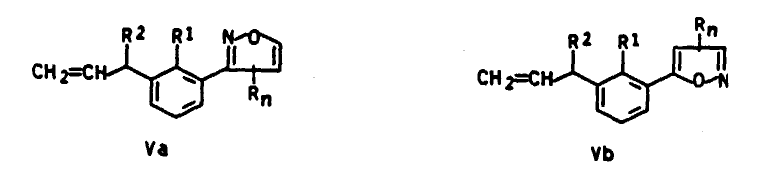

9. A process for the preparation of a 3-isoxazolylphenyl compound of the formula Ia or Ib as claimed in claim 1, in which X is CH₂, wherein a silane of the formula VI 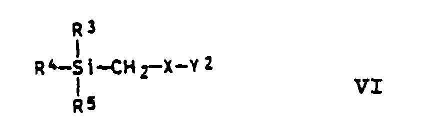 where Y² is a nucleofugic leaving group, is reacted in a conventional manner, in an inert organic solvent, with a compound of the formula VIIa or VIIb 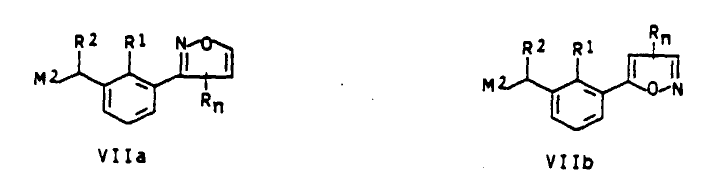 where M² is one equivalent of an alkali metal or alkaline earth metal ion.

10. A process for the preparation of a 3-isoxazolylphenyl compound of the formula Ia or Ib as claimed in claim 1, in which X is CH₂, wherein a silane of the formula VIII 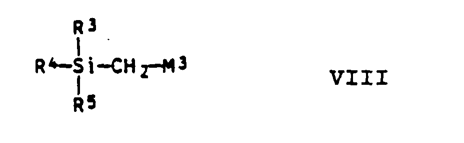 where M³ is one equivalent of an alkali metal or alkaline earth metal ion, is reacted in a conventional manner, in an inert organic solvent, with a compound of the formula IXa or IXb 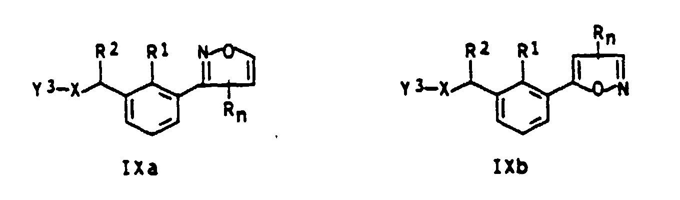 where Y³ is a nucleofugic leaving group.

11. A process for the preparation of a 3-isoxazolylphenyl compound of the formula Ia or Ib as claimed in claim 1, wherein a silane of the formula X 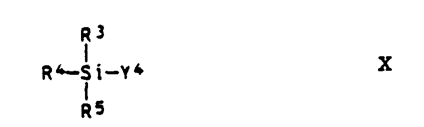 where Y⁴ is a nucleofugic leaving group, is reacted in a conventional manner, in an inert organic solvent, with a compound of the formula XIa or XIb 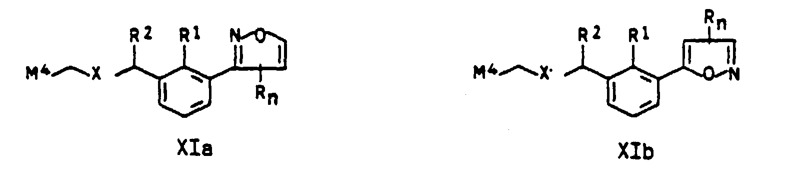 where X is CH₂ and M⁴ is one equivalent of an alkali metal or alkaline earth metal ion.

12. A process for the preparation of a 3-isoxazolylphenyl compound of the formula Ia or Ib as claimed in claim 1, in which X is not CH₂, wherein a silane of the formula XII 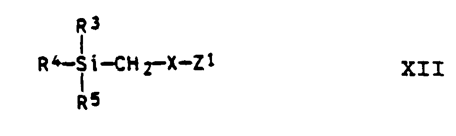 where Z¹ is hydrogen or one equivalent of an alkali metal or alkaline earth metal ion, is reacted in a conventional manner, in an inert organic solvent, with a compound of the formula XIIIa or XIIIb 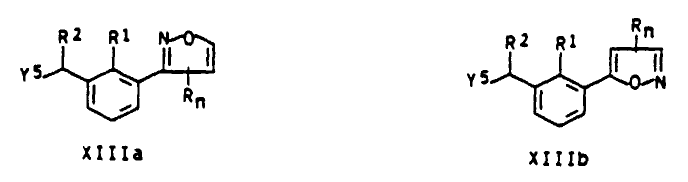 where Y⁵ is a nucleofugic leaving group.

13. A process for the preparation of a 3-isoxazolylphenyl compound of the formula Ia or Ib as claimed in claim 1, in which X is not CH₂, wherein a silane of the formula XIV 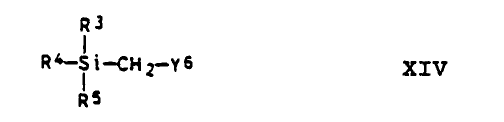 where Y⁶ is a nucleofugic leaving group, is reacted in a conventional manner, in an inert organic solvent, with a compound of the formula XVa or XVb 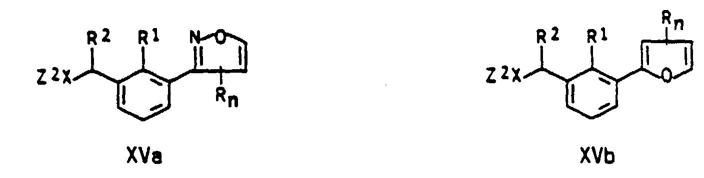 where Z² is hydrogen or one equivalent of an alkali metal or alkaline earth metal ion.

14. A pesticide containing a 3-isoxazolylphenyl compound of the formula Ia or Ib as claimed in claim 1 and inert additives.

15. A method for controlling pests, wherein the pests or their habitat is or are treated with an effective amount of a 3-isoxazolylphenyl compound of the formula Ia or Ib as claimed in claim 1.

## Revendications

1. Dérivés 3-isoxazolylphényliques de formules générales Ia et Ib 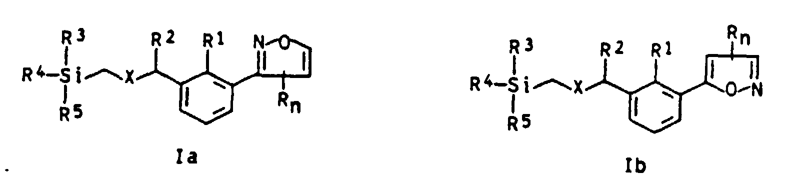 dans lesquelles les symboles et l'indice ont les significations suivantes :
R
un halogène ; un groupe alkyle en C1-C4 ; halogénoalkyle en C1-C4 ; alcoxy en C1-C4 ; halogénoalcoxy en C1-C4 ; alcényle en C2-C4 ; halogénoalcényle en C2-C4 ;
un groupe phényléthényle qui peut porter un à cinq atomes d'halogènes ;
un groupe alcynyle en C2-C4 ; cycloalkyle en C3-C8 ; aryle ; hétéroaryle ; CO₂R⁶ ou CONR⁷R⁸, dans lesquels
R⁶ représente
l'hydrogène, un groupe alkyle en C1-C6, cycloalkyle en C3-C6 ou benzyle et
R⁷ et R⁸
représentent chacun, indépendamment l'un de l'autre, l'hydrogène, un groupe alkyle en C1-C6, cycloalkyle en C3-C6 ou benzyle, ou bien
ils forment ensemble et avec l'atome d'azote auquel ils sont reliés un radical hétérocyclique de trois à huit chaînons, saturé ou mono- ou di-insaturé, consistant en chaînons carbonés, ce cycle pouvant encore contenir un ou deux autres hétéroatomes choisis dans le groupe formé par l'oxygène, le soufre et l'azote ;
n
0, 1 ou 2, les substituants R pouvant être différents lorsque n est égal à 2;
_{R}1
un halogène ou un groupe alkyle en C1-C4 ;
R²
l'hydrogène ; un groupe alkyle en C1-C4 ; alcényle en C2-C4 ; alcynyle en C2-C4 ou cyano ;
R³ et R⁴ représentent chacun, indépendamment l'un de l'autre, un groupe alkyle en C1-C4 ou alcényle en C2-C8, qui peuvent encore porter un à neuf atomes d'halogènes et/ou un des substituants suivants : cycloalkyle en C3-C8, alcoxy en C1-C4, halogénoalcoxy en C1-C4, alkylthio en C1-C4, halogénoalkylthio en C1-C4, phényle, phénoxy ou phénylthio, les groupes aromatiques pouvant eux-mêmes porter un à neuf atomes d'halogènes et/ou un à trois des substituants suivants : alkyle en C1-C4, halogénoalkyle en C1-C4, alcoxy en C1-C4, halogénoalcoxy en C1-C4, alkylthio en C1-C4 et halogénoalkylthio en C1-C4 ;
un groupe cycloalkyle en C3-C8 qui peut porter un à trois des substituants suivants : un halogène, un groupe alkyle en C1-C4, halogénoalkyle en C1-C4, alcoxy en C1-C4, halogénoalcoxy en C1-C4, alkylthio en C1-C4 et halogénoalkylthio en C1-C4 ;
un groupe phényle, naphtyle, pyridile ou pyrimidyle, ces substituants aromatiques pouvant porter un à sept atomes d'halogènes et/ou un à quatre des substituants suivants : alkyle en C1-C4, halogénoalkyle en C1-C4, alcoxy en C1-C4, halogénoalcoxy en C1-C4, alkylthio en C1-C4 et halogénoalkylthio en C1-C4 ;
ou bien R³ et R⁴ forment ensemble
un groupe alkylène en C2-C5 qui peut porter un à trois groupes alkyle en C1-C3 ;
R⁵
l'hydrogène ;
un groupe alkyle en C5-C18 qui peut porter un à neuf atomes d'halogènes et/ou un des substituants suivants : cycloalkyle en C3-C8, alcoxy en C1-C4, halogénoalcoxy en C1-C4, alkylthio en C1-C4, halogénoalkylthio en C1-C4, phényle, phénoxy et phénylthio, les groupes aromatiques pouvant eux-mêmes porter un à cinq atomes d'halogènes et/ou un à trois des substituants suivants : alkyle en C1-C4, halogénoalkyle en C1-C4, alcoxy en C1-C4, halogénoalcoxy en C1-C4, alkylthio en C1-C4 et halogénoalkylthio en C1-C4 ;
ou bien l'une des significations mentionnées en référence à R³ ;
X
un groupe CH₂, O, S ou NR⁹ dans lequel
R⁹ représente
l'hydrogène, un groupe alkyle en C1-C4, cycloalkyle en C3-C6, alcényle en C2-C4, alcynyle en C2-C4 ou benzyle, ce dernier pouvant lui-même porter un à cinq atomes d'halogènes et/ou un à trois des substituants suivants : alkyle en C1-C4, halogénoalkyle en C1-C4, alcoxy en C1-C4, halogénoalcoxy en C1-C4, alkylthio en C1-C4 ou halogénoalkylthio en C1-C4.

2. Dérivés 3-isoxazolylphényliques de formules générales Ia et Ib selon la revendication 1, caractérisés par le fait que R¹ représente un groupe méthyle ou éthyle et R² l'hydrogène.

3. Dérivés 3-isoxazolylphényliques de formules générales Ia et Ib selon la revendication 1, caractérisés par le fait que R¹ représente un groupe méthyle ou éthyle, R² l'hydrogène et n est égal à 0.

4. Dérivés 3-isoxazolylphényliques de formules générales Ia et Ib selon la revendication 1, caractérisés par le fait que R⁵ représente l'hydrogène ou un groupe méthyle et R⁴ un groupe méthyle ou cyclopropyle.

5. Dérivés 3-isoxazolylphényliques de formule générales Ia et Ib selon la revendication 1, caractérisés par le fait que R³ représente un groupe phényle, pyridyle ou pyrimidinyle, les groupes aromatiques pouvant porter un à cinq atomes d'halogènes et/ou un à trois des substituants suivants : alkyle en C1-C4, halogénoalkyle en C1-C4, alcoxy en C1-C4, halogénoalcoxy en C1-C45, alkylthio en C1-C4 et halogénoalkylthio en C1-C4.

6. Dérivés 3-isoxazolylphényliques de formules générales Ia et Ib selon la revendication 1, caractérisés par le fait que R⁵ représente l'hydrogène ou un groupe méthyle, R⁴ un groupe méthyle ou cyclopropyle et R³ un groupe phényle, pyridyle ou pyrimidinyle, les radicaux aromatiques pouvant eux-mêmes porter un à cinq atomes d'halogènes et/ou un à trois des substituants suivants : alkyle en C1-C4, halogénoalkyle en C1-C4, alcoxy en C1-C4, halogénoalcoxy en C1-C4, alkylthio en C1-C4 et halogénoalkylthio en C1-C4.

7. Procédé de préparation des dérivés 3-isoxazolylphényliques de formules générales Ia et Ib selon la revendication 1, caractérisé par le fait que l'on fait réagir un silane de formule générale II 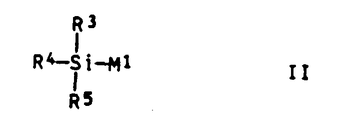 dans laquelle M¹ représente un équivalent d'un ion de métal alcalin ou alcalino-terreux, de manière connue en soi, dans un solvant organique inerte, avec un composé de formule générale IIIa ou IIIb 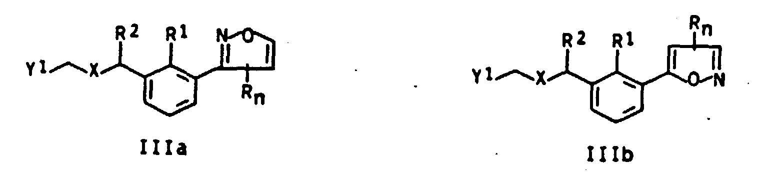 dans lesquelles Y¹ représente un groupe éliminable nucléofuge.

8. Procédé de préparation des dérivés 3-isoxazolylphényliques de formules générales Ia et Ib selon la revendication 1 dans lesquelles X représente un groupe CH₂, caractérisé par le fait que l'on fait réagir un silane de formule générale IV 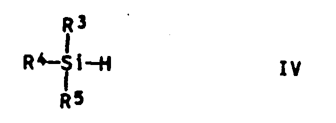 de manière connue en soi, dans un solvant organique inerte, avec un composé de formule générale Va ou Vb,

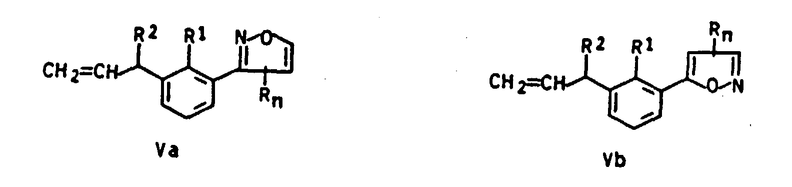

9. Procédé de préparation des dérivés 3-isoxazolylphényliques de formules générales Ia et Ib selon la revendication 1 dans lesquelles X représente un groupe CH₂, caractérisé par le fait que l'on fait réagir un silane de formule générale VI 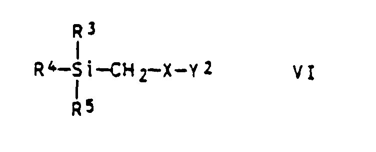 dans laquelle Y² représente un groupe éliminable nucléofuge, de manière connue en soi, dans un solvant organique inerte, avec un composé de formule générale VIIa ou VIIb 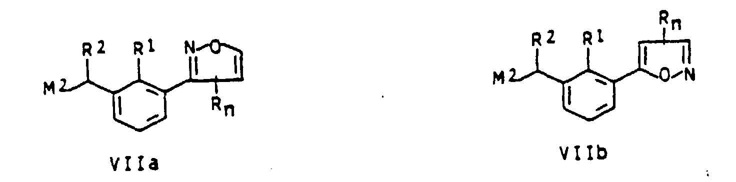 dans lesquelles M² représente un équivalent d'un ion de métal alcalin ou alcalino-terreux.

10. Procédé de préparation des dérivés 3-isoxazolylphényliques de formules générales Ia et Ib selon la revendication 1 dans lesquelles X représente un groupe CH₂, caractérisé par le fait que l'on fait réagir un silane de formule générale VIII 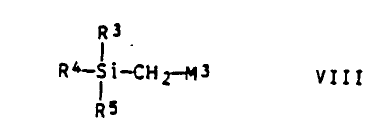 dans laquelle M³ représente un équivalent d'un ion de métal alcalin ou alcalino-terreux, de manière connue en soi, dans un solvant organique inerte, avec un composé de formule générale IXa ou IXb 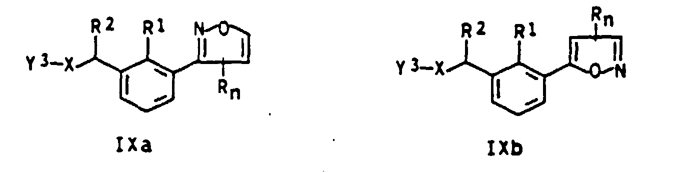 dans lesquelles Y³ représente un groupe éliminable nucléofuge.

11. Procédé de préparation des dérivés 3-isoxazolylphényliques de formules générales Ia et Ib selon la revendication 1, caractérisé par le fait que l'on fait réagir un silane de formule générale X 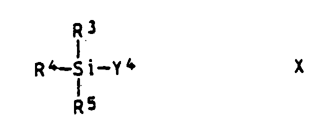 dans laquelle Y⁴ représente un groupe éliminable nucléofuge, de manière connue en soi, dans un solvant organique inerte, avec un composé de formule générale XIa ou XIb 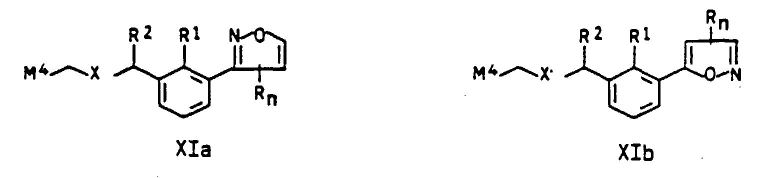 dans lesquelles X représente un groupe CH₂ et M⁴ un équivalent d'un ion de métal alcalin ou alcalino-terreux.

12. Procédé de préparation des dérivés 3-isoxazolylphényliques de formules générales Ia et Ib selon la revendication 1 dans lesquelles X a une signification autre que le groupe CH₂, caractérisé par le fait que l'on fait réagir un silane de formule générale XII 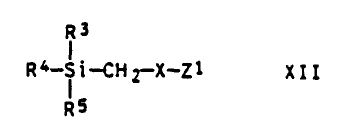 dans laquelle Z¹ représente l'hydrogène ou un équivalent d'un ion de métal alcalin ou alcalino-terreux, de manière connue en soi, dans un solvant organique inerte, avec un composé de formule générale XIIIa ou XIIIb 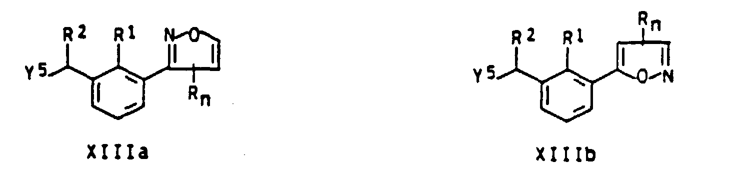 dans lesquelles Y⁵ représente un groupe éliminable nucléofuge.

13. Procédé de préparation des dérivés 3-isoxazolylphényliques de formule générales Ia et Ib selon la revendication 1 dans lesquelles X a une signification autre que CH₂, caractérisé par le fait que l'on fait réagir un silane de formule générale XIV 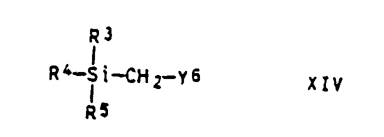 dans laquelle Y⁶ représente un groupe éliminable nucléofuge, de manière connue en soi, dans un solvant organique inerte, avec un composé générale XVa ou XVb 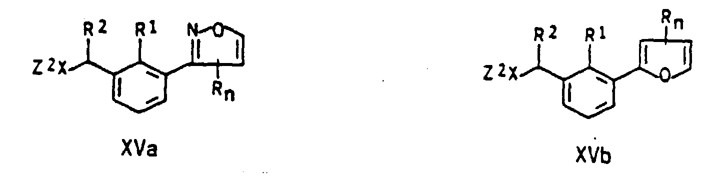 dans lesquelles Z² représente l'hydrogène ou un équivalent d'un ion de métal alcalin ou alcalino-terreux.

14. Produit pour combattre les parasites, contenant un dérivé 3-isoxazolylphénylique de formule générale Ia ou Ib selon la revendication 1 et des additifs inertes.

15. Procédé pour combattre les parasites, caractérisé par le fait que l'on traite les parasites et/ou leur habitat par une quantité efficace d'un dérivé 3-isoxazolylphénylique de formule Ia ou Ib selon la revendication 1.
